(19) Europäisches Patentamt

European Patent Office

Office européen des brevets

(11) **EP 2 015 428 B1**

(12) **EUROPEAN PATENT SPECIFICATION**

(45) Date of publication and mention
of the grant of the patent:
**06.06.2012 Bulletin 2012/23**

(51) Int Cl.:
*H02K 16/00* (2006.01)     *H02K 1/06* (2006.01)
*H02K 21/24* (2006.01)

(21) Application number: **07791915.7**

(22) Date of filing: **03.08.2007**

(86) International application number:
**PCT/JP2007/065241**

(87) International publication number:
**WO 2008/018375 (14.02.2008 Gazette 2008/07)**

(54) **MOTOR**

MOTOR

MOTEUR

(84) Designated Contracting States:
**DE ES FR GB IT**

(30) Priority: **09.08.2006   JP 2006217141**
**13.07.2007   JP 2007184494**

(43) Date of publication of application:
**14.01.2009   Bulletin 2009/03**

(73) Proprietor: **HONDA MOTOR CO., LTD.**
**Tokyo 107-8556 (JP)**

(72) Inventors:
• **ABE, Noriyuki**
**Wako-shi Saitama 3510193 (JP)**
• **AKUTSU, Shigemitsu**
**Wako-shi Saitama 3510193 (JP)**
• **KASAOKA, Kota**
**Wako-shi Saitama 3510193 (JP)**

(74) Representative: **Rupp, Christian**
**Mitscherlich & Partner**
**Patent- und Rechtsanwälte**
**Sonnenstraße 33**
**80331 München (DE)**

(56) References cited:
**WO-A1-2006/068038     JP-A- 08 126 277**
**JP-A- 2006 025 486**

**Description**

The present invention relates to an electric motor that includes two or more rotors or stators.

[Background Art]

Conventionally, as an electric motor of this kind, one disclosed in Patent Literature 1 is known. The electric motor includes an inner rotor, a stator, and an outer rotor. The inner rotor has a cylindrical shape in which a plurality of permanent magnets that slightly extend radially are arranged circumferentially, while the stator has a hollow cylindrical shape in which a plurality of armatures are circumferentially arranged and fixed by a resin mold. The outer roller has a hollow cylindrical shape in which coils are wound around respective cores formed by laminating a plurality of rings, but the coils are inhibited from being supplied with electric power. Further, the inner rotor, the stator, and the outer rotor are arranged sequentially from inside, and are rotatable relative to each other.

In the motor constructed as above, the stator is supplied with electric power to generate a rotating magnetic field, and accordingly, magnetic poles of the permanent magnets of the inner rotor are attracted or repelled by the magnetic poles of the stator, whereby the inner rotor is caused to rotate synchronously with the rotating magnetic field, while the outer rotor is caused to rotate asynchronously by electromagnetic induction.

As described above, in the conventional electric motor, the outer rotor is caused to rotate by electromagnetic induction, and hence it is not a synchronous motor and functions as an induction machine, and cannot provide a high efficiency. Further, since the outer rotor is caused to rotate by electromagnetic induction, heat is generated in the outer rotor by currents induced in the coils of the outer rotor and eddy currents generated in the cores of the same, which requires cooling of the outer rotor. Further, since the outer rotor is arranged such that it covers around the stator, it is impossible to secure a sufficient area for a fixing portion via which the electric motor is installed on an outside member, which makes it impossible to firmly install the electric motor.

Further, due to the requirements of the construction thereof, the armatures cannot help being fixed using a non-magnetic material (feeble magnetic material), such as a resin low in strength. From the above, the conventional electric motor cannot be manufactured with high durability, and therefore, it cannot withstand large torque reactions from the driving wheels, high rotational speed or high output power.

The present invention has been made to provide a solution to the above-described problems, and an object thereof is to provide an electric motor which is enhanced in efficiency thereof.

[Patent Literature 1] Japanese Laid-Open Patent Publication (Kokai) No. H11-341757.

Documents JP-A-08126277 and JP-A-2006025486 disclose an electric motor according to the prior art.

[Disclosure of the Invention]

To attain the object, the invention provides an electric motor 1, 20, 30, 40, 60, 100 as claimed in claim 1, comprising a first member (casing 2, casing 31) provided with a first armature row (second stator 5, stator 24) comprising a plurality of first armatures (armatures 5a, 24a in the embodiment (the same applies hereinafter in this section)) arranged side by side in a first predetermined direction, for causing a first moving magnetic field that moves in the first predetermined direction to be generated by magnetic poles formed thereon in accordance with supply of electric power thereto, a second member (casing 2, first shaft 21, casing 31, first shaft 62) provided with a first magnetic pole row (first stator 4, first rotor 23, magnet rotor 64) comprising a plurality of first magnetic poles (first electromagnets 4a, 4e, first permanent magnets 4g, 23a) arranged side by side in the first predetermined direction, such that each two adjacent ones of the first magnetic poles have different polarities from each other and the first magnetic pole row is opposed to the first armature row, a third member (shaft 3, second shaft 22, movable plate 34, shaft 41a, second shaft 63) provided with a first soft magnetic material element row (first rotor 7, second rotor 25, first moving element 32) comprising a plurality of first soft magnetic material elements (first cores 7a, 25a) arranged side by side in the first predetermined direction, such that the first soft magnetic material element row is disposed between the first armature row and the first magnetic pole row, a fourth member (casing 2, casing 31) provided with a second armature row (second stator 5, stator 24) comprising a plurality of second armatures (armatures 5a, 24a) arranged side by side in a second predetermined direction, for causing a second moving magnetic field that moves in the second predetermined direction to be generated by magnetic poles formed thereon in accordance with supply of electric power thereto, a fifth member (casing 2, first shaft 21, casing 31, first shaft 72) provided with a second magnetic pole row (third stator 6, first rotor 23, magnet rotor 74) comprising a plurality of second magnetic poles (second electromagnets 6a, 6e, second permanent magnets 6g, 23b) arranged side by side in the second predetermined direction, such that each two adjacent ones of the second magnetic poles have different polarities from each other and the second magnetic pole row is opposed to the second armature row, the fifth member being connected to the second member, and a sixth member (shaft 3, second shaft 22, movable plate 34, shaft 42a, second shaft 73) provided with a second soft magnetic material element row (second rotor 8, second rotor 25, second moving element 33) comprising a plurality of second soft magnetic material elements (second cores 8a, 25b) arranged side by side in the second predetermined direction, such that the second soft magnetic material elements are spaced from each other by a predetermined distance and the second soft magnetic material element row is disposed between the second armature row and the second magnetic pole row, the sixth member being connected to the third member, wherein when a magnetic pole of each the first armature and each the first magnetic pole are in a first opposed position opposed to each other, a magnetic pole of each the second armature and each the second magnetic pole are in a second opposed position opposed to each other; when the magnetic pole of each the first armature and each the first magnetic pole in the first opposed position have different polarities from each other, the magnetic pole of each the second armature and each the second magnetic pole in the second opposed position have a same polarity; and when the magnetic pole of each the first armature and each the first magnetic pole in the first opposed position have a same polarity, the magnetic pole of each the second armature and each the second magnetic pole in the second opposed position have different polarities from each other, and wherein when the magnetic pole of each the first armature and each the first magnetic pole are in the first opposed position, if each the first soft magnetic material element is in a position between the magnetic pole of the first armature and the first magnetic pole, each the second soft magnetic material element is in a position between two pairs of the magnetic poles of the second armatures and the second magnetic poles adjacent to each other in the second predetermined direction, and if each the second soft magnetic material element is in a position between the magnetic pole of the second armature and the second magnetic pole, each the first soft magnetic material element is in a position between two pairs of the magnetic poles of the first armatures and the first magnetic poles adjacent to each other in the first predetermined direction.

According to this electric motor, the first soft magnetic material element row of the third member is disposed between the first armature row of the first member and the first magnetic pole row of the second member which are opposed to each other, and the first armatures, the first magnetic poles, and the first soft magnetic material elements forming the first armature row, the first magnetic pole row, and the first soft magnetic material element row, respectively, are all arranged side by side in the first predetermined direction. Further, each adjacent two of the first soft magnetic material elements are spaced by a predetermined distance. Further, the second soft magnetic material element row of the sixth member is disposed between the second armature row of the fourth member and the second magnetic pole row of the fifth member which are opposed to each other, and the second armatures, the second magnetic poles, and the second soft magnetic material elements forming the second armature row, the second magnetic pole row, and the second soft magnetic material element row, respectively, are all arranged side by side in the second predetermined direction. Further, each adjacent two of the second soft magnetic material elements are spaced by a predetermined distance. Further, the second member and the fifth member are connected to each other, and the third member and the sixth member are connected to each other.

As described above, the first soft magnetic material element row is disposed between the first armature row and the first magnetic pole row, and therefore, the first soft magnetic material elements are magnetized by the magnetic poles formed on the first armatures (hereinafter referred to as "the first armature magnetic poles") and the first magnetic poles. Since the first soft magnetic material elements are magnetized and each adjacent two of the first soft magnetic material elements are spaced from each other, as described above, the magnetic lines of force (hereinafter referred to as "the first magnetic force lines") are generated between the first armature magnetic poles, the first soft magnetic material elements, and the first magnetic poles. Similarly, since the second soft magnetic material element row is disposed between the second armature magnetic row and the second magnetic pole row, the second soft magnetic material elements are magnetized by the magnetic poles formed on the second armatures (hereinafter referred to as "the second armature magnetic poles") and the second magnetic poles. Since the second soft magnetic material elements are magnetized and each adjacent two of the second soft magnetic material elements are spaced, as described above, the magnetic lines of force (hereinafter referred to as "the second magnetic force lines") are generated between the second armature magnetic poles, the second soft magnetic material elements, and the second magnetic poles.

First, a description will be given of a case where the first, second, fourth, and fifth members are configured to be immovable, and at the same time the third and sixth members are configured to be movable. When the first and second moving magnetic fields are generated, in a state where each first armature magnetic pole and each first magnetic pole in the first opposed position have different polarities from each other, if each first soft magnetic material element is in a position between the first armature magnetic pole and the first magnetic pole, the length of each first magnetic force line becomes shortest, and the total magnetic flux amount thereof becomes largest. Further, in this state, each second armature magnetic pole and each second magnetic pole in the second opposed position have the same polarity, and each second soft magnetic material element is in a position between two pairs of second armature magnetic poles and second magnetic poles adjacent to each other in the second predetermined direction. In this state, each second magnetic force line has a large degree of bend, and the length thereof becomes the longest and the total magnetic flux amount becomes smallest.

In general, when the magnetic line of force is bent due to presence of a soft magnetic material element between two magnetic poles different in polarity, a magnetic force acts on the soft magnetic material element and the two magnetic poles so as to reduce the length of the magnetic line of force, and the magnetic force has a characteristic that it becomes larger as the degree of bend of the magnetic line of force is larger and the total amount of magnetic flux thereof is larger. Therefore, as the bend of the first magnetic force line is larger, and the total magnetic flux amount thereof is larger, a larger magnetic force acts on the first soft magnetic material element. That is, the magnetic force acting on the first soft magnetic material element (hereinafter referred to as "the first magnetic force") has a characteristic that it has a magnitude dependent on the degree of bend of the first magnetic force line and the total magnetic flux amount thereof. This also applies to a magnetic force acting on a second soft magnetic material element. Hereafter, the magnetic force acting on the second soft magnetic material element is referred to as "the second magnetic force").

Therefore, as described above, when the first moving magnetic field starts to move from a state in which each first soft magnetic material element is in a position between a first armature magnetic pole and a first magnetic pole different in polarity from each other, the first magnetic force line having the large total flux amount starts to be bent, and hence a relatively large first magnetic force acts on the first soft magnetic material element. This causes the third member to be driven by large driving forces in the direction of motion of the first moving magnetic field. Further, simultaneously with the motion of the first moving magnetic field, as the second moving magnetic field moves in the second predetermined direction, each second armature magnetic pole moves from the second opposed position opposed to the second magnetic pole having the same polarity toward a second magnetic pole having a different polarity which is adjacent to the second magnetic pole having a same polarity. In this state, although the degree of bend of the second magnetic force line is large, the total magnetic flux amount thereof is small, a relatively weak second magnetic force acts on the second soft magnetic material element. This causes the sixth member to be driven by small driving forces in the direction of motion of the second moving magnetic field.

Then, when the first moving magnetic field further moves, although the degree of bend of the first magnetic force lines increases, the distance from the first armature magnetic poles to the first magnetic poles having a different polarity increases to reduce the total magnetic flux amounts of the first magnetic force lines, which weakens the first magnetic forces, to reduce the driving forces acting on the third member. Then, when each first armature magnetic pole is brought to the first opposed position in which it is opposed to a first magnetic pole having the same polarity, each first soft magnetic material element is brought to a position between two pairs of first armature magnetic poles and first magnetic pole adjacent to each other in the first predetermined direction, whereby in spite of the first magnetic force lines being large in the degree of bend, the total magnetic flux amounts thereof become the minimum, so that the first magnetic forces become weakest to reduce the driving forces acting on the third member to the minimum.

Further, as the second moving magnetic field moves simultaneously with the motion of the first moving magnetic field, as described above, the second armature magnetic poles move from the second opposed position in which they are opposed to second magnetic poles having the same polarity toward ones of the second magnetic poles having a different polarity which are adjacent to those having the same polarity. In this state, although the degree of bend of the second magnetic force lines becomes small, the total magnetic flux amounts increase, so that the second magnetic forces increase to increase the driving forces acting on the sixth member. Then, when each second armature magnetic pole is brought to the second opposed position in which it is opposed to each second magnetic pole having a different polarity, the total magnetic flux amount of the second magnetic force line becomes largest and each second soft magnetic material element moves in a state slightly delayed relative to the second armature magnetic pole, whereby the second magnetic force lines are bent. Thus, the second magnetic force lines which are largest in the total magnetic flux amount are bent, whereby the second magnetic forces become strongest, to make largest the driving forces acting on the sixth member.

Further, when the first moving magnetic field further move from the above-mentioned state in which the driving forces acting on the third member are substantially weakest and the driving forces acting on the sixth member are substantially strongest, although the degree of bend of the first magnetic force lines becomes small, the total magnetic flux amounts thereof increase, so that the first magnetic forces increase to increase the driving forces acting on the third member. Then, when each first armature magnetic pole is brought to the first opposed position in which it is opposed to a first magnetic pole having a different polarity, the total magnetic flux amount of the first magnetic force line becomes largest and each first soft magnetic material element moves in a state slightly delayed relative to the first armature magnetic pole, whereby the first magnetic force lines are bent. Thus, the first magnetic force lines which are largest in the total magnetic flux amount are bent, whereby the first magnetic forces become strongest, to make largest the driving forces acting on the third member.

Further, as the second moving magnetic field moves simultaneously with the above-described motion of the first moving magnetic field, the second armature magnetic poles move from the second opposed position in which they are opposed to second magnetic poles having a different polarity toward ones of the second magnetic poles which have the same polarity and are adjacent to those having the different polarity. In this state, although the degree of bend of the second magnetic force lines becomes larger, the total magnetic flux amounts decrease, so that the second magnetic forces become weaker to reduce the driving forces acting on the sixth member. Then, when each second armature magnetic pole is brought to the second opposed position in which it is opposed to a second magnetic pole having the same polarity, each second soft magnetic material element is brought to a position between two pairs of second armature magnetic poles and second magnetic poles adjacent to each other in the second predetermined direction, whereby in spite of each second magnetic force line being large in the degree of bend, the total magnetic flux amount thereof becomes the minimum, so that the second magnetic forces become weakest to reduce the driving forces acting on the sixth member to the minimum.

As described above, according to the motions of the first and second moving magnetic fields, the third and sixth members are driven while repeating a state in which the driving forces acting on the third member and the driving forces acting on the sixth member alternately become larger and smaller. Although such driving forces act on the third and sixth members, since the third and sixth members are connected to each other, the power output from the two members becomes equal to the sum of the driving forces acting on them and substantially constant.

Next, a description will be given of a case where the first, third, fourth, and sixth members are configured to be immovable, and at the same time the second and fifth members are configured to be movable. When the first and second moving magnetic fields are generated, if each first armature magnetic pole and each first magnetic pole in the first opposed position have the same polarity, and if each first soft magnetic material element is in a position between two pairs of first armature magnetic poles and first magnetic poles which are adjacent to each other in the first predetermined direction, each second armature magnetic pole and each second magnetic pole having different polarities are in the second opposed position, and each second soft magnetic material element is in a position between a second armature magnetic pole and a second magnetic pole.

From this state, as the first moving magnetic field starts to move, each first armature magnetic pole leaves the first opposed position opposed to the first magnetic pole having the same polarity, and becomes closer to the first soft magnetic material element positioned between the two pairs of first armature magnetic poles and first magnetic poles which are adjacent to each other. As a result, as the distance from the first armature magnetic pole to the first magnetic pole having a different polarity becomes shorter, the first magnetic force line between the first soft magnetic material element and the first magnetic pole increases in its total flux amount, and the degree of bend thereof becomes relatively large. As a result, a relatively large magnetic force acts on the first magnetic pole to cause the same to draw near toward the first soft magnetic material element. This causes the second member to be driven in a direction opposite to the direction of motion of the first moving magnetic field, and the fifth member connected to the second member to be driven in accordance therewith.

Then, as the first armature magnetic pole becomes still closer to the first soft magnetic material element, the first magnetic pole is also driven to become further closer to the first soft magnetic material element. As a result, the first armature magnetic pole is brought to the first opposed position in which it is opposed to the first magnetic pole having a different polarity with the first soft magnetic material element positioned therebetween. In this state, as described above, the second armature magnetic poles are in the second opposed position opposed to the second magnetic poles having the same polarity, and each second soft magnetic material element is between two pairs of second armature magnetic poles and second magnetic poles which are adjacent to each other in the second predetermined direction.

From this state, when the second moving magnetic field moves in accordance with the motion of the first moving magnetic field, each second armature magnetic pole leaves the second opposed position opposed to a second magnetic pole having the same polarity, and becomes closer to the second soft magnetic material element positioned between the two pairs of second armature magnetic poles and second magnetic poles. As a result, as the distance from each second armature magnetic pole to each second magnetic pole having a different polarity becomes shorter, the second magnetic force line between the second soft magnetic material element and the second magnetic pole increases in its total flux amount, and the degree of bend thereof becomes relatively large. As a result, a relatively large magnetic force acts on the second magnetic pole to cause the same to draw near toward the second soft magnetic material element. This causes the fifth member to be driven in a direction opposite to the direction of motion of the second moving magnetic field, and the second element is driven in accordance therewith.

Then, as the second armature magnetic pole becomes still closer to the second soft magnetic material element, the second magnetic pole is also driven to become further closer to the second soft magnetic material element. As a result, the second armature magnetic pole is brought to the second opposed position in which it is opposed to the second magnetic pole having a different polarity with the second soft magnetic material element positioned therebetween. In this state, as described above, the first armature magnetic poles are in the first opposed position opposed to the first magnetic poles having the same polarity, and each first soft magnetic material element is between two pairs of first armature magnetic poles and first magnetic poles which are adjacent to each other in the first predetermined direction.

As described above, according to the motions of the first and second moving magnetic fields, the driving forces act on the second and fifth members alternately, whereby the second and fifth members are driven. Although the driving forces thus act on the second and fifth members alternately, since the second and fifth members are connected to each other, the power output from the two members becomes equal to the sum of the driving forces acting on them and substantially constant.

As described above, in both of the case of driving the second and fifth members and the case of driving the third and sixth members, depending on the respective positions of the second and fifth members or the respective positions of the third and sixth members, the magnetized states of the first and second soft magnetic material elements vary. Therefore, it is possible to perform the driving without causing slippage, and differently from the conventional electric motor described hereinbefore, the electric motor functions as a synchronous motor, which makes it possible to increase the efficiency thereof.

Further, in the case where it is configured such that only the first and fourth members are immovable, and the first and second moving magnetic fields are caused to be generated, with power being input to one of respective pairs of the third and sixth members and the second and fifth members, it is also possible to drive the other of the pairs by the magnetic forces caused by the aforementioned first and second magnetic force lines, to thereby output power. Further, in the case where the first to sixth members are all configured to be movable, and the first and second moving magnetic fields are caused to be generated in a state in which power is input to the first and fourth members, and at the same time power is input to one of the pairs of the third and six members and the second and fifth members, it is also possible to drive the other of the pairs by the magnetic forces caused by the first and second magnetic force lines, to thereby output power. Further, in all of these cases, depending on the relative positions between the second and fifth members and the third and sixth members, the magnetized states of the first and second soft magnetic material elements vary. Therefore, it is possible to perform the driving without causing slippage, and since the electric motor functions as a synchronous motor, it is possible to increase the efficiency thereof.

It should be noted that throughout the present specification, a moving magnetic field should be considered to include a rotating magnetic field. Further, "when the first armature magnetic pole(s) (second armature magnetic pole(s)) and the first magnetic pole(s) (second magnetic pole(s)) are in a position opposed to each other" is not only intended to mean that the two are in completely the same position in the first predetermined direction (second predetermined direction), but to also mean that they are in respective locations slightly different from each other.

This invention as claimed in claim 2 is the electric motor 20, 30, 60, 100 as claimed in claim 1, wherein the first and fourth members (casing 2) are configured to be immovable, and the second and third members (first shaft 21, second shaft 22, first shaft 62, second shaft 63) and the fifth and sixth members (first shaft 21, second shaft 22, first shaft 72, second shaft 73) are configured to be movable.

With this arrangement, since the first and second armatures are configured to be immovable, differently from the case where these armatures are made rotatable, it is possible to dispense with slip rings for supplying electric power to the first and second armatures. Therefore, accordingly, it is possible to downsize the electric motor, and further enhance the efficiency thereof, since no heat is generated due to friction resistance of the slip rings and associated brushes.

This invention as claimed in claim 3 is the electric motor 1, 20, 30, 40, 60, 100 as claimed in claim 1, wherein the first, second, fourth, and fifth members (casing 2, casing 31) are configured to be immovable, and the third and sixth members (shaft 3, movable plate 34, shaft 41a, shaft 42a) are configured to be movable.

With this arrangement, the third and sixth members, i.e. the first and second soft magnetic material elements are driven, it is possible to further improve durability of the electric motor compared with the case where permanent magnets relatively lower in strength are driven.

This invention as claimed in claim 4 is the electric motor 1, 20, 30, 40, 60, 100 as claimed in any one of claims 1 to 3, wherein the first and second magnetic poles are formed by magnetic poles of permanent magnets (first permanent magnets 4g, 23a, second permanent magnets 6g, 23b).

With this arrangement, since the magnetic poles of the permanent magnets are used as the first and second magnetic poles, differently from the case where magnetic poles of electromagnets are used for these magnetic poles, it is possible to dispense with electric circuits and coils required for supplying electric power to the electromagnets. This makes it possible to reduce the size of the electric motor, and simplify the construction thereof. Further, when the second and fifth members are configured to be rotatable, for example, differently from the case where the magnetic poles of electromagnets are used as the first and second magnetic poles, the slip rings for supplying electric power to the electromagnets can be dispensed with, and it is possible to further reduce the size of the electric motor accordingly, and further increase the efficiency thereof.

This invention as claimed in claim 5 is the electric motor 1, 20, 30, 40, 60, 100 as claimed in any one of claims 1 to 3, wherein the first and second magnetic poles are formed by magnetic poles of electromagnets (first electromagnets 4a, second electromagnets 6a).

In general, when permanent magnets are used for generation of magnetic fields, to obtain a large output, permanent magnets having a very large magnetic force are required. Further, to use such permanent magnets, assembly of an electric motor is required to be performed while holding the positional relationship between components against the attractive forces of the permanent magnets so as to prevent the permanent magnets from being brought into contact with other components, which makes assembly work very troublesome. According to the present invention, magnetic poles of the electromagnets are used as the first and second magnetic poles. Therefore, the assembly work can be performed in a state in which the magnetic forces of the electromagnets are reduced to substantially zero by stopping energization of the electromagnets. This makes it possible to carry out the operations of assembling the electric motor without performing the aforementioned operations for preventing contact between components. Further, in driving the third and sixth members by inputting power thereto without supplying electric power to the first and second armatures, differently from the case where magnetic poles of permanent magnets are used as the first and second magnetic poles, it is possible to prevent occurrence of loss due to the magnetic forces of the first and second magnetic poles, by stopping energization of the electromagnets.

Further, when the first and second soft magnetic material elements are moved relative to the first and second armatures without supplying electric power to the first and second armatures but by inputting large power to the third and sixth members, large induced electromotive forces are generated in the first and second armatures, and hence there is a fear that first and second armatures or electric circuits connected thereto may be damaged. Further, the induced electromotive forces generated in the first and second armatures are larger as the magnetic forces of the first and second soft magnetic material elements are stronger, and the strengths of the magnetic forces of the first and second soft magnetic material elements are larger as the magnetic forces of the first and second magnetic poles are larger since the first and second soft magnetic material elements are magnetized by the influence of the first and second magnetic poles, respectively. Therefore, when a large power is input to the third and sixth members, as described above, by stopping the energization of the electromagnets to thereby control the magnetic forces of the first and second magnetic poles to substantially 0, it is possible to prevent a large induced electromotive force from being generated in the first and second armatures, whereby it is possible to prevent the first and second armatures and the electric circuits connected to these from being damaged.

This invention as claimed in claim 6 is the electric motor 1, 20, 30, 40, 60, 100 as claimed in any one of claims 1 to 3, wherein the first and second magnetic poles are formed by magnetic poles of electromagnets (first electromagnets 4e, second electromagnets 6e), and the electromagnets include iron cores 4b, 6b, and permanent magnets 4f, 6f capable of magnetizing the iron cores 4b, 6b.

With this arrangement, since the magnetic poles of the electromagnets including iron cores and permanent magnets capable of magnetizing the iron cores are used as the first and second magnetic poles, even when there occur disconnections in the coils of the electromagnets and failure of electric circuits for supplying power to the electromagnets, it is possible to secure the power of the electric motor by the magnetic forces of the permanent magnets. Further, even with permanent magnets relatively small in magnetic force, it is possible to properly perform field generation by making up for the small magnetic forces, by the magnetic forces of the coils of the electromagnets. Therefore, by using such permanent magnets, it is possible to carry out the assembly work easily without performing the aforementioned operations for preventing contact between component parts.

This invention as claimed in claim 7 is the electric motor 1, 20, 30, 40, 60, 100 as claimed in claim 5 or 6, further comprising magnetic force-adjusting means (ECU 17) for adjusting magnetic forces of the electromagnets.

When the first soft magnetic material elements and the second soft magnetic material elements are moved relative to the first armature and the second armatures, respectively, induced electromotive forces are generated in the first and second armatures, as described above. The induced electromotive forces of the first armatures at this time are larger as the magnetic forces of the first magnetic poles are stronger and as the moving speed of the first soft magnetic material elements is higher, and the induced electromotive forces of the second armatures are larger as the magnetic forces of the second magnetic poles are stronger and as the moving speed of the second soft magnetic material elements is higher.

In general, an electric motor large in power is very high in the magnetic forces of fields, and hence even when it is not necessary to produce large power because of low load, a large induced electromotive force is generated, which makes the efficiency of the motor very low. According to the present invention, the magnetic forces of the first and second magnetic poles are adjusted. Therefore, when a large output is required due to high load, for example, it is possible to increase the magnetic forces of the first and second magnetic poles, to thereby increase the magnetic forces caused by the aforementioned first and second magnetic force lines, whereby it is possible to obtain a sufficient power. Further, when a large power is not required due to low load, by reducing the magnetic forces of the first and second magnetic poles, it is possible to reduce the induced electromotive forces of the first and second armatures, which makes it possible to enhance the efficiency thereof. Especially, when the third and sixth members are driven at high speed, very large induced electromotive forces are generated in the first and second armature, and hence, in general, to reduce the induced electromotive forces for enabling high-speed driving, electric current is supplied to the first and second armatures for weakening the fields (hereinafter referred to as "the field weakening current"). According to the present invention, as described above, it is possible to reduce the induced electromotive forces of the first and second armatures, which makes is possible to reduce the field weakening current, and hence it is possible to increase the efficiency of the electric motor during high-speed driving.

This invention as claimed in claim 8 is the electric motor 1, 20, 30, 40, 60, 100 as claimed in any one of claims 1 to 7, wherein three-phase field windings (coils 5c, 24c) are used as windings for the first and second armature rows.

With this arrangement, since the general three-phase filed windings are used as windings for the first and second armature rows, it is possible to construct the electric motor easily and inexpensively, without preparing special filed windings.

This invention as claimed in claim 9 is the electric motor 1, 20, 30, 100 as claimed in any one of claims 1 to 8, wherein the first and second armature rows are formed by a single common armature row (second stator 5, stator 24), wherein the first and fourth members (casing 2) are formed integrally with each other, wherein the second and fifth members (casing 2, first shaft 21) are formed integrally with each other, and wherein the third and sixth members (shaft 3, second shaft 22, movable plate 34) are formed integrally with each other.

With this arrangement, the first and second armature rows are formed by a single common armature row, and the first member is formed integrally with the fourth member, the second member with the fifth member, and the third member with the sixth member. Therefore, compared with the case where the first and second armature rows are formed separately, and the six members of the first to sixth members are used, the number of component parts can be reduced, whereby it is possible to reduce the manufacturing costs and achieve downsizing.

This invention as claimed in claim 10 is the electric motor 1, 20, 40, 60, 100 as claimed in any one of claims 1 to 9, wherein numbers of magnetic poles of the first armature, the first magnetic poles, and the first soft magnetic material elements are set to be equal to each other, and wherein numbers of magnetic poles of the second armature, the second magnetic poles, and the second soft magnetic material elements are set to be equal to each other.

With this arrangement, since the respective numbers of the first armature magnetic poles, the first magnetic poles, and the first soft magnetic material elements are set to be equal to each other, it is possible to properly generate the aforementioned first magnetic force lines in all sets of the first armature magnetic poles, the first soft magnetic material elements, and the fist magnetic poles. Similarly, since the respective numbers of the second armature magnetic poles, the second magnetic poles, and the second soft magnetic material elements are set to be equal to each other, it is possible to properly generate the aforementioned second magnetic force lines in all sets of the second armature magnetic poles, the second soft magnetic material elements and the second magnetic poles. From the above, it is possible to obtain a sufficient output power of the electric motor.

The invention as claimed in claim 11 is the electric motor 1, 20, 40, 60, 100 as claimed in any one of claims 1 to 10, wherein the electric motor is a rotating machine.

With this arrangement, it is possible to obtain the advantageous effects as described concerning any one of claims 1 to 10, for a rotating machine.

This invention as claimed in claim 12 is the electric motor 30, 100 as claimed in any one of claims 1 to 9, wherein the electric motor is a linear motor.

With this arrangement, it is possible to obtain the advantageous effects as described concerning any one of claims 1 to 9, for a linear motor.

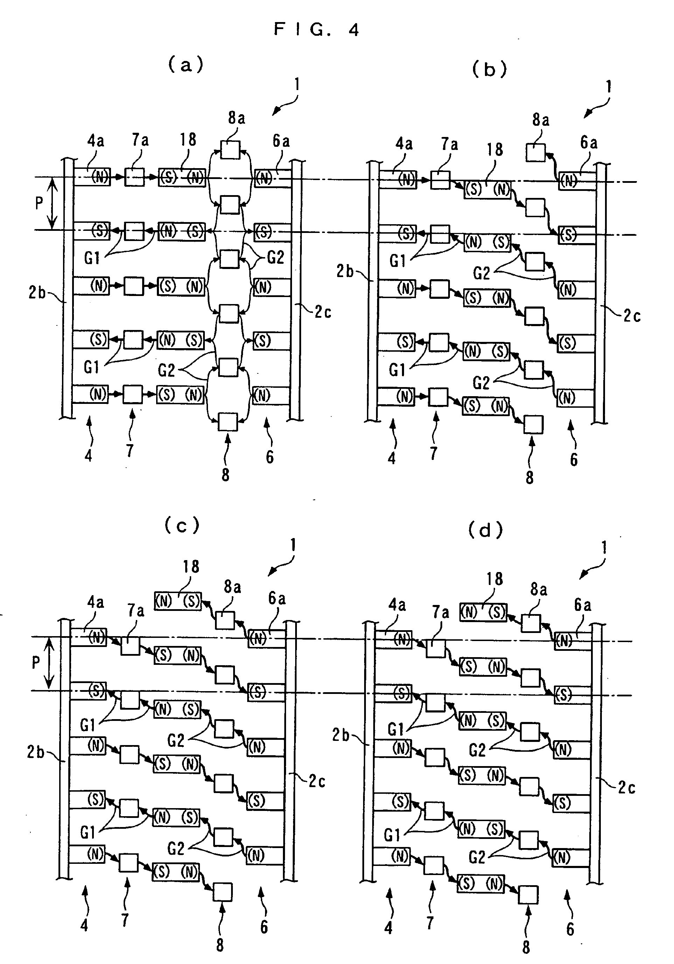

The invention as claimed in claim 13 is the electric motor 1, 20, 30, 40, 60, as claimed in any one of claims 1 to 12, further comprising a first relative positional relationship-detecting device (rotational position sensor 50, first rotational position sensor 50a, second rotational position sensor 50b, position sensor 50c, first rotational position sensor 50d, first rotational position sensor 91, second rotational position sensor 92, ECU 17) for detecting a relative positional relationship between the first member, the second member, and the third member, a second relative positional relationship-detecting device (rotational position sensor 50, first rotational position sensor 50a, second rotational position sensor 50b, position sensor 50c, second rotational position sensor 50e, first rotational position sensor 91, second rotational position sensor 92, ECU 17) for detecting a relative positional relationship between the fourth member, the fifth member, and the sixth member, and a control device (ECU 17) for controlling the first and second moving magnetic fields based on the detected relative positional relationship of the first to third members, and the detected relative positional relationship of the fourth to sixth members (FIGS. 4 to 6, FIGS. 15 and 16).

With this arrangement, the first relative positional relationship-detecting device detects the relative positional relationship between the three of the first to third members, and the second relative positional relationship-detecting device detects the relative positional relationship between the three of the fourth to sixth members. Further, based on the detected relative positional relationship of the three of the first to third members and the relative positional relationship of the three of the fourth to sixth members, the first and second moving magnetic fields are controlled by the control device. This makes it possible to cause the magnetic forces caused by the aforementioned first and second magnetic force lines to be properly applied to the first and second magnetic poles and the first and second soft magnetic material elements. Therefore, it is possible to ensure an appropriate operation of the electric motor.

The invention as claimed in claim 14 is the electric motor 1, 20, 30, 40, 60, 100 as claimed in any one of claims 1 to 12, further comprising a control device (ECU 17) for controlling the first and second moving magnetic fields such that speeds of the first moving magnetic field, the second member, and the third member (magnetic field rotational speed V0, magnetic field electrical angular velocity $\omega$ MF, first shaft rotational speed V1, second shaft rotational speed V2, first rotor electrical angular velocity $\omega$ e1, second rotor electrical angular velocity $\omega$ e2) mutually satisfy a collinear relationship, and at the same time speeds of the second moving magnetic field, the fifth member, and the sixth member (magnetic field rotational speed V0, magnetic field electrical angular velocity w MF, first shaft rotational speed V1, second shaft rotational speed V2, first rotor electrical angular velocity $\omega$ e1, second rotor electrical angular velocity $\omega$ e2) mutually satisfy a collinear relationship.

With this arrangement, the control device controls the first and second moving magnetic fields such that the speeds of the first moving magnetic field, the second member, and the third member mutually satisfy a collinear relationship, and at the same time the speeds of the second moving magnetic field, the fifth member, and the sixth member mutually satisfy a collinear relationship. As described hereinabove, the members are driven by the magnetic forces caused by the first magnetic force lines between the first armature magnetic poles, the first soft magnetic material elements, and the first magnetic poles, and the magnetic forces caused by the second magnetic force lines between the second armature magnetic poles, the second soft magnetic material elements, and the second magnetic poles. Therefore, during operation of the electric motor, there holds a collinear relationship between the speeds of the first moving magnetic field, the second member, and the third member, and there holds a collinear relationship between the speeds of the second moving magnetic field, the fifth member, and the sixth member. Therefore, by controlling the first and second moving magnetic fields such that the collinear relationships are satisfied as described above, it is possible to ensure an appropriate operation of the electric motor.

The invention as claimed in claim 15 is the electric motor 1, 20, 30, 40, 60, 100 as claimed in any one of claims 1 to 12, wherein the first and fourth members are connected to each other, the electric motor further comprising a relative positional relationship-detecting device (first rotational position sensor 105, second rotational position sensor 106, ECU 17) for detecting one of a relative positional relationship between the first member, the second member, and the third member, and a relative positional relationship between the fourth member, the fifth member, and the sixth member, and a control device (ECU 17) for controlling the first and second moving magnetic fields based on the detected one of the relative positional relationships (first rotor electrical angle θe1, second rotor electrical angle θe2).

With this arrangement, in addition to the fact that the second member and the fifth member are connected to each other, and the third member and the sixth member are connected to each other, the first member and the fourth member are connected to each other. Further, the relative positional relationship-detecting device detects the relative positional relationship (hereinafter referred to as "the first relative positional relationship") between the three of the first to third members, or the relative positional relationship (hereinafter referred to as "the second relative positional relationship") between the three of the fourth to sixth members. Further, based on the detected first or second relative positional relationship, the control device controls the first and second moving magnetic fields. In the present invention, since the members are connected as described above, it is possible to grasp, based on a detected one of the first relative positional relationship and the second relative positional relationship, the other of the relationships. Therefore, similarly to the case of claim 13, it is possible to ensure an appropriate operation of the electric motor. Further, since only one positional relationship-detecting device is used, compared with the case of claim 13 in which the first and second relative positional relationship-detecting device are used, it is possible to reduce the number of components, to thereby reduce the manufacturing costs and reduce the size of the electric motor.

The invention as claimed in claim 16 is the electric motor 1, 20, 30, 40, 60, 100 as claimed in claim 15, wherein the relative positional relationship-detecting device detects, as the one of the relative positional relationships, electrical angular positions of the second and third members with respect to the first member, or electrical angular positions of the fifth and sixth members with respect to the fourth member, and wherein the control device controls the first and second moving magnetic fields based on the difference between a value of a two-fold of the detected electrical angular position (second rotor electrical angle θe2) of the third or sixth member, and the detected electrical angular position (first rotor electrical angle θe1) of the second or fifth member.

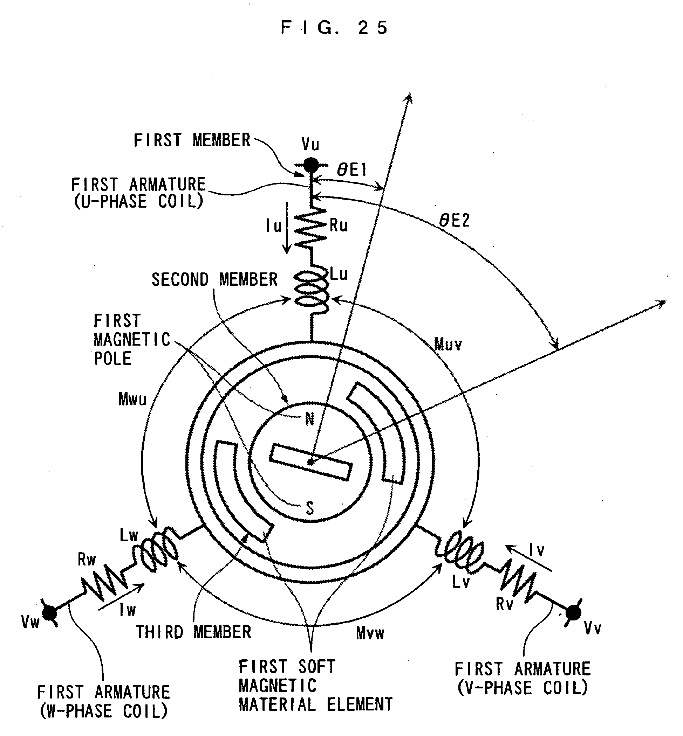

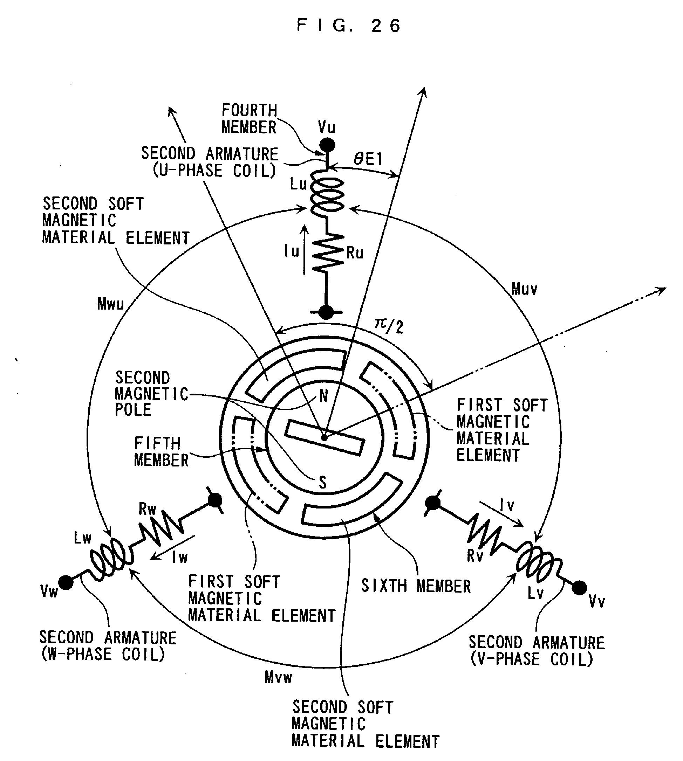

For example, assuming that the electric motor according to the present invention is constructed under the following conditions (a) to (c): an equivalent circuit corresponding to the first to third members is illustrated e.g. as in FIG. 25, and an equivalent circuit corresponding to the fourth to sixth members is illustrated e.g. as in FIG. 26.

(a) The electric motor is a rotating machine, and the first and second armatures are three-phase coils of a U phase to a W phase.
(b) The electrical angular position of the second member with respect to the first member and the electrical angular position of the fifth member with respect to the fourth member are displaced from each other by an electrical angle of $\pi$.
(c) The electrical angular positions of the first and second soft magnetic material elements are displaced from each other by an electrical angle of $\pi/2$.

In this case, when the magnetic forces of the first and second magnetic poles are equal to each other, the voltage equation of the electric motor is represented by the following equation (1). Details thereof will be described hereinafter.

【Math. 1】

$$\begin{bmatrix} Vu \\ Vv \\ Vw \end{bmatrix} = \begin{bmatrix} Ru+s\cdot Lu & s\cdot Muv & s\cdot Mwu \\ s\cdot Muv & Rv+s\cdot Lv & s\cdot Mvw \\ s\cdot Mwu & s\cdot Mvw & Rw+s\cdot Lw \end{bmatrix} \begin{bmatrix} Iu \\ Iv \\ Iw \end{bmatrix} - \begin{bmatrix} (2\omega E2-\omega E1)\ \Psi FA\cdot\sin(2\theta E2-\theta E1) \\ (2\omega E2-\omega E1)\ \Psi FA\cdot\sin(2\theta E2-\theta E1-\frac{2}{3}\pi) \\ (2\omega E2-\omega E1)\ \Psi FA\cdot\sin(2\theta E2-\theta E1+\frac{2}{3}\pi) \end{bmatrix}$$

$$\cdots\cdots (1)$$

Here, Vu, Vv and Vw represent voltages of U-phase to W-phase coils, respectively, and Ru, Rv, and Rw are respective resistances of the U-phase to W-phase coils. Lu, Lv, and Lw represent respective self-inductances of the U-phase to W-phase coils. Further, Muv represents a mutual inductance between the U-phase coil and the V-phase coil, Mvw a mutual inductance between the V-phase coil and the W-phase coil, Mwu a mutual inductance between the W-phase coil and the U-phase coil, and s a differential operator, i.e. d/dt. Further, Iu, Iv, and Iw represent electric currents flowing through the U-phase to W-phase coils, respectively. $\Psi FA$ represents a maximum value of the magnetic flux of the first magnetic pole passing through the coil of each phase via the first soft magnetic material element or a maximum value of the magnetic flux of the second magnetic pole passing through the coil of each phase via the second soft magnetic material element. Further, $\theta E1$ represents the electrical angular position of the second member with respect to the first member, or the electrical angular position of the fifth member with respect to the fourth member, while $\theta E2$ represents the electrical angular position of the third member with respect to the first member, or the electrical angular position of the sixth member with respect to the fourth member (for convenience's sake, in FIGS. 25 and 26, $\theta E2$ is illustrated as the electrical angular position of the third member). Further, $\omega E1$ represents a value obtained by differentiating $\theta E1$ with respect to time, i.e. an electrical angular velocity of the second member or the fifth member, wherein $\omega E2$ represents a value obtained by differentiating $\theta E2$ with respect to time, i.e. an electrical angular velocity of the third member or the sixth member.

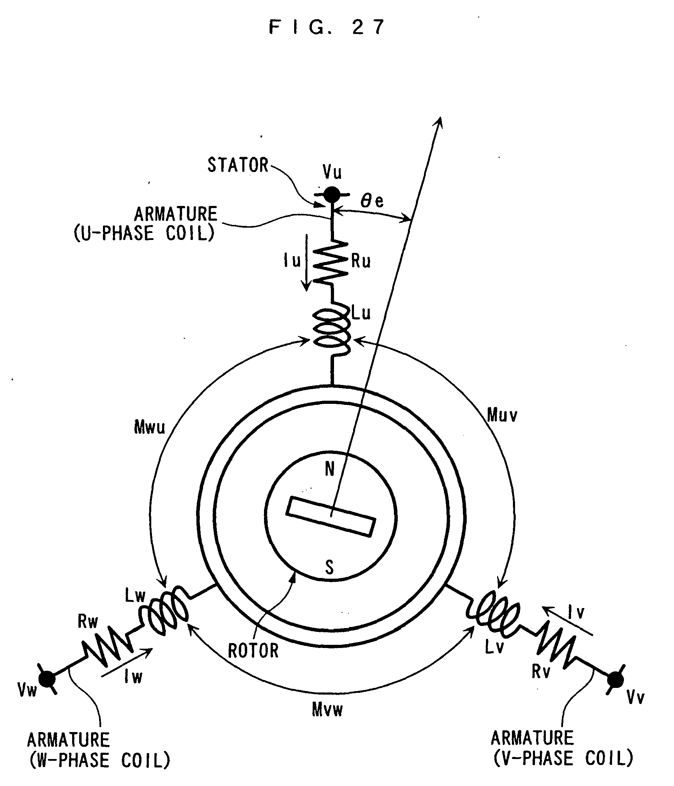

On the other hand, FIG. 27 shows an equivalent circuit of a general brushless DC motor of a one-rotor type. The voltage equation of the brushless DC motor is represented by the following equation (2):

【Math. 2】

$$\begin{bmatrix} Vu \\ Vv \\ Vw \end{bmatrix} = \begin{bmatrix} Ru+s\cdot Lu & s\cdot Muv & s\cdot Mwu \\ s\cdot Muv & Rv+s\cdot Lv & s\cdot Mvw \\ s\cdot Mwu & s\cdot Mvw & Rw+s\cdot Lw \end{bmatrix} \begin{bmatrix} Iu \\ Iv \\ Iw \end{bmatrix} - \begin{bmatrix} \omega e\cdot\Psi f\cdot\sin(\theta e) \\ \omega e\cdot\Psi f\cdot\sin(\theta e-\frac{2}{3}\pi) \\ \omega e\cdot\Psi f\cdot\sin(\theta e+\frac{2}{3}\pi) \end{bmatrix} \quad\cdots\cdots (2)$$

Here, $\Psi f$ represents a maximum value of the magnetic flux of a magnetic pole of the rotor passing through the coil of each phase, and $\theta e$ represents an electrical angular position of the rotor with respect to the stator. $\omega e$ represents a value obtained by differentiating $\theta e$ with respect to time, i.e. an electrical angular velocity.

As is clear from the comparison between the equations (1) and (2), the voltage equation of the electric motor according to the present invention becomes identical to the voltage equation of the general brushless DC motor when $(2\theta E2 - \theta E1)$ is replaced by $\theta e$, and $(2\omega E2 - \omega E1)$ by $\omega e$. From this, it is understood that to operate the electric motor according to the invention, it is only required to control the respective electrical angular positions of vectors of the first and second moving magnetic fields with respect to the first and fourth members to electrical angular positions represented by $(2\theta E2 - \theta E1)$, i.e. electrical angular positions represented by the difference between the value of a two-fold of the electrical angular position of the third member and the electrical angular position of the second member, or the difference between the value of a two-fold of the electrical angular position of the sixth member and the electrical angular position of the fifth member. Further, the above fact holds true irrespective of the number of poles and the number of phases of coils, and also holds true similarly even when the electric motor is constructed as a linear motor as in the case of the invention of claim 12.

According to the present invention, the electrical angular positions of the second member and the third member with respect to the first member or the electrical angular positions of the fifth member and the sixth member with respect to the fourth member are detected. Further, based on the difference between the value of a two-fold of the electrical angular position of the third member and the electrical angular position of the second member, or the difference between the value of a two-fold of the electrical angular position of the sixth member and the electrical angular position of the fifth member, the first and second moving magnetic fields are controlled. Therefore, it is possible to ensure an appropriate operation of the electric motor under the aforementioned conditions (a) to (c).

Further, for example, to control the torque or the rotational speed of the electric motor, if a map representing the relationship between torque and the rotational speed, and voltage is empirically determined for each of the first to sixth members, and the first and second moving magnetic fields are controlled based on such maps, it is necessary to prepare the maps for the first to sixth members, on a member-by-member basis, which makes the control thereof complicated, to bring about the inconvenience of increased memory of the control device or increased computation load. According to the present invention, it is only required to empirically determine a map representing the relationship between one parameter concerning the rotational speed represented by the aforementioned difference of electrical angular positions, torque, and voltage, and control the first and second moving magnetic fields based on the map, and hence differently from the above-mentioned case, it is unnecessary to prepare maps for the first to sixth members, on a member-by-member basis, and it is very easy to perform the control. It is possible to reduce the memory of the control device and computation load.

[Brief Description of the Drawings]

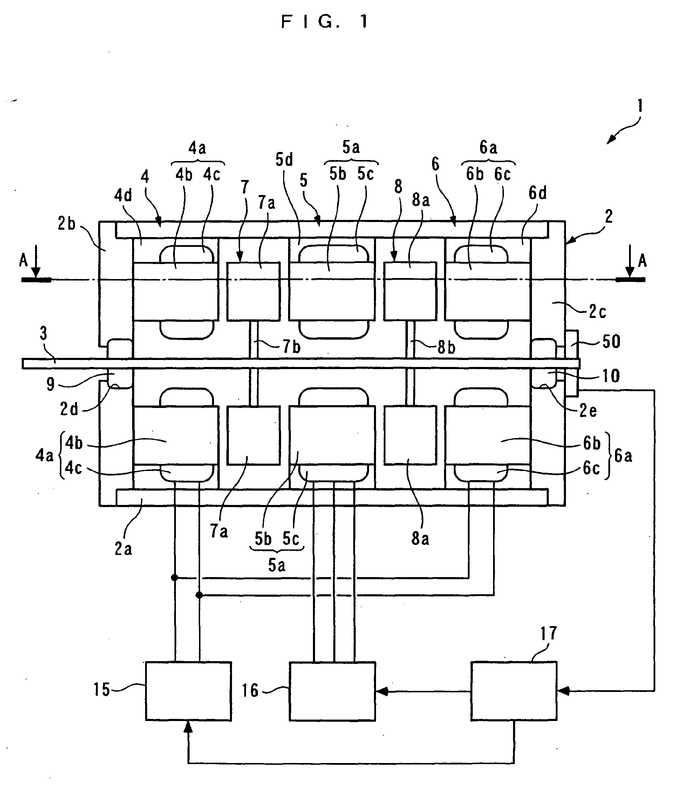

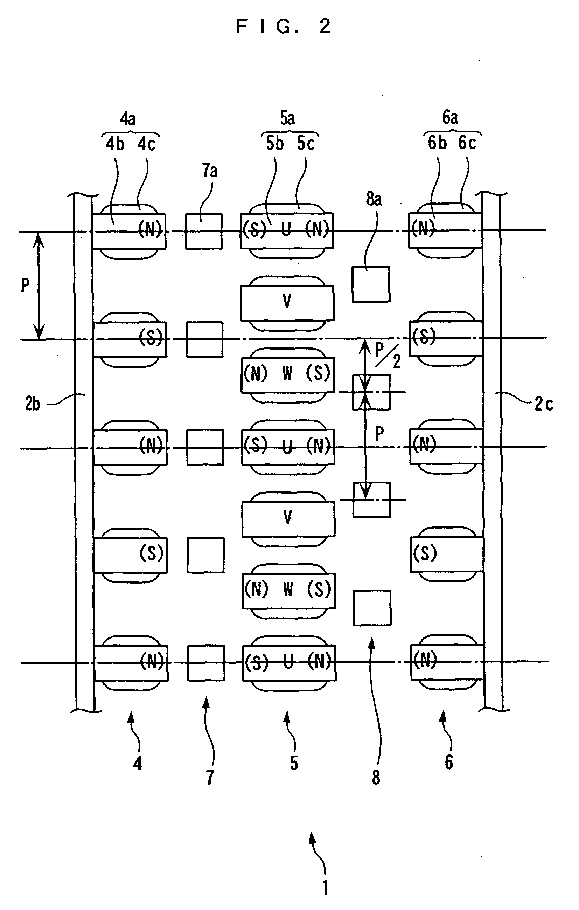

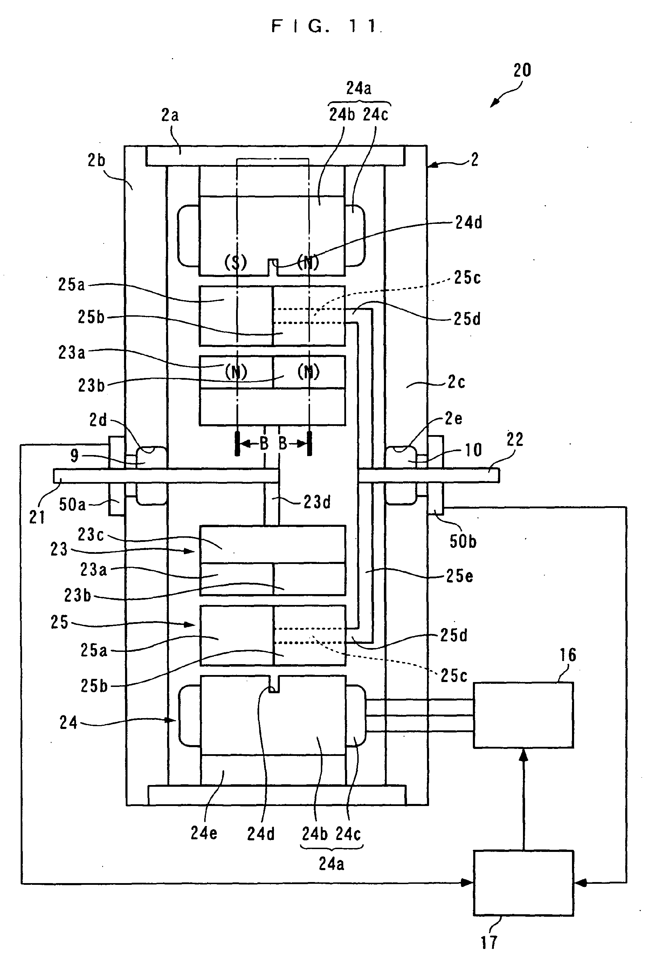

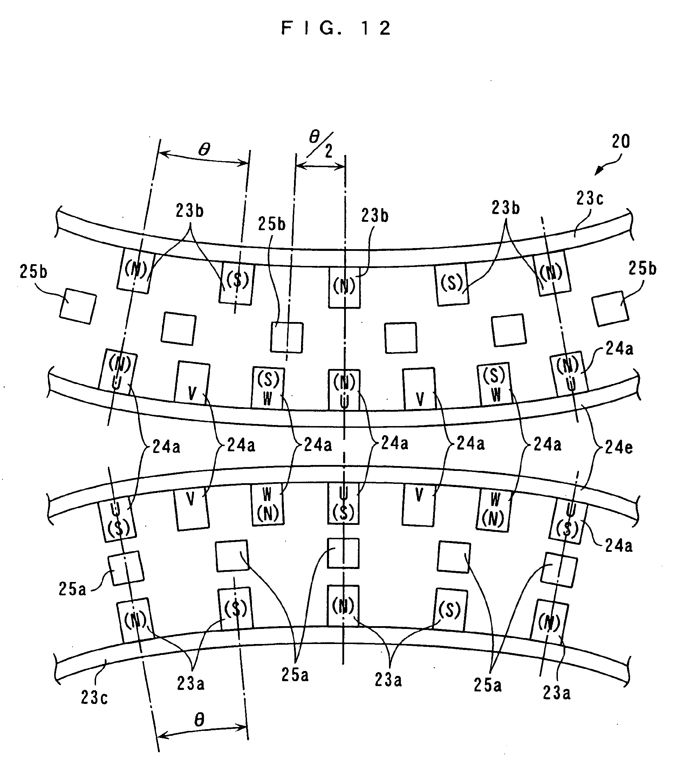

[FIG. 1]
A diametrical cross-sectional view of an electric motor according to a first embodiment of the present invention.
[FIG. 2]
A development view of part of a cross-section of the FIG. 1 electric motor taken on radial line A-A of FIG. 1 during generation of first and second rotating magnetic fields.
[FIG. 3]
A development view of part of a cross-section of the FIG. 1 electric motor taken on radial line A-A of FIG. 1 during generation of first and second rotating magnetic fields at a different time than in FIG. 2.
[FIG. 4]
A diagram which is useful in explaining operations of the electric motor shown in FIG. 1.
[FIG. 5]
A diagram which is useful in explaining operations continued from the FIG. 4 operation.
[FIG. 6]
A diagram showing magnetic circuits formed during the operation of the electric motor shown in FIG. 1.
[FIG. 7]
A diagram schematically showing the relationship between first driving forces, second driving forces, and a shaft torque.
[FIG. 8]
A diametrical cross-sectional view of two electric motors connected to each other.
[FIG. 9]
A diametrical cross-sectional view of a first variation of the electric motor according to the first embodiment.
[FIG. 10]
A diametrical cross-sectional view of a second variation of the electric motor according to the first embodiment.
[FIG. 11]
A diametrical cross-sectional view of an electric motor according to a second embodiment of the present invention.
[FIG. 12]
A development view of part of a cross-section of the FIG. 11 electric motor taken on radial line B-B of FIG. 11 during generation of first and second rotating magnetic fields.
[FIG. 13]
A diagram showing an arrangement functionally equivalent to the arrangement of the FIG. 12 development view.
[FIG. 14]
Speed diagrams representing the relationship between rotating magnetic fields, a first shaft rotating speed, and a second shaft rotating speed, in a state (a) in which the first shaft is fixed, a state (b) in which the second shaft is fixed, a state (c) in which the first shaft and the second shaft rotate in the same direction as the first and second rotating magnetic fields, and a state (d) in which the first shaft is rotating in an opposite direction and the second shaft is rotating in the same direction with respect to the first and second rotating magnetic fields.

[FIG. 15]

A diagram which is useful in explaining the operation of the electric motor in FIG. 11 in the case of the second shaft being fixed.

[FIG. 16]

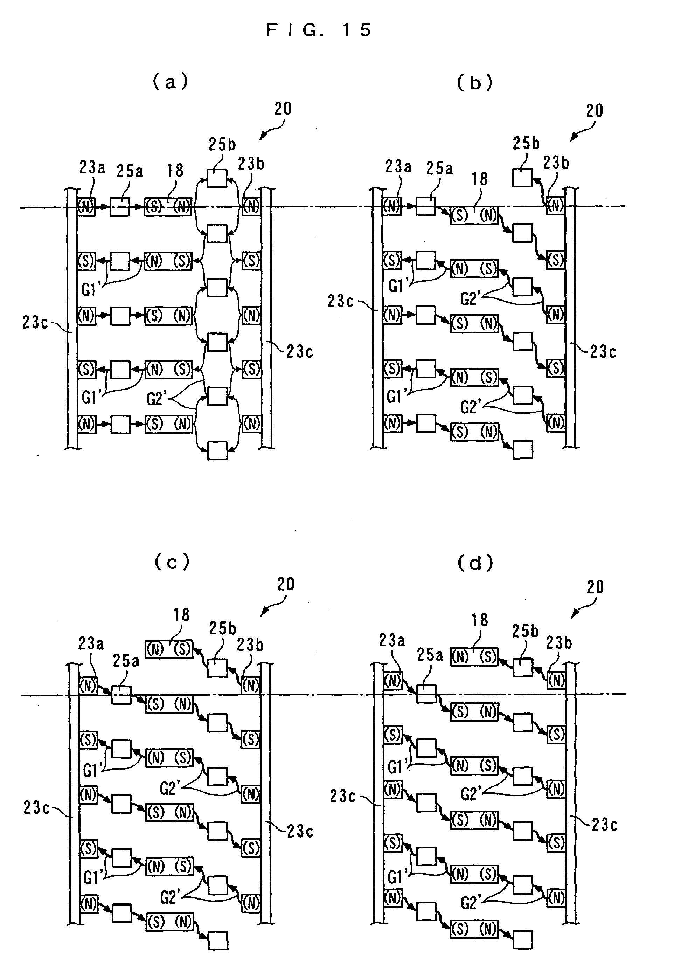

A diagram which is useful in explaining the operation continued from the FIG. 15 operation.

[FIG. 17]

A front cross-sectional view of an electric motor according to a third embodiment of the present invention.

[FIG. 18]

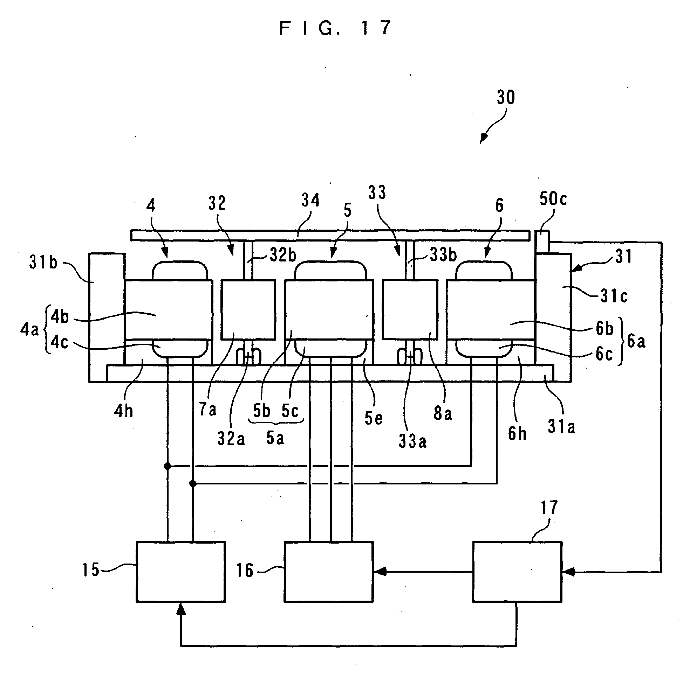

A plan view of the electric motor in FIG. 17.

[FIG. 19]

A diametrical cross-sectional view of an electric motor according to a fourth embodiment of the present invention.

[FIG. 20]

A skeleton diagram of an electric motor according to a fifth embodiment of the present invention.

[FIG. 21]

A block diagram of an electric motor, etc. according to a sixth embodiment of the present invention, etc.

[FIG. 22]

A diagram of an equivalent circuit corresponding to first permanent magnets, first cores, and a stator.

[FIG. 23]

A diagram of an equivalent circuit corresponding to second permanent magnets, second cores, and the stator.

[FIG. 24]

Speed diagram representing an example of the relationship between a magnetic field electrical angular velocity, and first and second rotor electrical angular velocities.

[FIG. 25]

A diagram of an equivalent circuit corresponding to first to third members.

[FIG. 26]

A diagram of an equivalent circuit corresponding to fourth to sixth members.

[FIG. 27]

A diagram of an equivalent circuit of a general brushless DC motor.

[Best Mode for Carrying Out the Invention]

The present invention will now be described in detail with reference to the drawings showing a preferred embodiment thereof. It should be noted that in the figures, hatching in portions illustrating cross-sections are omitted for convenience. FIG. 1 shows an electric motor 1 according to a first embodiment of the present invention. As shown in the figure, the electric motor 1 is comprised of a casing 2, a shaft 3, first to third stators 4 to 6 disposed within the casing 2, and first and second rotors 7 and 8. The second stator 5 is disposed in the center of the casing 2, and the first and second rotors 7 and 8 are disposed on respective opposite sides of the second stator 5 in a manner opposed thereto and spaced by a predetermined distance. The first and third stators 4 and 6 are disposed on respective outer sides of the first and second rotors 7 and 8 in a manner opposed thereto and spaced by a predetermined distance.

The casing 2 has a hollow cylindrical peripheral wall 2a, and side walls 2b and 2c formed integrally therewith and arranged on opposite side ends thereof in a manner opposed to each other. The side walls 2b and 2c are annular plate-shaped members having holes 2d and 2e formed through the respective centers thereof, and the outer diameters thereof are equal to that of the peripheral wall 2a. Further, the peripheral wall 2a and the side walls 2b and 2c are arranged concentrically with each other. Furthermore, bearings 9 and 10 are fitted in the above holes 2d and 2e, respectively. The shaft 3 is rotatably supported by the bearings 9 and 10. It should be noted that the shaft 3 is made substantially axially immovable by a thrust bearing (not shown).

The first stator 4 has 2n first electromagnets 4a. Each first electromagnet 4a is comprised of a cylindrical iron core 4b which slightly extends in a direction of the axis of the shaft 3 "hereinafter referred to as "the axial direction"), and a coil 4c wound around the iron core 4b. Further, the first electromagnet 4a is mounted on an end of the inner peripheral surface of the peripheral wall 2a toward the side wall 2b of the casing 2 via an annular fixing part 4d, and one end of the iron core 4b is mounted on the side wall 2b of the casing 2. Further, as shown in FIG. 2, the first electromagnets 4a are arranged side by side in a direction of the circumference of the shaft 3 (hereinafter referred to as "the circumferential direction") at equally spaced intervals at a predetermined pitch P.

Further, each first electromagnet 4a is connected to a variable power supply 15. The variable power supply 15 is a combination of an electric circuit comprised of a converter, and a battery, and is connected to an ECU 17, referred to hereinafter. Further, the first electromagnets 4a are configured such that each two iron cores 4b adjacent to each other generate respective magnetic poles different in polarity when electric power is supplied thereto from the variable power supply 15 (see FIG. 2). Hereinafter, the magnetic pole of the first electromagnet 4a is referred to as "the first magnetic pole").

It should be noted that in the present embodiment, the casing 2 corresponds to first, second, fourth, and fifth members, the shaft 3 to third and sixth members, the first stator 4 to a first magnetic pole row, the first electromagnets 4a to first magnetic poles, the ECU 17 to magnetic force adjustment means, a first relative positional relationship-detecting device, and a second relative positional relationship-detecting device.

The second stator 5 generates a rotating magnetic field according to the supply of electric power, and has 3n armatures 5a. Each armature 5a is comprised of a cylindrical iron core 5b slightly extending in the axial direction, a coil 5c wound around the iron core 5b by concentrated winding, and so forth. The 3n coils 5c form n sets of three-phase coils of U-phase coils, V-phase coils, and W-phase coils. Further, the armatures 5a are mounted on a central portion of the inner peripheral surface of the peripheral wall 2a via an annular fixing portion 5d such that they are arranged at equally spaced intervals in the circumferential direction. Further, the armatures 5a and the first electromagnets 4a are arranged such that the center of every third armature 5a and the center of every second first electromagnet 4a which have the same polarity is circumferentially in the same position. In the present embodiment, the center of each armature 5a having the U-phase coil 5c is at the same circumferential position as that of each first electromagnet 4a having an N pole (see FIG. 2).

Further, each armature 5a is connected to a variable power supply 16. The variable power supply 16 is a combination of an electric circuit comprised of an inverter, and a battery, and is connected to the ECU 17. Further, the armatures 5a are configured to generate different magnetic poles at ends of each iron core 5b on respective sides toward the first stator 4 and the third stator 6, when electric power is supplied from the variable power supply 16, and along with generation of these magnetic poles, the first and second rotating magnetic fields are generated between the first stator 4 and the second stator 5 and between the third stator 6 and the second stator 5, respectively, such that they rotate in the circumferential direction. Hereafter, the magnetic poles generated on the ends of the iron core 5b on respective sides toward the fist and third stators 4 and 6 are referred to as "the first armature magnetic pole" and "the second armature magnetic pole". Further, the numbers of the first and second armature magnetic poles are each equal to the number of magnetic poles of the first electromagnets 4a, i.e. 2n.

The third stator 6 has second electromagnets 6a the number of which is equal to the number of first electromagnets 4a, i.e. 2n. Each second electromagnet 6a is comprised of a cylindrical iron core 6b which slightly extends in the axial direction, and a coil 6c wound around the iron core 6b. Further, the second electromagnet 6a is mounted on an end of the inner wall of the peripheral wall 2a toward the side wall 2c of the casing 2 via an annular fixing part 6d, and one end of the iron core 6b is mounted on the side wall 2c of the casing 2. Further, the second electromagnets 6a are arranged side by side in the circumferential direction at equally spaced intervals, and such that the center of each thereof is at the same circumferential location as the center of each first electromagnet 4a and that of each armature 5a having the U-phase coil 5c (see FIG. 2).

Further, the second electromagnets 6a are connected to the power supply 15. Further, the second electromagnets 6a are configured such that when electric power is supplied form the variable power supply 15, the respective magnetic poles of each two second electromagnets 6a adjacent to each other are different in polarity, and at the same time the magnetic pole of each second electromagnet 6a has the same polarity as that of the first magnetic pole of each first electromagnet 4a at the same circumferential location (see FIG. 2). Hereinafter, the magnetic pole of the second electromagnet 6a is referred to as "the second magnetic pole").

It should be noted that in the present embodiment, the second stator 5 corresponds to first and second armature rows, the armatures 5a to first and second armatures, the coils 5c to three-phase field windings, the third stator 6 to the second magnetic pole row, and the second electromagnets 6a to the second magnetic poles.

The first rotor 7 has first cores 7a the number of which is equal to the number of the first electromagnets 4a, i.e. 2n. Each first core 7a has a cylindrical shape formed by laminating soft magnetic material parts, e.g. a plurality of steel sheets, and slightly extends in the axial direction. The first core 7a is mounted on an outer end of a disc-shaped flange 7b provided integrally and concentrically with the shaft 3, and is rotatable in unison with the shaft 3. Further, the first cores 7a are arranged side by side in the circumferential direction at equally spaced intervals.

The second rotor 8 has second cores 8a the number of which is equal to the number of the first electromagnets 4a, i.e. 2n. Each second core 8a has, similarly to the first core 7a, a cylindrical shape formed by laminating soft magnetic material parts, e.g. a plurality of steel sheets, and extends in the axial direction. The second core 8a is mounted on an outer end of a disc-shaped flange 8b provided integrally and concentrically with the shaft 3, and is rotatable in unison with the shaft 3. Furthermore, the second cores 8a are alternately arranged with respect to the first cores 7a, and the center of each second core 8a is displaced from the center of each first core 7a by a half P/2 of the predetermined pitch P.

It should be note that in the present embodiment, the first and second rotors 7 and 8 correspond to first and second soft magnetic material rows, respectively, and the first and second cores 7a and 8a correspond to first and second soft magnetic elements.

Further, the electric motor 1 is provided with a rotational position sensor 50 (first positional relationship-detecting device, second positional relationship-detecting device) which delivers a signal indicative of a rotational position of the shaft 3 (hereinafter referred to as "the shaft rotational position") to the ECU 17.

The ECU 17 controls the electric motor 1. The ECU 17 is implemented by a microcomputer including an I/O interface, a CPU, a RAM, and a ROM. Further, the ECU 17 determines the relative positional relationship between the armatures 5a, the first and second electromagnets 4a and 6a, and the first and second cores 7a and 8a, according to the input shaft rotational position, and controls energization of the three-phase coils 5c of the armatures 5a based on the positional relationship to thereby control the first and second rotating magnetic fields. Further, the ECU 17 calculates a rotational speed of the shaft 3 (hereinafter referred to as "the shaft rotational speed") based on the shaft rotational position.

Further, the ECU 17 calculates load on the electric motor 1 based on the shaft rotational speed, the electric power supplied to the armatures 5a and the first and second electromagnets 4a and 6a, and controls the electric current supplied to the armatures 5a, and the first and second electromagnets 4a and 6a according to the calculated load. This controls the magnetic forces of the magnetic poles of the first and second armature magnetic poles and the first and second magnetic poles, and the rotational speed of the first and second rotating magnetic fields. In this case, the magnetic forces of the first and second armature magnetic poles and the magnetic forces of the first and second magnetic poles are made stronger as the calculated load is higher. Further, during low-load operation, as the shaft rotational speed is higher, the magnetic forces of the first and second armature magnetic poles and those of the first and second magnetic poles are made weaker.

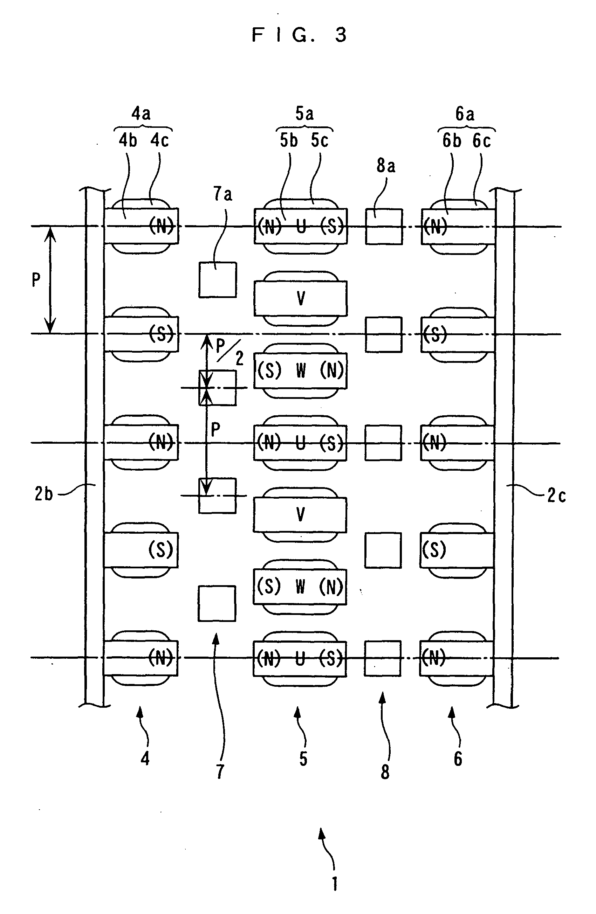

In the electric motor 1 configured as above, as shown in FIG. 2, during generation of the first and second rotating magnetic fields, when the polarity of each first armature magnetic pole is different from the polarity of an opposed (closest) one of the first magnetic poles, the polarity of each second armature magnetic pole is the same as the polarity of an opposed (closest) one of the second magnetic poles. Further, when each first core 7a is in a position between each first magnetic pole and each first armature magnetic pole, each second core 8a is in a position between a pair of second armature magnetic poles circumferentially adjacent to each other and a pair of second magnetic poles circumferentially adjacent to each other. Furthermore, as shown in FIG. 3, during generation of the first and second rotating magnetic fields, when the polarity of each second armature magnetic pole is different from the polarity of an opposed (closest) one of the second magnetic poles, the polarity of each first armature magnetic pole is the same as the polarity of an opposed (closest) one of the first magnetic poles. Further, when each second core 8a is in a position between each second magnetic pole and each second armature magnetic pole, each first core 7a is in a position between a pair of first armature magnetic poles circumferentially adjacent to each other, and a pair of first magnetic poles circumferentially adjacent to each other. It should be noted that in FIGS. 2 and 3, the shaft 3, and the flanges 7a and 8a are omitted from illustration, for convenience.

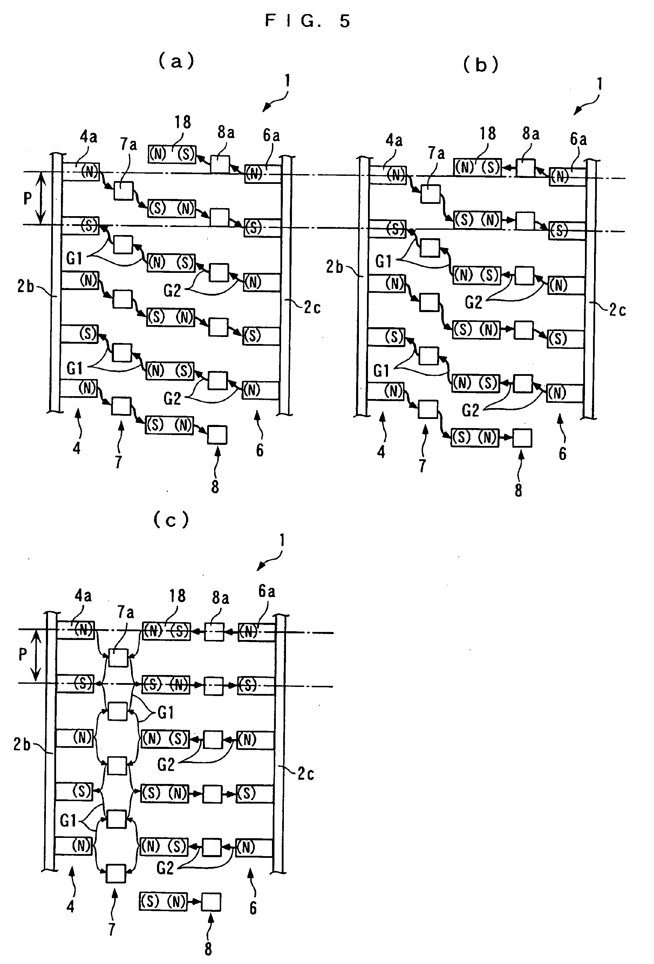

Next, the operation of the above-described electric motor 1 will be described with reference to FIGS. 4 and 5. It should be noted that, for convenience of description, the operation of the electric motor 1 is described by replacing the motions of the first and second rotating magnetic fields by an equivalent physical motion of 2n imaginary permanent magnets (hereinafter referred to as "the imaginary magnets") 18, equal in number to the respective numbers of the first and second electromagnets 4a and 6a. Further, the description will be given by regarding magnetic poles of each imaginary magnet 18 on respective sides toward the first stator 4 and the third stator 6 as the first and second armature magnetic poles, respectively, and rotating magnetic fields generated between the first stator 4 and the imaginary magnets 18 and between the third stator 6 and the imaginary magnets 18 as the first and second rotating magnetic fields, respectively.

First, as shown in FIG. 4(a), the first and second rotating magnetic fields are generated in a manner rotated downward, as viewed in the figure, from a state in which each first core 7a is opposed to each first electromagnet 4a, and each second core 8a is in a position between each adjacent two of the second electromagnets 6a. At the start of the generation of the first and second rotating magnetic fields, the polarity of each first armature magnetic pole is made different from the polarity of each opposed one of the first magnetic poles, and the polarity of each second armature magnetic pole is made the same as the polarity of each opposed one of the second magnetic poles.

Since the first cores 7a are disposed between the first and second stators 4 and 5, they are magnetized by the first magnetic poles and the first armature magnetic poles, and magnetic lines G1 of force (hereinafter referred to as "the first magnetic force lines G1") are generated between the first magnetic poles, the first cores 7a, and the first armature magnetic poles. Similarly, since the second cores 8a are disposed between the second and third stators 5 and 6, they are magnetized by the second armature magnetic poles and the second magnetic poles, and magnetic lines G2 of force (hereinafter referred to as "the second magnetic force lines G2") are generated between the first armature magnetic poles, the second cores 8a, and the second magnetic poles.

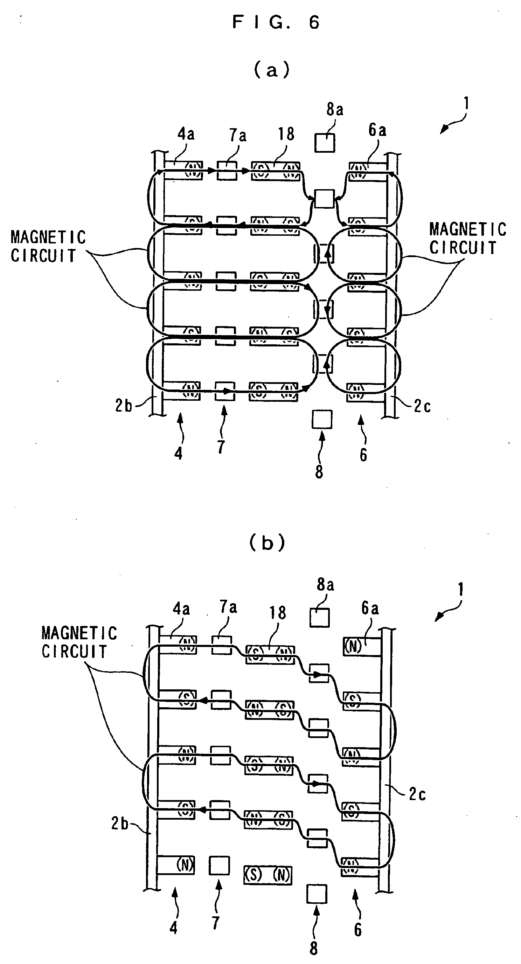

In the state shown in FIG. 4(a), the first magnetic force lines G1 are generated such that they each connect the first magnetic pole, the first core 7a, and the first armature magnetic pole, and the second magnetic force lines G2 are generated such that they connect each circumferentially adjacent two second armature magnetic poles and the second core 8a located therebetween, and connect each circumferentially adjacent two second magnetic poles and the second core 8a located therebetween. As a result, in this state, magnetic circuits as shown in FIG. 6(a) are formed. In this state, since the first magnetic force lines G1 are linear, no magnetic forces for circumferentially rotating the first cores 7a act on the first cores 7a. Further, the two second magnetic force lines G2 between each circumferentially adjacent two second armature magnetic poles and the second core 8a are equal to each other in the degree of bend thereof and in the total magnetic flux amount. Similarly, the two second magnetic force lines G2 between each circumferentially adjacent two second magnetic poles and the second core 8a are equal to each other in the degree of bend thereof and in the total magnetic flux amount. As a result, the second magnetic force lines G2 are balanced. Therefore, no magnetic forces for circumferentially rotating the second cores 8a act on the second cores 8a, either.

When the imaginary magnets 18 rotate from respective positions shown in FIG. 4(a) to respective positions shown in FIG. 4(b), the second magnetic force lines G2 are generated such that they each connect between a second armature magnetic pole, a second core 8a, and a second magnetic pole, and respective portions of the first magnetic force lines G1 between the first cores 7a and the first armature magnetic poles are bent. Further, accordingly, magnetic circuits are formed by the first magnetic force lines and the second magnetic force lines, as shown in FIG. 6(b).

In this state, since the degree of bend of each first magnetic force line G1 is small but the total magnetic flux amount thereof is large, a relatively large magnetic force acts on the first core 7a. This causes the first cores 7a to be driven by relatively large driving forces in the direction of rotation of the imaginary magnets 18, that is, the direction of rotations of the first and second rotating magnetic fields (hereinafter referred to as "the magnetic field rotation direction"), whereby the shaft 3 rotates in the magnetic field rotation direction. Further, although the degree of bend of the second magnetic force line G2 is large, the total magnetic flux amount thereof is small, so that a relatively small magnetic force acts on the second core 8a. This causes the second cores 8a to be driven by relatively small driving forces in the magnetic field rotation direction, whereby the shaft 3 rotates in the magnetic field rotation direction.

Then, when the imaginary magnets 18 rotate from the position shown in FIG. 4(b) to respective positions shown in FIGS. 4(c) and 4(d), and FIGS. 5(a) and 5(b), in the mentioned order, the first and second cores 7a and 8a are driven in the magnetic field rotation direction by magnetic forces caused by the first and second magnetic force lines G1 and G2, so that the shaft 3 rotates in the magnetic field rotation direction. During the time, the first magnetic force lines G1 increase in the degree of bend thereof but decrease in the total magnetic flux amount thereof, whereby the magnetic forces acting on the first cores 7a progressively decrease to progressively reduce the driving forces for driving the first cores 7a in the magnetic field rotation direction. Further, the second magnetic force lines G2 decrease in the degree of bend thereof but increase in the total magnetic flux amount thereof, whereby the magnetic forces acting on the second cores 8a progressively increase to progressively increase the driving forces for driving the second cores 8a in the magnetic field rotation direction.

Then, during rotation of the imaginary magnets 18 from the position shown in FIG. 5(b) to the position shown FIG. 5(c), the second magnetic force lines G2 are bent, and the total magnetic flux amounts thereof become close to their maximum, so that the strongest magnetic forces act on the second cores 8a to maximize the driving forces acting on the second cores 8a. After that, as shown in FIG. 5(c), when the imaginary magnets 18 each move to a position opposed to the first and second electromagnets 4a and 6a by rotation through a predetermined pitch P, the respective polarities of the first armature magnetic pole and the first magnetic pole opposed to each other become identical to each other, and the first core 7a is in a position between circumferentially adjacent two pairs of first armature magnetic poles and first magnetic poles, each pair having the same polarity. In this state, since the degree of bend of the first magnetic force line is large but the total magnetic flux amount thereof is small, no magnetic force for rotating the first core 7a in the magnetic field rotation direction acts on the first core 7a. Further, second armature magnetic poles and second magnetic poles opposed to each other come to have polarities different from each other.

From this state, when the imaginary magnets 18 further rotate, the first and second cores 7a and 8a are driven in the magnetic field rotation direction by the magnetic forces caused by the first and second magnetic force lines G1 and G2, so that the shaft 3 rotates in the magnetic field rotation direction. At this time, during rotation of the imaginary magnets 18 to the position shown FIG. 4(a), inversely to the above, although the degree of bend of the first magnetic force lines G1 decreases, the total magnetic flux amount thereof increases, so that the magnetic forces acting on the first cores 7a increase to increase the driving forces acing on the first cores 7a. On the other hand, although the degree of bend of the second magnetic force lines G2 increases, the total magnetic flux amount thereof decreases, so that the magnetic forces acting on the second cores 8a decrease to reduce the driving forces acing on the second cores 8a.

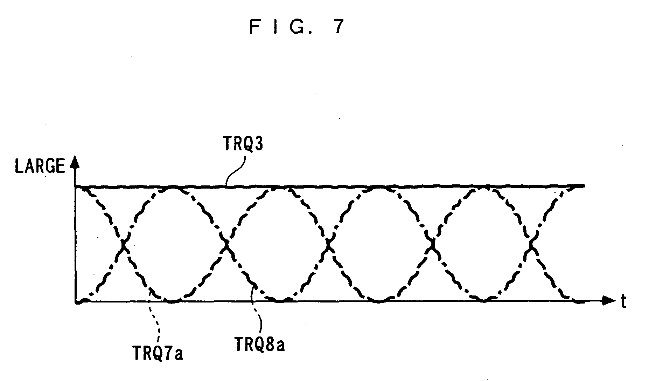

As described above, the shaft 3 rotates in the magnetic field rotation direction, while the driving forces acting on the respective first and second cores 7a and 8a repeatedly increase and decrease by turns in accordance with the rotations of the imaginary magnets 18, that is, the rotations of the first and second rotating magnetic fields. In this case, the relationship between the driving forces TRQ7a and TRQ8a acting on the respective first and second cores 7a and 8a (hereinafter referred to as "the first driving force" and "the second driving force", respectively), and the torque TRQ3 of the shaft 3 (hereinafter referred to as "the shaft torque TRQ3") is as shown in FIG. 7. As shown in the figure, the first and second driving forces TRQ7a and TRQ8a change approximately sinusoidally at the same repetition period, and phases thereof are displaced from each other by a half period. Further, since the shaft 3 has the first and second core 7a and 8a connected thereto, the shaft torque TRQ3 is equal to the sum of the first and second driving forces TRQ7a and TRQ8a that change as described above, and becomes approximately constant.

Further, as is clear from comparison between FIGS. 4(a) and 5(b), as the imaginary magnets 18 rotate through the predetermined pitch P, the first and second cores 7a and 8a rotate through only half of the predetermined pitch P, and hence the shaft 3 rotates at haft of the rotational speed of the first and second rotating magnetic fields. This is because the magnetic forces caused by the first and second magnetic force lines G1 and G2 cause the first and second cores 7a and 8a to rotate while maintaining the respective states positioned at a mid point between the first magnetic pole and the first armature magnetic pole connected by the first magnetic force line G1 and at a mid point between the second magnetic pole and the second armature magnetic pole connected by the second magnetic force line G2.

It should be noted that during the rotations of the first and second rotating magnetic fields, the first and second cores 7a and 8a are rotated by the magnetic forces caused by the first and second magnetic force lines G1 and G2, and therefore the first and second cores 7a and 8a are rotated in a state slightly delayed relative to the first and second rotating magnetic fields. Therefore, during the rotations of the first and second rotating magnetic fields, when the imaginary magnets 18 are in a position shown in FIG. 5(c), the first and second cores 7a and 8a are actually in a position slightly shifted in a direction (upward, as viewed in the figure) opposite to the magnetic field rotation direction with respect to the position shown in FIG. 5(c). For ease of understanding of the aforementioned rotational speed, however, the first and second cores 7a and 8a are presented in the respective positions in the figure.

As described above, according to the present embodiment, depending on the shaft rotational position, the magnetized states of the first and second cores 7a and 8a vary, which makes it possible to cause the shaft 3 to rotate without slippage, and the electric motor 1 functions as a synchronous motor differently from the conventional electric motor described hereinbefore, which makes it possible to increase the efficiency thereof. Further, since the respective numbers of the first armature magnetic poles, the first magnetic poles, and the first cores 7a are set to be equal to each other, it is possible to generate the first magnetic force lines G1 properly in all the first armature magnetic poles, the first magnetic poles, and the first cores 7a. Further, since the respective numbers of the second armature magnetic poles, the second magnetic poles, and the second core 8a are set to be equal to each other, it is possible to properly generate the second magnetic force lines G2 in all the second armature magnetic poles, the second magnetic poles, and the second cores 8a. From the above, it is possible to sufficiently obtain the torque of the electric motor 1.

Further, since the armatures 5a, and the first and second electromagnets 4a and 6a are fixed to the casing 2, differently from the case where these are configured to be rotatable, it is possible to dispense with slip rings for supplying electric power to the armatures 5a, and the first and second electromagnets 4a and 6a. Therefore, the electric motor 1 can be downsized by the size of eliminated slip rings, and the efficiency thereof can be further enhanced since no heat is generated due to friction resistance of the slip rings and associated brushes.

Further, since the first and second cores 7a and 8a formed by laminates of steel sheets are rotated, it is possible to further improve durability of the electric motor compared with the case where the permanent magnets lower in strength are rotated.

Further, since the first and second electromagnets 4a and 6a are used, differently from the use of permanent magnets which are large in magnetic force, it is possible to carry out the operations of assembling the electric motor 1 without performing the aforementioned operations for preventing contact between components. Further, in driving the shaft 3 by inputting power to the armatures 5a without supplying electric power thereto, differently from the case where permanent magnets are used for the first and second electromagnets 4a and 6a, it is possible to prevent occurrence of loss due to the magnetic forces thereof, by stopping energization thereof. Further, in the state where no electric power is supplied to the armatures 5a, if a large power is input to the shaft 3, by stopping the energization of the first and second electromagnets 4a and 6a to control the magnetic forces thereof to substantially 0, it is possible to prevent large induced electromotive forces from being generated in the electric motor 5a, whereby it is possible to prevent the armatures 5a and the variable supply 16 from being damaged.

Further, the ECU 17 increases the magnetic forces of the first and second electromagnets 4a and 6a as the load on the electric motor 1 is higher. Therefore, when a large output is required due to high load, it is possible to increase the magnetic forces of the first and second electromagnets 4a and 6a, and hence increase the magnetic forces caused by the aforementioned first and second magnetic force lines G1 and G2, which makes it possible to obtain a sufficient output. Further, when a large output is not required due to low load, it is possible to reduce the magnetic forces of the first and second electromagnets 4a and 6a, and hence reduce the induced electromotive force of the armatures 5a, which makes it possible to enhance the efficiency. Further, as the shaft rotational speed is higher, the magnetic forces of the first and second armature magnetic poles and the first and second magnetic poles are made weaker, and hence it is possible to reduce field-reducing current supplied to the armatures 5a during high speed rotation, which makes it possible to enhance the efficiency.

Further, since the general three-phase (U-phase, V-phase, and W-phase) coils 5c are used, it is possible to construct the electric motor 1 easily and inexpensively, without preparing special filed windings. Further, the stator for generating the first and second rotating magnetic fields is formed by the single second stator 5, and the first to third stators 4 to 6 are mounted on the single peripheral wall 2a. Further, the first and second rotors 7 and 8 are mounted on the single shaft 3. Therefore, compared with the case where the stator for generating the first and second rotating magnetic fields is formed by two stators, and the first to third stators 4 to 6 and the first and second rotors 7 and 8 are mounted on respective different members, the number of component parts can be reduced, whereby it is possible to reduce the manufacturing costs and achieve downsizing.

Further, the relative positional relationship between the armature 5a and the first and second electromagnets 4a and 6a, and the first and second cores 7a and 8a is determined, and based on the positional relationship, the first and second rotating magnetic fields are controlled. Further, as apparent from the fact that the first and second electromagnets 4a and 6a are fixed to the casing 2 (speed thereof = 0), and that the shaft 3 rotates at half of the rotational speed of the first and second rotating magnetic fields, the rotational speed of the first and second rotating magnetic fields is controlled such that collinear relationship is satisfied between the same, and the casing 2 and the shaft 3. This ensures the proper operation of the electric motor 1.

Further, since the first to third stators 4 to 6 and the first and second rotors 7 and 8 are arranged side by side in the axial direction, it is possible to reduce the diametrical size of the electric motor 1.

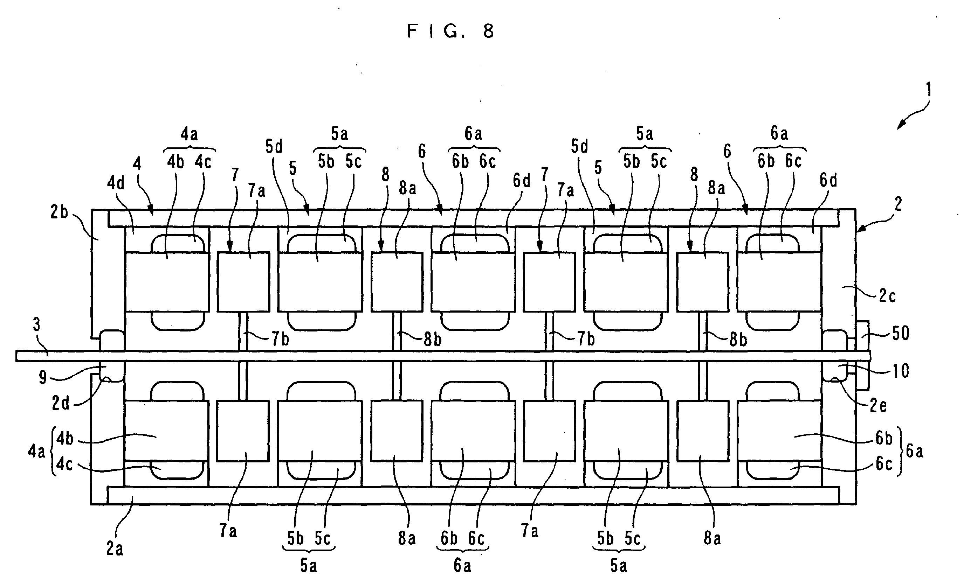

Further, for example, when the output power is increased by connecting a plurality of electric motors 1, it is possible to use the third stator 6 in a shared manner as the first stator 4, as shown in FIG. 8, and hence compared with the case of a plurality of electric motors 1 being connected as they are, the construction of the connected motors can be simplified.

It should be noted that although in the present embodiment, the control of the first and second rotating magnetic fields is performed based on the relative positional relationship between the armatures 5a and the first and second electromagnets 4a and 6a, and the first and second cores 7a and 8a, the control may be performed based on the relative positional relationship between arbitrary portions of the casing 2 or the first to third stators 4 to 6, and arbitrary portions of the shaft 3 or the first and second rotors 7 and 8.

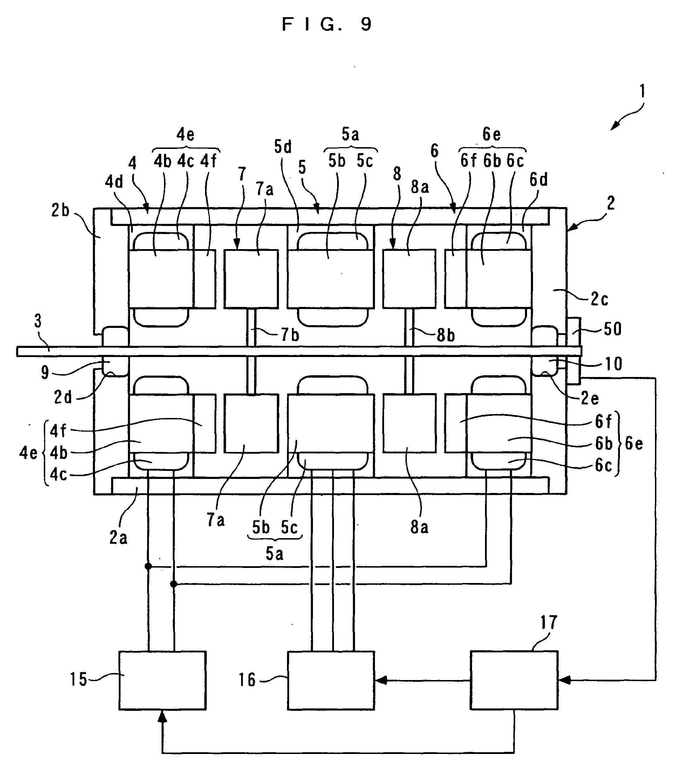

FIG. 9 shows a first variation of the first embodiment. In the example of the first variation, the first and second electromagnets 4e and 6e have permanent magnets 4f and 6f which can magnetize the iron cores 4b and 6b. These permanent magnets 4f and 6f have respective end faces thereof secured to the iron cores 4b and 6b, and respective opposite ends thereof opposed to the first and second rotors 7 and 8. Further, ones of the permanent magnets 4f and 6f at the circumferentially same locations are the same in polarity, while ones of the same at circumferentially adjacent locations are different from each other in polarity. Therefore, it is possible to obtain the same advantageous effects as provided by the first embodiment.

Further, even when there occur disconnections in the coils 4c and 6c of the first and second electromagnets 4e and 6e and failure of the power supply 15, it is possible to secure the output power from the electric motor 1 by the magnetic forces of the permanent magnets 4f and 6f. Further, even with permanent magnets 4f and 6f which are relatively small in magnetic force, it is possible to properly perform field generation, by making up for the small magnetic forces by the magnetic forces of the coils 4c and 6c, which makes it possible to carry out assembly work of the electric motor 1 easily using such permanent magnets 4f and 6f without performing operations for preventing contact between component parts. It should be noted that in the first variation, the first and second electromagnets 4e and 6e correspond to the first and second magnetic poles, respectively.

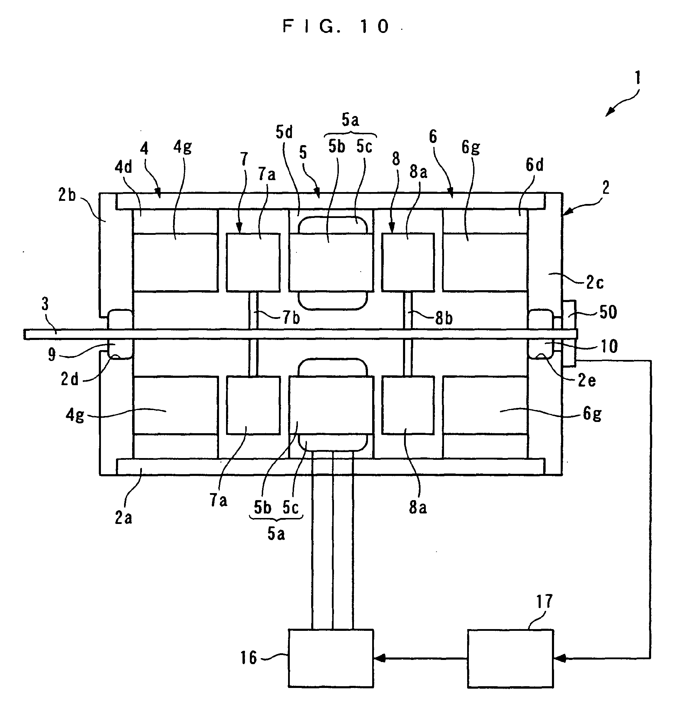

FIG. 10 show a second variation of the first embodiment. In the second variation, in place of the first and second electromagnets 4a and 6a, first and second permanent magnets 4g and 6g are provided. Since the first and second permanent magnets 4g and 6g are disposed in the same manner as the first and second electromagnets 4a and 6a, it is possible to obtain the same advantageous effects as the first embodiment. Further, differently from the first embodiment or the first variation, the variable power supply 15 and the coils 4c can be dispensed with. This makes it possible to reduce the size of the electric motor 1, and simplify the construction thereof. It should be noted that the first and second permanent electromagnets 4g and 6g correspond to the first and second magnetic poles, respectively.

Next, an electric motor 20 according to a second embodiment of the present invention will be described with reference to FIG. 11. As distinct from the electric motor 1 according to the first embodiment described above, which is of a type in the first stator 4 and the like are axially arranged, the electric motor 20 according to the present embodiment is of a type in which the stator and the like are radially arranged. In the figure, component parts of the electric motor 20 which are identical to those of the first embodiment described above are denoted by the same reference numerals. Hereafter, a description will be mainly given of different points from the first embodiment.

As shown in FIG. 11, the electric motor 20 is comprised of a first shaft 21 and a second shaft 22 which are rotatably supported on the bearings 9 and 10, respectively, a first rotor 23 accommodated within the casing 2, a stator 24 disposed within the casing 2 in a manner opposed to the first rotor 23, and a second rotor 25 disposed between the two rotors 23 and 24, in a manner spaced from each by a predetermined distance. The first rotor 23, the second rotor 25, and the stator 24 are disposed in the direction of radius of the first shaft 21 from inside in the mentioned order. It should be noted that the first and second shafts 21 and 22 are arranged concentrically and are made substantially immovable in the axial direction by a thrust bearing (not shown).

The first rotor 23 has 2n first permanent magnets 23a and second permanent magnets 23b. The first and second permanent magnets 23a and 23b are arranged at equally spaced intervals in the circumferential direction of the first shaft 21 (hereinafter simply referred to as "the circumferential direction"), respectively. Each first permanent magnet 23a has a sector-shaped cross-section orthogonal to the axial direction of the first shaft 21 (hereinafter simply referred to as "the axial direction"), and slightly extends in the axial direction. Each second permanent magnet 23b has the same shape and size as the shape and size of the first permanent magnet 23a. Further, the first and second permanent magnets 23a and 23b are mounted on the outer peripheral surface of an annular fixing portion 23c, in a state arranged axially, i.e. in the axial direction, side by side, and in contact with each other. The above-mentioned fixing portion 23c is formed of a soft magnetic material element, such as iron, and has an inner peripheral surface thereof attached to the outer peripheral surface of a disk-shaped flange 23d integrally concentrically formed with the first shaft 21. With the above arrangement, the first and second permanent magnets 23a and 23b are rotatable in unison with the first shaft 21.

Further, as shown in FIG. 12, a central angle formed by each two first and second permanent magnets 23a and 23b adjacent to each other circumferentially, i.e. in the circumferential direction, about the first shaft 21 is a predetermined angle θ. Further, ones of the first and second permanent magnets 23a and 23b positioned side by side in the axial direction are the same in polarity, while ones of the same circumferentially adjacent to each other are different from each other in polarity. Hereafter, respective magnetic poles of the first and second permanent magnets 23a and 23b are referred to as "the first magnetic pole" and "the second magnetic pole", respectively.

It should be noted in the present embodiment, the casing 2 corresponds to the first and fourth members, the first shaft 21 to the second and fifth members, the second shaft 22 to the third and sixth members, the first rotor 23 to the first and second magnetic pole rows, and the first and second permanent magnets 23a and 23b to the first and second magnetic poles.

Similarly to the above-described second stator 5, the stator 24 generates the first and second rotating magnetic fields, and has 3n armatures 24a arranged at equally spaced intervals in the circumferential direction. Similarly to the above-mentioned armatures 5a, each armature 24a is comprised of an iron core 24b, and a coil 24c wound around the iron core 24b by concentrated winding. The iron core 24b has a generally sector-shaped cross-section orthogonal to the axial direction, and has an axial length approximately twice as long as that of the first permanent magnet 23a. An axially central portion of the inner peripheral surface of the iron core 24b is formed with a circumferentially extending groove 24d. The 3n coils 24c form n sets of three-phase (U-phase, V-phase, and W-phase) coils (see FIG. 12). Further, the armatures 24a are mounted on the inner peripheral surface of the peripheral wall 2a via an annular fixing portion 24e. Due to the numbers and the arrangements of the armatures 24a and the first and second permanent magnets 23a and 23b, when the center of a certain armature 24a circumferentially coincides with the center of certain first and second permanent magnets 23a and 23b, the center of every third armature 24a from the armature 24a, and the center of every second first and second permanent magnets 23a and 23b from the respective first and second permanent magnets 23a and 23b circumferentially coincide with each other.

Furthermore, each armature 24a is connected to the variable power supply 16, and is configured such that when electric power is supplied, magnetic poles having different polarities from each other are generated on respective end portions of the iron core 24b toward the first and second permanent magnets 23a and 23b. Further, in accordance with generation of these magnetic poles, first and second rotating magnetic fields are generated between the first permanent magnets 23a of the first rotor 23 and the end portion of the iron core 24b, and between the second permanent magnets 23b of the first rotor 23 and the end portion of the iron core 24b, in a circumferentially rotating manner, respectively. Hereinafter, the magnetic poles generated on the respective end portions of the iron core 24b toward the first and second permanent magnets 23a and 23b are referred to as "the first armature magnetic pole" and "the second armature magnetic pole", respectively. Further, the number of the first armature magnetic poles and that of the second armature magnetic poles are equal to the number of the magnetic poles of the first permanent magnet 23a, that is, 2n.

In the present embodiment, the stator 24 corresponds to first and second armature rows, the armatures 24a to the first and second armatures, and the coils 24c to the three-phase field windings, respectively.

The second rotor 25 has a plurality of first cores 25a and a plurality of second cores 25b. The first and second cores 25a and 25b are arranged at equally spaced intervals in the circumferential direction, respectively, and the numbers of 25a and 25b are both set to be equal to that of the first permanent magnet 23a, that is, 2n. Each first core 25a is formed by laminating soft magnetic material parts, e.g. a plurality of steel sheets, such that it has a sector-shaped cross-section orthogonal to the axial direction, and axially extends by a predetermined length. Similarly to the first core 25a, each second core 25b is formed by laminating a plurality of steel plates, such that it has a sector-shaped cross-section orthogonal to the axial direction, and axially extends by a predetermined length.

The first and second cores 25a and 25b are mounted on an outer end of a disk-shaped flange 25e via bar-shaped connecting portions 25c and 25d slightly extending in the axial direction, respectively. The flange 25e is integrally concentrically provided on the second shaft 22. With this arrangement, the first and second cores 25a and 25b are rotatable in unison with the second shaft 22.

Further, the first cores 25a are each axially arranged between the first permanent magnet 23a of the' first rotor 23 and the stator 24, and the second cores 25b are each axially arranged between the second permanent magnet 23b of first rotor 23 and the stator 24. Furthermore, the second cores 25b are circumferentially alternately arranged with respect to the first cores 25a, and the center of the second core 25b is displaced by half of the predetermined angle θ from the center of the first core 25a.

It should be note that in the present embodiment, the second rotor 25 corresponds to the first and second soft magnetic material element rows, the first cores 25a to the first soft magnetic substance elements, and the second cores 25b to the second soft magnetic material elements, respectively.

Further, the electric motor 20 is provided with first and second rotational angle sensors 50a and 50b (the first relative positional relationship-detecting device and the second relative positional relationship-detecting device). The rotational angle sensors 50a and 50b detect respective rotational angular positions of the first and second shafts 21 and 22, and deliver respective signals indicative of the sensed rotational angular positions to the ECU 17.

The ECU 17 determines, based on the detected rotational positions of the first and second shafts 21 and 22, the relative positional relationship between the armatures 24a, the first and second permanent magnets 23a and 23b, and the first and second cores 25a and 25b, and controls, based on the positional relationship, the energization of the three-phase coils 5c of the armatures 5a, to thereby control the first and second rotating magnetic fields.

The electric motor 20 constructed as above is configured such that in a state in which one of the first and second shaft 21 and 22 is fixed, or power is input thereto, the other of the same is caused to rotate.

Further, as shown in FIG. 12, during generation of the first and second rotating magnetic fields, when the polarity of each first armature magnetic pole is different from the polarity of an opposed (closest) one of the first magnetic poles, the polarity of each second armature magnetic pole becomes the same as the polarity of an opposed (closest) one of the second magnetic poles. Further, when each first core 25a is in a position between a first magnetic pole and a first armature magnetic pole, each second core 25b is in a position between a pair of second armature magnetic poles circumferentially adjacent to each other and a pair of second magnetic poles circumferentially adjacent to each other. Furthermore, although not shown, during generation of the first and second rotating magnetic fields, when the polarity of each second armature magnetic pole is different from the polarity of an opposed (closest) one of the second magnetic poles, the polarity of each first armature magnetic pole becomes the same as the polarity of an opposed (closest) one of the first magnetic poles. Further, when each second core 25b is in a position between a second magnetic pole and a second armature magnetic pole, each first core 25a is in a position between a pair of first armature magnetic poles circumferentially adjacent to each other, and a pair of first magnetic poles circumferentially adjacent to each other.

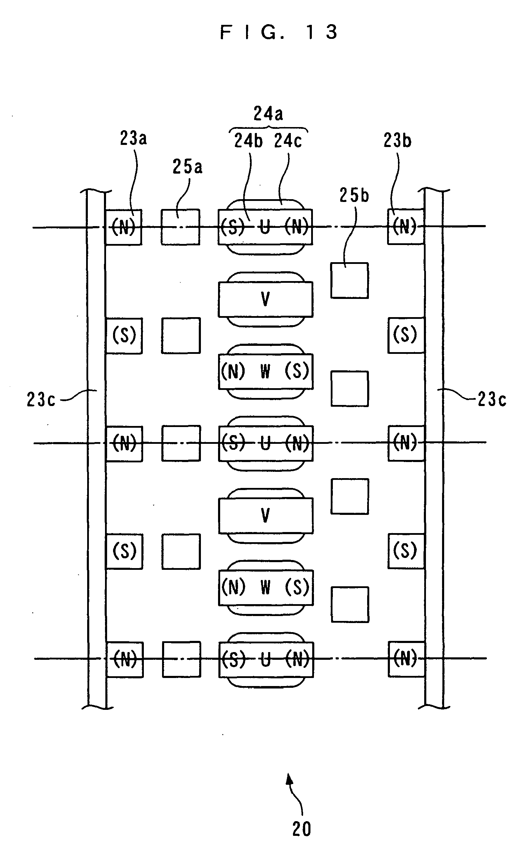

It should be noted that although in FIG. 12, the armatures 24a and the fixing portions 24e are shown as if they were each divided into two parts since FIG. 12 is shown as a development view, actually, they are a one-piece member, so that the arrangement in FIG. 12 can be shown as in FIG. 13 as equivalent thereto. It is apparent from comparison between FIG. 13 and FIG. 2 referred to hereinabove that the positional relationship between the first and second permanent magnets 23a and 23b, the armatures 24a, and the fist and second cores 25a and 25b is the same as that between the first and second electromagnets 4a and 6a, the armatures 5a, and the first and second cores 7a and 8a, described hereinabove.

For this reason, the following description of the operation of the electric motor 20 will be given assuming that the first and second permanent magnets 23a and 23b, the armatures 24a, and the first and second cores 25a and 25b are arranged as shown in FIG. 13. Further, the description of the operation of the electric motor 20 is given similarly to that of the electric motor 1 given above, by replacing the motions of the first and second rotating magnetic fields by the physical motions of the imaginary magnets 18.

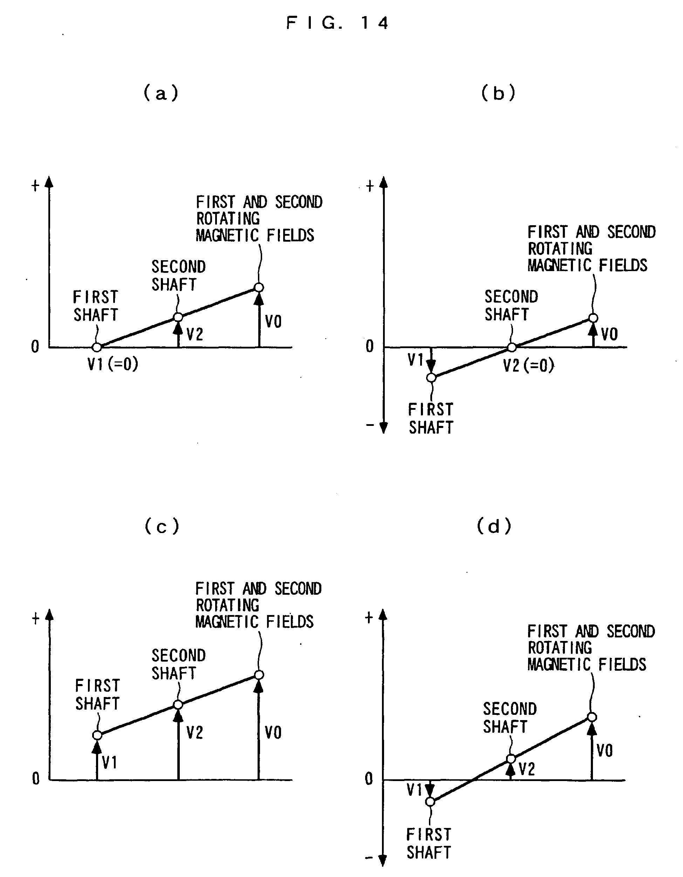

The operation of the electric motor 20 for causing the second shaft 22 to rotate with the first shaft 21 being fixed is the same as the operation of the electric motor 1 described hereinbefore with reference to FIGS. 4 and 5, and hence description thereof is omitted. It should be noted that in this case, the rotational speed of the second shaft 22 (hereinafter referred to as "the second shaft rotational speed") V2 is, similarly to the shaft 3 of the above-described electric motor 1, equal to half of the rotational speed of the first and second rotating magnetic fields (hereinafter referred to as "the magnetic field rotational speed") V0, i.e. V2 = V0/2 holds. That is, in this case, the relationship between the rotational speed of the first shaft 21 (hereinafter referred to as "the first shaft rotational speed") V1, the second shaft rotational speed V2, and the magnetic field rotational speed V0 is represented as shown in FIG. 14(a).

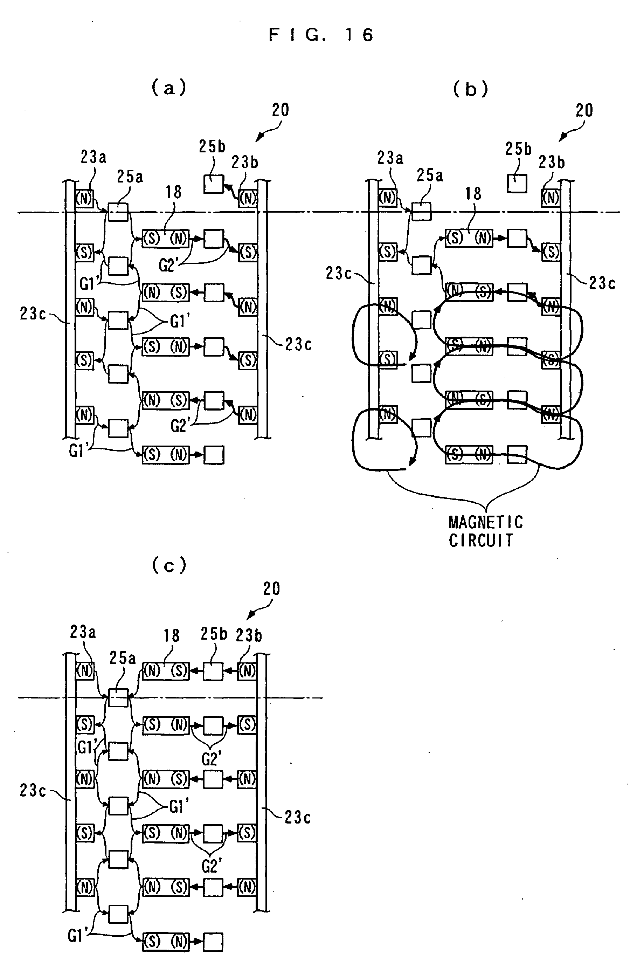

Next, referring to FIGS. 15 and 16, a description will be given of the operation of the electric motor 20 in the case of causing the first shaft 21 to rotate in a state in which the second shaft 22 is fixed. It should be noted that the following description is given regarding the magnetic poles of the imaginary magnets 18 on respective sides toward the first and second permanent magnets 23a and 23b as the first and second armature magnetic poles, and the rotating magnetic fields generated between the first armature magnetic poles and the first permanent magnet 23a and between the second armature magnetic poles and the second permanent magnet 23b, as the first and second rotating magnetic fields, respectively.

Since the first cores 25a are disposed as described above, they are magnetized by the first magnetic poles and the first armature magnetic poles, and magnetic lines of force (hereinafter referred to as "the first magnetic force lines") G1' are generated between the first magnetic poles, the first cores 25a, and the first armature magnetic poles. Similarly, since the second cores 25b are disposed as described above, they are magnetized by the second armature magnetic poles and the second magnetic poles, and magnetic lines of force (hereinafter referred to as "the second magnetic force lines") G2' are generated between the second armature magnetic poles, the second cores 25b, and the second magnetic poles.

First, as shown in FIG. 15(a), the first and second rotating magnetic fields are generated in a manner rotated downward, as viewed in the figure, from a state in which each first core 25a is opposed to each first permanent magnet 23a, and each second core 25a is in a position between each adjacent two of the second permanent magnets 23b. At the start of the generation of the first and second rotating magnetic fields, the polarity of each first armature magnetic pole is made different from the polarity of an opposed one of the first magnetic poles, and the polarity of each second armature magnetic pole is made the same as the polarity of an opposed one of the second magnetic poles.

From this state, when the imaginary magnet 18 rotates to a position shown in FIG. 15(b), the first magnetic force line G1' between the first core 25a and the first armature magnetic pole is bent, and accordingly, the second armature magnetic pole becomes closer to the second core 25b, whereby the second magnetic force line G2' connecting between the second armature magnetic pole, the second core 25b and the second magnetic pole is generated. As a result, the magnetic circuit as shown in FIG. 6(b) is formed in the first and second permanent magnets 23a and 23b, the imaginary magnet 18, and the first and second cores 25a and 25b.

In this state, although the total magnetic flux amount of the first magnetic force line G1' between the first magnetic pole and the first core 25a is large, the first magnetic force line G1' is straight, and hence no magnetic forces are generated which cause the first permanent magnet 23a to rotate with respect to the first core 25a. Further, since the distance from the second magnetic pole to the second armature magnetic pole having a different polarity than that is relatively large, the total magnetic flux amount of the second magnetic force line G2' between the second core 25b and the second magnetic pole is relatively small. However, the degree of bend of the second magnetic force lines G2 is large, magnetic forces act on the second permanent magnet 23b, so as to make the second permanent magnet 23b closer to the second core 25b. This causes the second permanent magnet 23b, together with the first permanent magnet 23a, to be driven in the direction of rotation of the imaginary magnets 18, that is, in a direction (upward, as viewed in FIG. 15) opposite to the magnetic field rotation direction, and be rotated toward a position shown in FIG. 15(c). Further, in accordance with this, the first shaft 21 rotates in an direction opposite to the magnetic field rotation direction.

During rotation of the first and second permanent magnets 23a and 23b from the position shown in FIG. 15(b) to the position shown in FIG. 15(c), the imaginary magnets 18 rotate toward a position shown in FIG. 15(d). As described above, although the second permanent magnets 23b become closer to the second cores 25b to make the degree of bend of the second magnetic force lines G2' between the second cores 25b and the second magnetic poles smaller, the imaginary magnets 18 become further closer to the second cores 25b, which increases the total magnetic flux amounts of the second magnetic force lines G2'. As a result, in this case as well, the magnetic forces act on the second permanent magnets 23b so as to make the second permanent magnets 23b closer to the second cores 25b, whereby the second permanent magnets 23b are driven, together with the first permanent magnets 23a, in the direction opposite to the magnetic field rotation direction.

Further, as the first permanent magnets 23a rotate in the direction opposite to the magnetic field rotation direction, the first magnetic force lines G1' between the first magnetic poles and the first cores 25a are bent, whereby magnetic forces act on the first permanent magnet 23a so as to make the first permanent magnet 23a closer to the first cores 25a. In this state, however, a magnetic force caused by the first magnetic force line G1' is smaller than the aforementioned magnetic force caused by the second magnetic force line G2', since the degree of bend of the first magnetic force line G1' is smaller than that of the second magnetic force line G2'. As a result, a magnetic force corresponding to the difference between the two magnetic forces drives the second permanent magnet 23b, together with the first permanent magnet 23a, in the direction opposite to the magnetic field rotation direction.

Then, as shown in FIG. 15(d), when the distance between the first magnetic pole and the first core 25a, and the distance between the second core 25b and the second magnetic pole have become approximately equal to each other, the total magnetic flux amount and the degree of bend of the first magnetic force line G1' between the first magnetic pole and the first core 25a become approximately equal to the total magnetic flux amount and the degree of bend of the second magnetic force line G2' between the second core 25b and the second magnetic pole, respectively. As a result, the magnetic forces caused by the first and second magnetic force lines G1' and G2' are approximately balanced, whereby the first and second permanent magnets 23a and 23b are temporarily placed in an undriven state.

From this state, when the imaginary magnets 18 rotate to respective positions shown in FIG. 16(a), the state of generation of the first magnetic force lines G1' is changed to form magnetic circuits as shown in FIG. 16(b). Accordingly, the magnetic forces caused by the first magnetic force lines G1' come to hardly act on the first permanent magnets 23a such that the magnetic forces make the first permanent magnets 23a closer to the first cores 25a, and therefore the second permanent magnets 23b are driven, together with the first permanent magnets 23a, by the magnetic forces caused by the second magnetic force lines G2', to respective positions shown in FIG. 16(c), in the direction opposite to the magnetic field rotation direction.

Then, when the imaginary magnets 18 slightly rotate from the position shown in FIG. 16(c), inversely to the above, the magnetic forces caused by the first magnetic force lines G1' between the first magnetic poles and the first cores 25a act on the first permanent magnets 23a so as to make the first permanent magnets 23a closer to the first cores 25a, whereby the first permanent magnets 23a are driven, together with the second permanent magnets 23b, in the direction opposite to the magnetic field rotation direction, to rotate the first shaft 21 in the direction opposite to the magnetic field rotation direction. Then, when the imaginary magnets 18 further rotate, the first permanent magnets 23a are driven, together with the second permanent magnets 23b, in the direction opposite to the magnetic field rotation direction, by respective magnetic forces corresponding to the differences between the magnetic forces caused by the first magnetic force lines G1' between the first magnetic poles and the first cores 25a, and the magnetic forces caused by the second magnetic force lines G2' between the second cores 25b and the second magnetic poles. After that, when the magnetic forces caused by the second magnetic force lines G2' come to hardly act on the second permanent magnets 23b such that the magnetic forces make the second permanent magnets 23b closer to the second cores 25b, the first permanent magnets 23a are driven, together with the second permanent magnets 23b, by the magnetic forces caused by the first magnetic force lines G1'.

As described hereinabove, in accordance with the rotations of the first and second rotating magnetic fields, the magnetic forces caused by the first magnetic force lines G1' between the first magnetic poles and the first cores 25a, the magnetic forces caused by the second magnetic force lines G2' between the second cores 25b and the second magnetic poles, and the magnetic forces corresponding to the differences between these magnetic forces alternately act on the first and second permanent magnets 23a and 23b, i.e. on the first shaft 21, whereby the first shaft 21 is rotated in the direction opposite to the magnetic field rotation direction. Further, the magnetic forces, that is, the driving forces thus act on the first shaft 21 alternately, whereby the torque of the first shaft 21 is made approximately constant.

In this case, as shown in FIG. 14(b), the first shaft 21 rotates at the same speed as that of the first and second rotating magnetic fields, in the opposite direction, and the relationship of V1 = -V0 holds. This is because the magnetic forces caused by the first and second magnetic force lines G1' and G2' act to cause the first and second permanent magnets 23a and 23b to rotate while the first and second cores 25a and 25b maintain the respective states positioned at a mid point between the first magnetic pole and the first armature magnetic pole and a mid point between the second magnetic pole and the second armature magnetic pole.

It should be noted that assuming that in a state where the first shaft 21 and the second shaft 22 are made rotatable and power is input to one of the two shafts 21 and 22, the other is caused to rotate, the magnetic field rotational speed V0, the first shaft rotational speed V1, and the second shaft rotational speed V2 satisfy the following relationship: As described above, due to the actions of the magnetic forces caused by the first and second magnetic force lines G1 and G2, the first and second cores 7a and 8a rotate, while maintaining the respective states positioned at a mid point between the first magnetic poles and the first armature magnetic poles and at a mid point between the second magnetic poles and the second armature magnetic poles. This also applies to the first and second cores 25a and 25b, similarly. Since the first and second cores 25a and 25b rotate as such, the rotational angle of the second shaft 22 integral with the both 25a and 25b is an average value of the rotational angle of the first and second rotating magnetic fields, and the rotational angle of the first and second magnetic poles, i.e. the rotational angle of the first shaft 21.

Therefore, the relationship between the magnetic field rotational speed V0, and the first and second shaft rotational speeds V1 and V2, exhibited when power is input to one of the first and second shafts 21 and 22, and the other is caused to rotate can be expressed by the following equation (3):

$$V2 = (V0 + V1)/2 \qquad \ldots (3)$$

In this case, by controlling the magnetic field rotational speed V0 and the rotational speed of one of the first and second shafts 21 and 22, it is possible to control the other. FIG. 14(c) shows an example of the case in which both of the first and second shafts 21 and 22 are rotated in the field rotating direction, and FIG. 14(d) shows an example of the case in which the first shaft 21 is rotated in the opposite direction.

As described above, according to the present embodiment, even when either of the first and second shafts 21 and 22 is rotated, the magnetized states of the first and second cores 25a and 25b vary depending on the relative rotational position of the first and second shafts 21 and 22, and hence the electric motor 20 can be caused to rotate without slippage, and functions as a synchronous motor, which makes it possible to enhance the efficiency thereof. Further, since the numbers of the first armature magnetic poles, the first magnetic poles, and the first cores 25a are set to be equal to each other, and the numbers of the second armature magnetic poles, the second magnetic poles, and the second cores 25b are set to be equal to each other, it is possible to sufficiently obtain torque of the electric motor 20 even when driving either of the first and second shafts 21 and 22.

Further, since the armatures 24a are fixed to the casing 2, differently from the case where the armatures 24a are configured to be rotatable, a slip ring for supplying electric power to the armatures 24a can be dispensed with. Therefore, the electric motor 20 can be reduced in size accordingly, and no heat is generated by contact resistance between the slip ring and a brush, which makes it possible to further increase the efficiency thereof.

Further, since the first and second permanent magnets 23a and 23b are employed, differently from the case where the electromagnets are used in place of the both 23a and 23b, similarly to the second variation of the first embodiment, the variable power supply 15 can be dispensed with, and it is possible to simplify the construction of the electric motor 20 and further reduce the size of the same. Further, for the same reason, differently from the use of the permanent magnets in place of the first and second permanent magnets 23a and 23b, the slip ring for supplying electric power to the electromagnets can be dispensed with, and it is possible to downsize the electric motor 20 by the size of eliminated slip ring, and further increase the efficiency thereof.

Further, since the general three-phase (U-phase, V-phase, and W-phase) coils 24c are used, similarly to the first embodiment, it is possible to construct the electric motor 20 easily and inexpensively without preparing special field windings. Further, the stators for generating the first and second rotating magnetic fields are formed by the single stator 24, the first and second permanent magnets 23a and 23b are mounted on the single first shaft 21, and the first and second cores 25a and 25b are mounted on the single second shaft 22. Therefore, compared with the case where the stators generating the fist and second rotating magnetic fields are formed by two stators, and the first and second permanent magnets 23a and 23b, and the first and second cores 25a and 25b are mounted on different members, it is possible to reduce the number of component parts similarly to the first embodiment, whereby it is possible to reduce the manufacturing costs and the size of the electric motor 20.

Further, the relative positional relationship between the armature 24a, the first and second electromagnets 23a and 23b, and the first and second cores 25a and 25b is determined, and based on the positional relationship, the first and second rotating magnetic fields are controlled. Further, as is apparent from FIG. 14, the magnetic field rotational speed V0 is controlled such that a collinear relationship is satisfied between the same, and the fist and second shaft rotational speeds V1 and V2. This ensures an appropriate operation of the electric motor 20.

Further, since the stator 24, the first and second rotors 23 and 25 are arranged side by side in the radial or diametrical direction, it is possible to reduce the axial size of the electric motor 20.

It should be noted that in place of the first and second permanent magnets 23a and 23b, the first and second electromagnets 4a and 6a or 4e or 6e may be used. In this case, it is possible to obtain the advantageous effects obtained by the first and second variations of the first embodiment. Further, the electric motor 20 may be configured such that the stator 24 is rotatable, and while power is input to the stator 24 and one of the first and second rotors 23 and 25, the other of the two 23 and 25 may be caused to rotate. In this case as well, the electric motor 20 functions as a synchronous motor, which make it possible to enhance the efficiency thereof.

It should be noted that although the control of the first and second rotating magnetic fields is performed based on the relative positional relationship between the armatures 24a, the first and second electromagnets 23a and 23b, and the first and second cores 25a and 25b, the control may be performed based on the relative positional relationship between arbitrary portions of the casing 2 or the stator 24, arbitrary portions of the first shaft 21 or the first rotor 23, and arbitrary portions of the second shaft 22 or the second rotor 25.

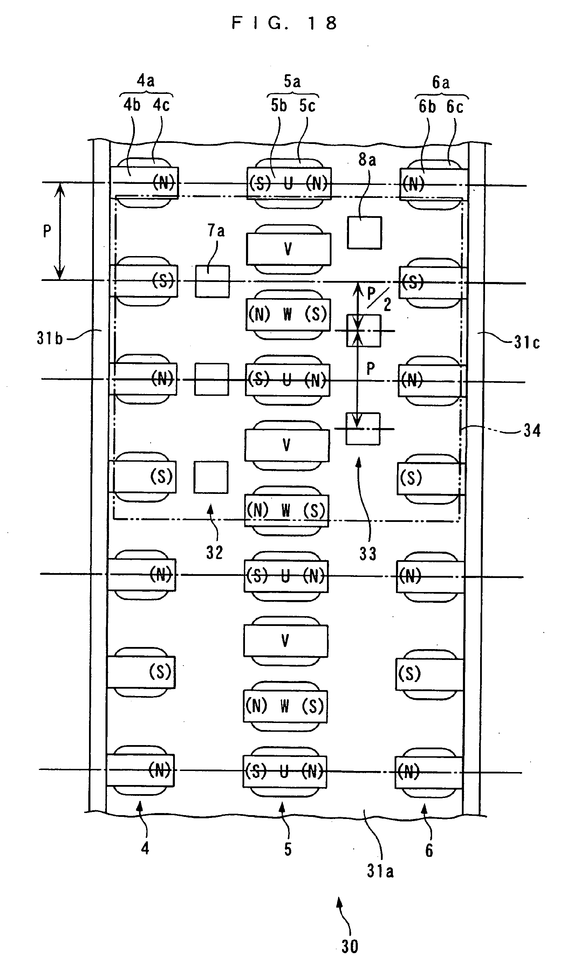

Next, an electric motor 30 according to a third embodiment of the present invention will be described with reference to FIGS. 17 and 18. As distinct from the electric motors 1 and 20 according to the first and second embodiments which are configured to be a rotating machine, the electric motor 30 is configured as a linear motor. Further, in FIGS. 17 and 18, component parts of the electric motor 30 similar to those of the electric motor 1 according to the first embodiment described above are denoted by the same reference numerals. Hereinafter, a description will be given mainly of points different from the first embodiment.

The casing 31 of the electric motor 30 includes a plate-like bottom wall 31a the longitudinal direction of which is a front-rear direction (a side remote from the viewer and a side toward the viewer as viewed in FIG. 17 are a front side and a rear side, respectively), and side walls 31b and 31c integrally formed therewith which extend upward from opposite left and right ends of the bottom wall 31a, and are opposed to each other.

As shown in FIG. 18, the armatures 5a, the first and second electromagnets 4a and 6a are arranged in the longitudinal direction, and in this point alone, the third embodiment is different from the first embodiment, but the numbers, pitch, and arrangement of these are the same as the first embodiment.

The first and second electromagnets 4a and 6a are mounted on a left end and a right end of the upper surface of the bottom wall 31a via fixing portions 4h and 6h, respectively. Further, the iron cores 4b and 6b of the both 4a and 6a are mounted on the inner surface of the side walls 31b and 31c, respectively. The armatures 5a are mounted on a central portion of the upper surface of the bottom wall 31a via a fixing portion 5e. Further, when electric power is supplied to the armatures 5a, the first and second moving magnetic fields are generated between the armatures 5a and the first stator 4 and between the armatures 5a and the third stator 6 in a manner moving in the front-rear direction.

Further, the electric motor 30 includes first and second moving elements 32 and 33 in place of the first and second rotors 7 and 8. The first and second moving elements 32 and 33 include respective pluralities of e.g. three first and second cores 7a and 8a arranged in the front-rear direction. The first and second cores 7a and 8a are alternately arranged in the front-rear direction at the same pitch as the first electromagnets 4a.

Further, on the respective bottoms of the first and second cores 7a and 8a, vehicle wheels 32a and 33a are mounted, respectively. The first and second cores 7a and 8a are placed on an upper rail (not shown) of the bottom wall 31a via the vehicle wheels 32a and 33a, whereby they are movable in the front-rear direction and immovable in the left-right direction. Further, the first and second cores 7a and 8a are connected to a movable plate 34 via connecting portions 32b and 33b provided on the upper ends thereof.

It should be noted that in the present embodiment, the casing 31 corresponds to the first, second, fourth, and fifth members, the movable plate 34 to the third and sixth members, and the first and second moving elements 32 and 33 to the first and second soft magnetic material element rows.

Further, the electric motor 30 is provided with a position sensor 50c (first relative positional relationship-detecting device and second relative positional relationship-detecting device) which delivers a detection signal indicative of the position of the movable plate 34 with respect to the casing 31 (hereinafter referred to as "the movable plate position") to he ECU 17. The ECU 17 determines the relative positional relationship between the armatures 5a and the first and second electromagnets 4a and 6a, and the first and second cores 7a and 8a, according to the detected movable plate position, and based on the positional relationship, controls the energization of the three-phase coils 5c of the armatures 5a, to thereby control the first and second moving magnetic fields. Further, the ECU 17 calculates, based on the movable plate position, the moving speed of the movable plate 34 (hereinafter referred to as "the movable plate moving speed"), and based on the calculated movable plate moving speed and the electric currents supplied to the armatures 5a and the first and second electromagnets 4a and 6a, calculates load on the electric motor 1. Further, based on the calculated load, the ECU 17 controls the electric currents supplied to the armatures 5a, and the first and second electromagnets 4a and 6a, similarly to the first embodiment.

As is apparent from comparison between FIGS. 18 and 2, the first and second electromagnets 4a and 6a, the armatures 5a, and the first and second cores 7a and 8a are arranged in the same manner as in the first embodiment. Therefore, along with generation of the first and second moving magnetic fields, the magnetic forces caused by the aforementioned first and second magnetic force lines G1 and G2 act on the movable plate 34 to cause the same to move in the moving direction of the first and second moving magnetic fields. In this case as well, depending on the movable plate position, the magnetized states of the first and second cores 7a an 8a vary, which makes it possible to cause the movable plate 34 to move without slippage, and the electric motor 30 functions as a synchronous motor, which makes it possible to enhance the efficiency thereof similarly to the first embodiment. Further, it is possible to obtain the same advantageous effects as obtained by the first embodiment.

It should be noted that the electric motor 30 can be constructed as follows: the first and second electromagnets 4a and 6a are connected by a second movable plate other than the movable plate 34, and are configured to be movable in the front-rear direction in unison with the second movable plate. Then, one of the second movable plate and the movable plate 34 may be driven as in the second embodiment. In this case, even when either of the second movable plate and the movable plate 34 is driven, similarly to the second embodiment, the electric motor functions as a synchronous motor, it is possible to enhance the efficiency thereof. Besides, the armatures 5a may be configured such that they are connected by a third movable plate, and are movable in the front-rear direction in unison with the third movable plate. In this case as well, the electric motor functions as a synchronous motor, which makes it possible to increase the efficiency thereof.

Further, in place of the first and second electromagnets 4a and 6a, the first and second electromagnets 4e and 6e or the first and second permanent magnets 4g and 6g may be used. In this case, it is possible to obtain the same advantageous effects as provided by the first and second variations of the first embodiment.

Further, although the control of the first and second moving magnetic fields is performed based on the relative positional relationship between the armatures 5a and the first and second electromagnets 4a and 6a, and the first and second cores 7a and 8a, the control may be performed based on the relative positional relationship between arbitrary portions of the casing 31 or the first to third stators 4 to 6, and arbitrary portions of the movable plate 34 or the first and second moving elements 32 and 33.

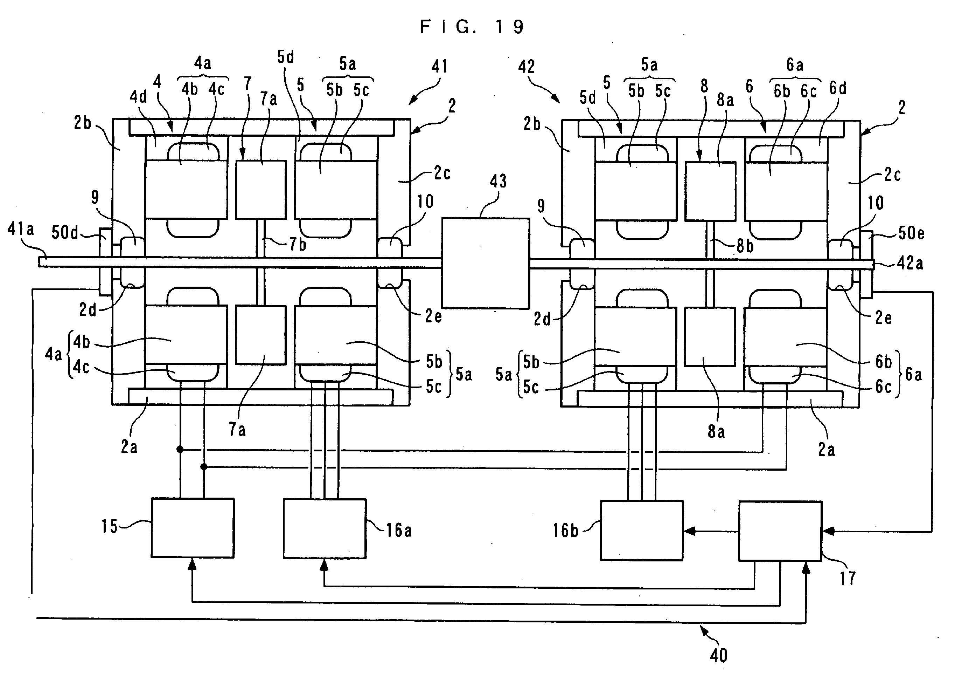

Next, an electric motor 40 according to a fourth embodiment of the present invention will be described with reference to FIG. 19. The electric motor 40 is formed by dividing the electric motor 1 according to the first embodiment into two electric motors, and connecting them by a gear mechanism. In the figure, component elements of the electric motor 40 identical to those of the first embodiment are denoted by the same reference numerals. Hereafter, a description will be given mainly of different points from the first embodiment.

The electric motor 40 is comprised of a first electric motor 41, a second electric motor 42, and a gear mechanism 43. The first electric motor 41 is formed by the component parts of the electric motor 1 according to the first embodiment except the second stator 6 and the second rotor 8, with ends of the iron cores 5c of the armatures 5a on a side opposite from the first rotor 7 being mounted on the side wall 2c. Further, the armatures 5a are connected to a first variable power supply 16a, and differently from the first embodiment, they generate only the first armature magnetic poles and the first rotating magnetic field. Further, a shaft 41a of the first electric motor 41 is connected to a gear section 43.

The second electric motor 42 is formed by the component parts of the electric motor 1 except the first stator 4 and the first rotor 7, with ends of the iron cores 5c of the armatures 5c on a side opposite from the second rotor 8 being mounted on the side wall 2b. Further, the armatures 5a are connected to a second variable power supply 16b other than the first variable power supply 16a, and generates only the second armature magnetic poles and the second rotating magnetic filed in the same direction as the rotational direction of the first rotating magnetic field. Further, the shaft 42a of the second electric motor 42 is connected to the gear section 43. Further, the armatures 5a, the second electromagnet 6a, and the second core 8a are m times as large in number and 1/m times as long in pitch as the armatures 5a, first electromagnets 4a and the first cores 7a of the first electric motor 41. The above arrangement causes the shaft 42a of the second electric motor 42 to rotate at a rotational speed 1/m times as high as the rotational speed of the shaft 41a of the first electric motor 41 in the same direction. Further, the shaft 42a of the second electric motor 42 is connected to the gear section 43.

It should be noted that in the present embodiment, the casing 2 of the first electric motor 41 corresponds to the first and second member, the casing 2 of the second electric motor 42 to the fourth and fifth members, the shafts 41a and 42a to the third and sixth members, the second stators 5 of the first and second electric motors 41 and 42 to the first and second armature rows, and the armatures 5a of the first and second electric motors 41 and 42 to the first and second armatures.

The gear section 43 is a combination of a plurality of gears, and is configured to transmit the rotation of the shaft 42a to the shaft 41a by increasing the rotational speed thereof to a m-fold.

The first and second electric motors 41 and 42 are provided with first and second rotational position sensors 50d and 50e (the first relative positional relationship-detecting device and the second relative positional relationship-detecting device), respectively. These sensors 50d and 50e deliver detection signals indicative of the rotational positions of the shafts 41a and 42a to the ECU 17. The ECU 17 determines, based on the detected rotational positions of the shafts 41a and 42a, the relative positional relationship between the first electromagnets 4a and the armatures 5a, and the first cores 7a, and the relative positional relationship between the second electromagnets 6a and the armatures 5a, and the second cores 8a, and controls, based on these positional relationships, the energization of the three-phase coils 5c of the armatures 5a, to thereby control the first and second rotating magnetic fields.

Further, the ECU 17 detects, similarly to the first embodiment, the rotational speeds of the shafts 41a and 42a, and loads on the first and second electric motors 41 and 42, and controls, based on these calculated parameters, the electric currents supplied to the armatures 5a, the first and second electromagnets 4a and 6a.

As described above, the electric motor 40 is formed by dividing the electric motor 1 according to the first embodiment into the two electric motors, i.e. the first and second electric motors 41 and 42, and connecting the two motors 41 and 42 by the gear section 43. Further, the shaft 42a of the electric motor 42 rotates at a rotational speed 1/m times as high as the rotational speed of the shaft 41a of the first electric motor 41, and the rotation of the shaft 42a is transmitted to the shaft 41a in a state increased to a m-fold by the gear section 43. From the above, the present embodiment can provide the same advantageous effects as provided by the first embodiment.

Although the second electric motor 42 is configured to rotate at a rotational speed 1/m times as high as the rotational speed of the first electric motor 41, inversely to this, the first electric motor 41 may be configured to rotate at a rotational speed 1/m times as high as the rotational speed of the second electric motor 42. Further, in place of the first and second electromagnets 4e and 6e, the first and second electromagnets 4e and 6e or the first and second permanent magnets 4g and 6g may be used. Further, it is not necessarily required to arrange the shafts 41a and 42a concentrically, but they may be arranged, for example, in a manner orthogonal to each other, and the two shafts 41a and 42a may be connected by the gear section 43.

Further, although in the present embodiment, the control of the first and second rotating magnetic fields is performed based on the relative positional relationship between the first electromagnet 4a and the armatures 5a, and the first core 7a, and the relative positional relationship between the second electromagnets 6a and the armatures 5a, and the second cores 8a, the control may be performed based on the relative positional relationship between arbitrary portions of the casing 2 or the first and second stators 4 and 5 and arbitrary portions of the shaft 41a or the first rotor 7, in the first electric motor 41, and the relative positional relationship between arbitrary portions of the casing 2 or the second and third stators 5 and 6 and arbitrary portions of the shaft 42a or the second rotor 8, in the second electric motor 42.

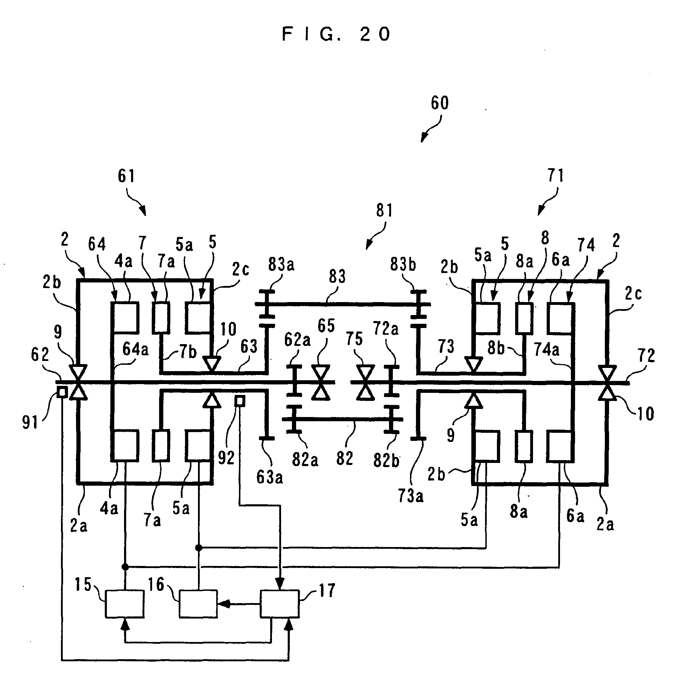

Next, an electric motor 60 according to a fifth embodiment of the present invention will be described with reference to FIG. 20. Similarly to the fourth embodiment, the electric motor 60 is formed by connecting two electric motors obtained by dividing the electric motor 1 by a gear mechanism. In the figure, component parts of the electric motor 60 similar to those of the electric motor 40 according to the fourth embodiment described above are denoted by the same reference numerals. Hereinafter, a description will be given mainly of points different from the fourth embodiment.

The electric motor 60 includes a first electric motor 61, a second electric motor 71, and a gear section 81. The first electric motor 61 is mainly distinguished from the first electric motor 41 of the fourth embodiment in that a first shaft 62 and a second shaft 63 are used in place of the shaft 41a, and the first stator 4 is replaced by a magnet rotor 64.

The first shaft 62 has opposite ends thereof rotatably supported by bearings 9 and 65, respectively, and the first shaft 62 is provided with a gear 62a. The second shaft 63 is in the form of a hollow cylinder, and is rotatably supported on a bearing 10, and concentrically rotatably fitted on the first shaft 62. Further, the second shaft 63 is provided with the aforementioned flange 7b of the first rotor 7 and a gear 63a. This makes the first core 7a rotatable in unison with the second shaft 63.

The magnet rotor 64 has a plurality of first electromagnets 4a, and the first electromagnets 4a are mounted on a flange 64a provided on the first shaft 62, such that they are arranged side by side in the circumferential direction. This makes the first electromagnets 4a rotatable in unison with the first shaft 62. Further, the number and arrangement of the first electromagnets 4a is the same as in the first embodiment. It should be noted that the first electromagnets 4a are connected to the variable power supply 15 via a slip ring (not shown).

The second electric motor 71 is formed symmetrical with the first electric motor 61, and is mainly distinguished from the second electric motor 42 of the fourth embodiment in that the shaft 42a is replaced by a first shaft 72 and a second shaft 73, that the third stator 6 is replaced by a magnet rotor 74, and that the armatures 5a and the second cores 8a are provided in respective same numbers and same arrangements as in the first embodiment.

The first shaft 72 has opposite ends thereof rotatably supported on bearings 10 and 75, respectively, and the first shaft 72 is provided with a gear 72a. The second shaft 73, which is in the form of a hollow cylinder similarly to the aforementioned second shaft 63, is rotatably supported by the bearing 9 and is rotatably fitted on the first shaft 72. Further, the second shaft 73 is provided with the aforementioned flange 8b of the second rotor 8 and a gear 73a. This makes the second cores 73a rotatable in unison with the second shaft 73.

The magnet rotor 74 includes a plurality of second electromagnets 6a, and the second electromagnets 6a are mounted on a flange 74a provided on the first shaft 72, and arranged side by side in the circumferential direction. This arrangement makes the second electromagnet 6a rotatable in unison with the first shaft 72. The number and arrangement of the second electromagnets 6a are the same as the first embodiment. It should be noted that the second electromagnets 6a are connected to the variable power supply 15 via a slip ring (not shown) similarly to the first electromagnets 4a.

The gear section 81 has first and second gear shafts 82 and 83. First and second gears 82a and 82b of the first gear shaft 82 are in mesh with respective gears 62a and 72a of the first and second shafts 62 and 72. This causes the first shafts 62 and 72 to rotate in the same direction at the same speed. Further, the first and second gears 83a and 83b of the second gear shaft 83 are in mesh with respective gears 63a and 73a of the second shafts 63 and 73. This causes the second shafts 63 and 73 to rotate in the same direction at the same speed.

Further, the first electric motor 61 is provided with first and second rotational position sensors 91 and 92 (the first relative positional relationship-detecting device and the second relative positional relationship-detecting device). The sensors 91 and 92 deliver detection signals indicative of the sensed rotational positions of the first and second shafts 62, 72, 63, and 73 to the ECU 17. Similarly to the second embodiment, the ECU 17 determines, based on the detected rotational positions, the relative positional relationship between the armatures 5a, the first and second electromagnets 4a and 6a, and the first and second cores 7a and 8a, in the first and second electric motors 61 and 71, and controls, based on the positional relationship, the energization of the three-phase coils 5c of the armatures 5a of the first and second electric motors 61 and 71, whereby the first and second rotating magnetic fields are controlled.

Although in the present embodiment, the casing 2 of the first and second electric motors 61 and 71 corresponds to the first and forth members, the first shafts 62 and 72 to the second and fifth members, and the second shafts 63 and 73 to the third and sixth members, respectively. Further, the second stators 5 of the first and second electric motors 61 and 71 correspond to the first and second armature rows, the armatures 5a of the first and second electric motors 61 and 71 to the first and second armatures, and the magnet rotors 64 and 74 to the first and second magnetic pole rows.

The electric motor 60 constructed as above is configured similarly to the second embodiment such that with either the first shafts 62 and 72 or the second shafts 63 and 73 being fixed or either of them being supplied with power, the other ones are caused to rotate. This enables the present embodiment to provide the same advantageous effects as provided by the second embodiment.

It should be noted that similarly to the fourth embodiment, one of the first and second electric motors 61 and 71 may be configured to rotate at a rotational speed 1/m times as high as the rotational speed of the other, and the gear section 81 may be configured to cause the rotation of the one to be transmitted to the other at a speed increased to a m-fold. Further, in place of the first and second electromagnets 4a and 6a, the first and second electromagnets 4e and 6e or the first and second permanent magnets 4g and 6g may be used. Further, it is not necessarily required to arrange the first and second shafts 62 and 63 and the first and second shaft 72 and 73 concentrically, but they may be arranged, for example, in a manner orthogonal to each other, and the first and second shafts 62 and 63 may be connected to the first and second shafts 72 and 73 by the gear section 81.

Further, although in the present embodiment, the control of the first and second rotating magnetic fields is performed based on the relative positional relationship between the armatures 5a, the first and second electromagnets 4a and 6a, and the first and second cores 7a and 8a, in the first and second electric motors 61 and 71, the control may be performed based on the relative positional relationship between arbitrary portions of the casings 2 or the second stators 5, arbitrary portions of the firsts shaft 62 and 72 or the magnet rotors 64 and 74, and arbitrary portions of the second shaft 63 and 73 or the first and second rotors 7 and 8, in the first and second electric motors 61 and 71.

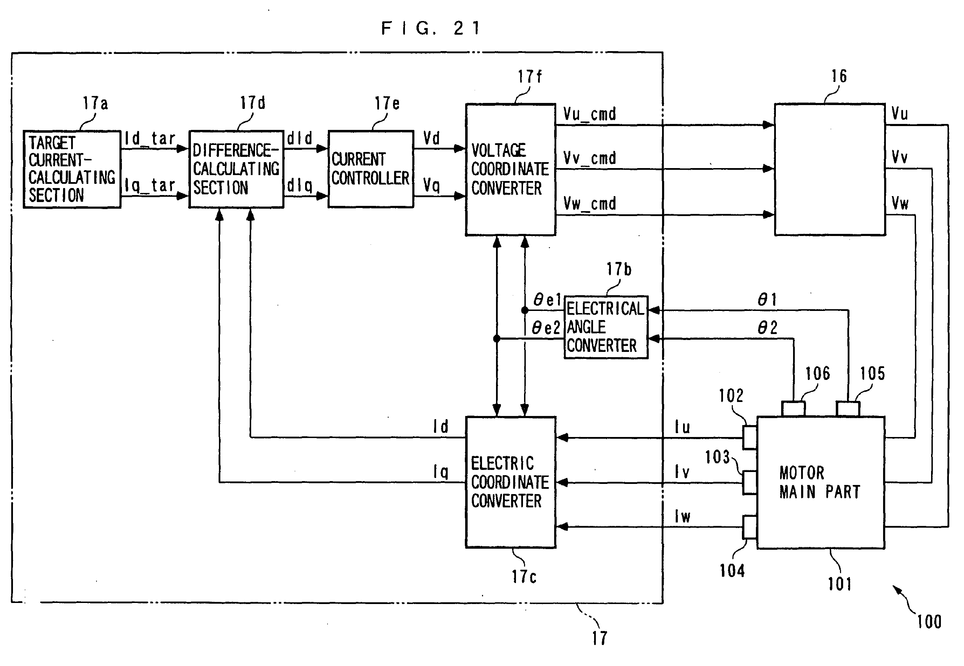

Next, an electric motor 100 according to a sixth embodiment of the present invention will be described with reference to FIG. 21. This electric motor 100 includes a motor main part 101, and the motor main part 101 has quite the same arrangement as that of the electric motor 20 according to the second embodiment described hereinabove with reference to FIG. 11 etc. In FIG. 21, component elements of the electric motor 100 which are identical to those of the second embodiment described above are denoted by the same reference numerals. Hereafter, a description will be mainly given of different points from the second embodiment. In the present embodiment, the ECU 17 corresponds to the relative positional relationship-detecting device and a control device.

As shown in FIG. 21, the motor main part 101 is provided with first to third current sensors 102 to 104, and first and second rotational position sensors 105 and 106 (relative positional relationship-detecting device). The first to third current sensors 102 to 104 deliver respective detection signals indicative of electric currents (hereinafter respectively referred to as "U-phase current Iu", "V-phase current Iv", and "W-phase current Iw") flowing through the U-phase to W-phase coils 24c of the stator 24 (see FIG. 11) to the ECU 17. Further, the first rotational position sensor 105 detects a rotational angular position (hereinafter referred to as "the first rotor rotational angle θ1") of an arbitrary one of the first permanent magnets 23a of the first rotor 23 with respect to an arbitrary one of the armatures 24a (hereinafter referred to as "the reference armature") of the stator 24, and delivers a detection signal indicative of the detected rotational angular position to the ECU 17. Further, the second rotational position sensor 106 detects a rotational angular position (hereinafter to as "the second rotor rotational angle θ2") of an arbitrary one of the first cores 25a of the second rotor 25 with respect to the reference armature, and delivers a detection signal indicative of the detected rotational angular position to the ECU 17.

The ECU 17 is responsive to the detection signals from the sensor 102 to 106, for controlling the energization of the motor main part 101, thereby controlling the first and second rotating magnetic fields generated by the above-described stator 24. This control is carried out based on a voltage equation of the motor main part 101.

The voltage equation of the motor main part 101 can be determined as follows: As compared with a general brushless DC motor of a one-rotor type, the motor main part 101 is identical in the arrangement of the stator 24, but is different in that it has not only the first rotor 23 comprised of permanent magnets but also the second rotor 25 comprised of soft magnetic material elements. From this, the voltages of the U-phase to W-phase currents Iu, Iv, and Iw are approximately the same as those of the general brushless DC motor, but counter-electromotive force voltages generated in the U-phase to W-phase coils 24c according to the rotations of the first and second rotors 23 and 25 are different from those of the general brushless DC motor.

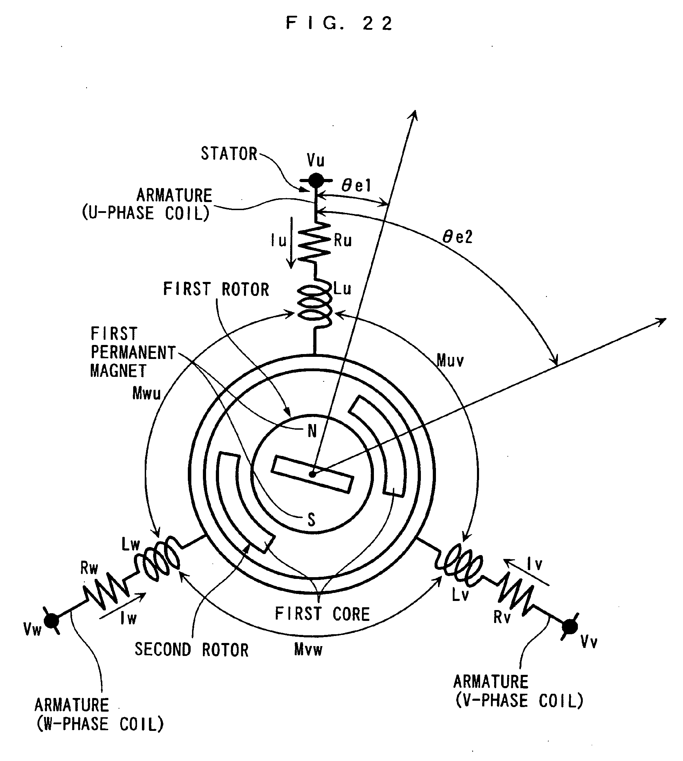

The counter-electromotive force voltage is determined as follows: FIG. 22 shows an equivalent circuit corresponding to the first permanent magnets 23a, the first cores 25a, and the stator 24. It should be noted that the figure shows a case of the number of poles being equal to 2, for convenience's sake, but the number of poles of the motor main part 101 is 2n, similarly to the electric motor 20 described hereinabove. In this case, the magnetic fluxes Ψua1, Ψva1, and Ψwa1 of the first permanent magnet 23a directly passing through the respective U-phase to W-phase coils 24c without via the first cores 25a are represented by the following equations (4) to (6):

【Math. 3】

$$\Psi ua1 = \Psi fb \cdot \cos(\theta e1) \qquad \cdots\cdots (4)$$

$$\Psi va1 = \Psi fb \cdot \cos(\theta e1 - \frac{2}{3}\pi) \qquad \cdots\cdots (5)$$

$$\Psi wa1 = \Psi fb \cdot \cos(\theta e1 + \frac{2}{3}\pi) \qquad \cdots\cdots (6)$$

Here, Ψfb represents the maximum value of magnetic flux of the first permanent magnet 23a directly passing through the coil 24c of each phase, and θe1 represents a first rotor electrical angle. The first rotor electrical angle θe1 is a value obtained by converting the first rotor rotational angle θ1 as a so-called mechanical angle to an electrical angular position, specifically a value obtained by multiplying the first rotor rotational angle θ1 by half of the number of poles.

Further, the magnetic fluxes Ψuna2, Ψva2, and Ψwa2 of the first permanent magnets 23a passing through the U-phase to W-phase coils 24c via the first cores 25a are represented by the following equations (7) to (9):

【Math. 4】

$$\Psi ua2 = \Psi fa \cdot \cos(\theta e2 - \theta e1)\cos(\theta e2) \qquad \cdots\cdots (7)$$

$$\Psi va2 = \Psi fa \cdot \cos(\theta e2 - \theta e1)\cos(\theta e2 - \tfrac{2}{3}\pi) \qquad \cdots\cdots (8)$$

$$\Psi wa2 = \Psi fa \cdot \cos(\theta e2 - \theta e1)\cos(\theta e2 + \tfrac{2}{3}\pi) \qquad \cdots\cdots (9)$$

Here, $\Psi fa$ represents the maximum value of magnetic flux of the first permanent magnet 23a passing through the coil 24c of each phase via the first core 25a, and $\theta e2$ represents a second rotor electrical angle. The second rotor electrical angle $\theta e2$ is a value obtained, similarly to the first rotor electrical angle $\theta e1$, by converting the second rotor rotational angle $\theta2$ as a mechanical angle to an electrical angular position, specifically a value obtained by multiplying the second rotor rotational angle $\theta2$ by half of the number of poles.

The magnetic fluxes $\Psi ua$, $\Psi va$, and $\Psi wa$ of the first permanent magnets 23a passing though the U-phase to W-phase coils 24c, respectively, are represented by the sum of the magnetic fluxes $\Psi ua1$, $\Psi va1$, and $\Psi a1$ directly passing though the above-mentioned U-phase to W-phase coils 24c, respectively, and the magnetic fluxes $\Psi ua2$, $\Psi va2$, and $\Psi wa2$ passing though the U-phase to W-phase coils 24c, respectively, via the first cores 25a, i.e. ($\Psi ua1 + \Psi ua2$), ($\Psi va1 + \Psi va2$), and ($\Psi wa1 + \Psi wa2$), respectively. Therefore, from the aforementioned equations (4) to (9), these magnetic fluxes $\Psi ua$, $\Psi va$, and $\Psi wa$ are represented by the following equations (10) to (12):

【Math. 5】

$$\Psi ua = \Psi fa \cdot \cos(\theta e2 - \theta e1)\cos(\theta e2) + \Psi fb \cdot \cos(\theta e1) \qquad \cdots\cdots (10)$$

$$\Psi va = \Psi fa \cdot \cos(\theta e2 - \theta e1)\cos(\theta e2 - \tfrac{2}{3}\pi) + \Psi fb \cdot \cos(\theta e1 - \tfrac{2}{3}\pi)$$
$$\cdots\cdots (11)$$

$$\Psi wa = \Psi fa \cdot \cos(\theta e2 - \theta e1)\cos(\theta e2 + \tfrac{2}{3}\pi) + \Psi fb \cdot \cos(\theta e1 + \tfrac{2}{3}\pi)$$
$$\cdots\cdots (12)$$

Further, the transformation of these equations (10) to (12) gives the following equations (13) to (15):

【Math. 6】

$$\Psi ua = \frac{\Psi fa}{2}[\cos(2\theta e2 - \theta e1) + \cos(-\theta e1)] + \Psi fb \cdot \cos(\theta e1) \qquad \cdots\cdots (13)$$

$$\Psi va = \frac{\Psi fa}{2}[\cos(2\theta e2 - \theta e1 - \tfrac{2}{3}\pi) + \cos(-\theta e1 + \tfrac{2}{3}\pi)] + \Psi fb \cdot \cos(\theta e1 - \tfrac{2}{3}\pi)$$
$$\cdots\cdots (14)$$

$$\Psi wa = \frac{\Psi fa}{2}[\cos(2\theta e2 - \theta e1 + \tfrac{2}{3}\pi) + \cos(-\theta e1 - \tfrac{2}{3}\pi)] + \Psi fb \cdot \cos(\theta e1 + \tfrac{2}{3}\pi)$$
$$\cdots\cdots (15)$$

Further, by differentiating the magnetic fluxes $\Psi ua$, $\Psi va$, and $\Psi wa$ passing through the U-phase to W-phase coils 24c with respect to time, it is possible to obtain the counter-electromotive force voltages generated in the U-phase to W-phase coils 24c according to the rotation of the first permanent magnets 23a and/or the first cores 25a (hereinafter respectively referred to as "the first U-phase counter-electromotive force voltage Vcu1", "the first V-phase counter-electromotive force voltage Vcv1" and "the first W-phase counter-electromotive force voltage Vcw1"), respectively. Therefore, the first U-phase to W-phase counter-electromotive force voltages Vcu1, Vcv1, and Vcw1 can be expressed by the following equations (16) to (18) obtained by differentiating the equations (13) to (15) with respect to time, respectively.

【Math. 7】

$$Vcu1 = -(2\omega e2 - \omega e1)\frac{\Psi fa}{2} \cdot \sin(2\theta e2 - \theta e1) - \omega e1 (\frac{\Psi fa}{2} + \Psi fb)\sin(\theta e1)$$
$$\cdots\cdots (16)$$

$$Vcv1 = -(2\omega e2 - \omega e1)\frac{\Psi fa}{2} \cdot \sin(2\theta e2 - \theta e1 - \frac{2}{3}\pi)$$
$$- \omega e1 (\frac{\Psi fa}{2} + \Psi fb)\sin(\theta e1 - \frac{2}{3}\pi) \qquad \cdots\cdots (17)$$

$$Vcw1 = -(2\omega e2 - \omega e1)\frac{\Psi fa}{2} \cdot \sin(2\theta e2 - \theta e1 + \frac{2}{3}\pi)$$
$$- \omega e1 (\frac{\Psi fa}{2} + \Psi fb)\sin(\theta e1 + \frac{2}{3}\pi) \qquad \cdots\cdots (18)$$

Here, $\omega e2$ represents a value obtained by differentiating $\theta e2$ with respect to time, i.e. a value obtained by converting the angular velocity of the second rotor 25 to an electrical angular velocity (hereinafter referred to as "the second rotor electrical angular velocity"), and $\omega e1$ represents a value obtained by differentiating $\theta e1$ with respect to time, i.e. a value obtained by converting the angular velocity of the first rotor 23 to an electrical angular velocity (hereinafter referred to as "the first rotor electrical angular velocity").

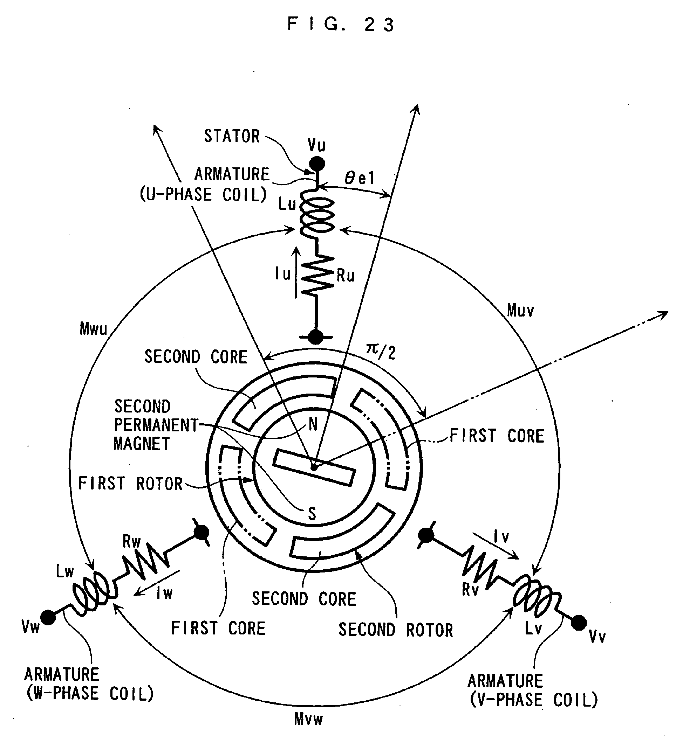

Further, FIG. 23 shows an equivalent circuit corresponding to the second permanent magnets 23b, the second cores 25b, and the stator 24. In this case, the counter-electromotive force voltage generated in the U-phase to W-phase coils 24c according to the rotation of the second permanent magnet 23b and/or the second core 25b can be determined, similarly to the case of the first permanent magnet 23a and the first core 25a, in the following manner: Hereinafter, the counter-electromotive force voltages generated in the U-phase to W-phase coils 24c are referred to as "the second U-phase counter-electromotive force voltage Vcu2", "the second V-phase counter-electromotive force voltage Vcv2", and "the second W-phase counter-electromotive force voltage Vcw2", respectively.

More specifically, the first permanent magnet 23a and the second permanent magnet 23b are a one-piece member, as mentioned hereinabove, and hence the maximum value of the magnetic flux of the second permanent magnet 23b directly passing through the coil 24c of each phase is equal to the maximum value of the magnetic flux of the first permanent magnet 23a directly passing through the coil 24c of each phase, and at the same time, the maximum value of the magnetic flux of the second permanent magnet 23b passing through the coil 24c of each phase via the second core 25b is equal to the maximum value of the magnetic flux of the first permanent magnet 23a passing through the coil 24c of each phase via the first core 25a. Further, as described hereinabove, the second cores 25b are circumferentially arranged in a staggered manner with respect to the first cores 25a, and the center of each second core 25b is displaced from the center of each first core 25a by half of the predetermined angle $\theta$. That is, the electrical angular positions of the first and second cores 25a and 25b are different from each other by an electrical angle of $\pi/2$ (see FIG. 23).

From the above, the magnetic fluxes $\Psi ub$, $\Psi vb$, and $\Psi wb$ of the second permanent magnet 23b passing through the U-phase to W-phase coils 24c (i.e. the sum of magnetic fluxes passing via the second cores 25 and those passing without via the second cores 25), respectively, can be expressed by the following equations (19) to (21):

【Math. 8】

$$\Psi ub = \Psi fa \cdot \sin(\theta e2 - \theta e1)\sin(\theta e2) + \Psi fb \cdot \cos(\theta e1) \quad \cdots\cdots (19)$$

$$\Psi vb = \Psi fa \cdot \sin(\theta e2 - \theta e1)\sin(\theta e2 - \frac{2}{3}\pi) + \Psi fb \cdot \cos(\theta e1 - \frac{2}{3}\pi)$$
$$\cdots\cdots (20)$$

$$\Psi wb = \Psi fa \cdot \sin(\theta e2 - \theta e1)\sin(\theta e2 + \frac{2}{3}\pi) + \Psi fb \cdot \cos(\theta e1 + \frac{2}{3}\pi)$$
$$\cdots\cdots (21)$$

Changes of these equations give the following equations (22) to (24):

【Math. 9】

$$\Psi ub = -\frac{\Psi fa}{2}[\cos(2\theta e2 - \theta e1) - \cos(-\theta e1)] + \Psi fb \cdot \cos(\theta e1) \quad \cdots\cdots (22)$$

$$\Psi vb = -\frac{\Psi fa}{2}[\cos(2\theta e2 - \theta e1 - \frac{2}{3}\pi) - \cos(-\theta e1 + \frac{2}{3}\pi)] + \Psi fb \cdot \cos(\theta e1 - \frac{2}{3}\pi)$$
$$\cdots\cdots (23)$$

$$\Psi wb = -\frac{\Psi fa}{2}[\cos(2\theta e2 - \theta e1 + \frac{2}{3}\pi) - \cos(-\theta e1 - \frac{2}{3}\pi)] + \Psi fb \cdot \cos(\theta e1 + \frac{2}{3}\pi)$$
$$\cdots\cdots (24)$$

Further, by differentiating the magnetic fluxes Ψub, Ψvb, and Ψwb passing through the respective U-phase to W-phase coils 24c with respect to time, it is possible to obtain the aforementioned second U-phase to W-phase counter-electromotive force voltages Vcu2, Vcv2 and Vcw2. Therefore, these counter-electromotive force voltages Vcu2, Vcv2 and Vcw2 can be expressed by the following equations (25) to (27) obtained by differentiating the equations (22) to (24) with respect to time, respectiely:

【Math. 10】

$$Vcu2 = (2\omega e2 - \omega e1)\frac{\Psi fa}{2} \cdot \sin(2\theta e2 - \theta e1) - \omega e1(\frac{\Psi fa}{2} + \Psi fb)\sin(\theta e1)$$
$$\cdots\cdots (25)$$

$$Vcv2 = (2\omega e2 - \omega e1)\frac{\Psi fa}{2} \cdot \sin(2\theta e2 - \theta e1 - \frac{2}{3}\pi)$$
$$-\omega e1(\frac{\Psi fa}{2} + \Psi fb)\sin(\theta e1 - \frac{2}{3}\pi) \quad \cdots\cdots (26)$$

$$Vcw2 = (2\omega e2 - \omega e1)\frac{\Psi fa}{2} \cdot \sin(2\theta e2 - \theta e1 + \frac{2}{3}\pi)$$
$$-\omega e1(\frac{\Psi fa}{2} + \Psi fb)\sin(\theta e1 + \frac{2}{3}\pi) \quad \cdots\cdots (27)$$

Further, as described above, the stator 24 is configured such that magnetic poles having different polarities from each other are generated at ends of each iron core 24b toward the first and second permanent magnets 23a and 23b. Further, out of the first and second permanent magnets 23a and 23b, ones disposed side by side in the axial direction have the same polarity. As is clear from the above, the electrical angular positions of the first and second permanent magnets 23a and 23b in the side-by-side axial arrangement with respect to the aforementioned reference armature are displaced from each other by an electrical angle of $\pi$. Therefore, the counter-electromotive force voltages Vcu, Vcv, and Vcw generated at the U-phase to W-phase coils 24c according to the rotations of the first and/or second rotors 23, 25 are equal to the respective differences between the aforementioned first U-phase to W-phase counter-electromotive force voltages Vcu1, Vcv1, and Vcw1 and the second U-phase to W-phase counter-electromotive force voltages Vcu2, Vcv2 and Vcw2, i.e. (Vcua - Vcub), (Vcva - Vcvb) and (Vcwa - Vcwb), respectively. Therefore, from the equations (16) to (18) and the equations (25) to (27), these counter-electromotive force voltages Vcu, Vcv, and Vcw can be represented by the following equations (28) to (30):

【Math. 11】

$$Vcu = -(2\omega e2 - \omega e1)\,\Psi fa \cdot \sin(2\theta e2 - \theta e1) \qquad \cdots\cdots (28)$$

$$Vcv = -(2\omega e2 - \omega e1)\,\Psi fa \cdot \sin(2\theta e2 - \theta e1 - \tfrac{2}{3}\pi) \qquad \cdots\cdots (29)$$

$$Vcw = -(2\omega e2 - \omega e1)\,\Psi fa \cdot \sin(2\theta e2 - \theta e1 + \tfrac{2}{3}\pi) \qquad \cdots\cdots (30)$$

Now, the voltages of the U-phase to W-phase coils 24c (hereinafter referred to as "the U-phase voltage Vu", "the V-phase voltage Vu", and "the W-phase voltage Vw) are represented by the respective sums of voltages of the U-phase to W-phase currents Iu, Iv, and Iw, and the respective counter-electromotive force voltages Vcu, Vcv, and Vcw of the U-phase to W-phase coils 24c. Therefore, the voltage equation of the motor main part 101 is represented by the following equation (31):

【Math. 12】

$$
\begin{bmatrix} Vu \\ Vv \\ Vw \end{bmatrix} =
\begin{bmatrix} Ru+s\cdot Lu & s\cdot Muv & s\cdot Mwu \\ s\cdot Muv & Rv+s\cdot Lv & s\cdot Mvw \\ s\cdot Mwu & s\cdot Mvw & Rw+s\cdot Lw \end{bmatrix}
\begin{bmatrix} Iu \\ Iv \\ Iw \end{bmatrix} -
\begin{bmatrix} (2\omega e2-\omega e1)\,\Psi fa\cdot\sin(2\theta e2-\theta e1) \\ (2\omega e2-\omega e1)\,\Psi fa\cdot\sin(2\theta e2-\theta e1-\tfrac{2}{3}\pi) \\ (2\omega e2-\omega e1)\,\Psi fa\cdot\sin(2\theta e2-\theta e1+\tfrac{2}{3}\pi) \end{bmatrix}
$$

$$\cdots\cdots (31)$$

Here, as described above, Ru, Rv, and Rw represent respective resistances of the U-phase to W-phase coils 24c, and Lu, Lv, and Lw represent respective self-inductances of the U-phase to W-phase coils 24c, each having a predetermined value. Further, Muv, Mvw, and Mwu represent respective mutual inductances between the U-phase coil 24c and the V-phase coil 24c, between the V-phase coil 24c and the W-phase coil 24c, and between the W-phase coil 24c and the U-phase coil 24c, each having a predetermined value. Further, s represents a differential operator.

On the other hand, as described hereinabove, the voltage equation of the general brushless DC motor is represented by the equation (2). As is clear from comparison between the above equation (31) and the equation (2), the voltage equation of the motor main part 101 becomes the same as that of the general brushless DC motor, when (2θe2 - θe1) and (2ωe2 - ωe1) are replaced by the electrical angular positions θe and electrical angular velocities we of the rotor, respectively. From this, it is understood that to cause the motor main part 101 to operate, it is only required to control the electrical angular positions of the vectors of the first and second rotating magnetic fields to electric motor angular positions represented by (2θe2 - θe1). Further, this holds true irrespective of the number of poles and the number of phases of the coils 24c, and similarly holds true in the above-described electric motor 30 according to the third embodiment which is configured as a linear motor.

Based on the above points of view, the ECU 17 controls the first and second rotating magnetic fields. More specifically, as shown in FIG. 21, the ECU 17 includes a target current-calculating section 17a, an electrical angle converter 17b, a current coordinate converter 17c, a difference-calculating section 17d, a current controller 17e, and a voltage coordinate converter 17f, and controls the currents Iu, Iv, and Iw of the U phase to W phase by vector control, to thereby control the first and second rotating magnetic fields.

The target current-calculating section 17a calculates respective target values of d-axis current Id and q-axis current Iq (hereinafter referred to as "the target d-axis current Id_tar" and "the target q-axis current Iq_tar"), referred to hereinafter, and delivers the calculated target d-axis current Id and target q-axis current Iq to the difference-calculating section 17d. It should be noted that these target d-axis current Id and the target q-axis current Iq are calculated e.g. according to load on the motor main part 101.

The first and second rotor rotational angles θ1 and θ2 detected by the first and second rotational position sensors 105 and 106 are input to the electrical angle converter 17b. The electrical angle converter 17b calculates the first and second rotor electrical angles θe1 and θe2 by multiplying the input first and second rotor rotational angles θ1 and θ2 by half of the number of poles, and delivers the calculated first and second rotor electrical angles θe1 and θe2 to the current coordinate converter 17c and the voltage coordinate converter 17f.

In addition to the first and second rotor electrical angles θe1 and θe2, the U-phase to W-phase currents Iu, Iv, and Iw calculated by the first to third current sensors 102 to 104, respectively, are input to the current coordinate converter 17c. The current coordinate converter 17c converts the input U-phase to W-phase currents Iu, Iv, and Iw on a three-phase AC coordinate system into the d-axis current Id and the q-axis current Iq on a dq coordinate system, based on the first and second rotor electrical angles θe1 and θe2. The dg coordinate system rotates at (2ωe2 - ωe1), with (2θe2 - θe1) as the d axis, and an axis orthogonal to the d axis as the q axis. More specifically, the d-axis current Id and the q-axis current Iq are calculated by the following equation (32):

【Math. 13】

$$
\begin{bmatrix} Id \\ Iq \end{bmatrix} = \sqrt{\frac{2}{3}} \begin{bmatrix} \cos(2\theta e2 - \theta e1) & \cos(2\theta e2 - \theta e1 - \frac{2}{3}\pi) & \cos(2\theta e2 - \theta e1 + \frac{2}{3}\pi) \\ -\sin(2\theta e2 - \theta e1) & -\sin(2\theta e2 - \theta e1 - \frac{2}{3}\pi) & -\sin(2\theta e2 - \theta e1 + \frac{2}{3}\pi) \end{bmatrix} \begin{bmatrix} Iu \\ Iv \\ Iw \end{bmatrix}
$$

$$\cdots\cdots (32)$$

Further, the current coordinate converter 17c delivers the calculated d-axis current Id and q-axis current Iq to the difference calculating-section 17d.

The difference-calculating section 17d calculates the difference between the input target d-axis current Id_tar and d-axis current Id (hereinafter referred to as "the d-axis current difference dId"), and calculates the difference between the input target q-axis current Iq_tar and q-axis current Iq (hereinafter referred to as "the q-axis current difference dIq"). Further, the difference calculating-section 17d delivers the calculated d-axis current difference dId and q-axis current difference dIq to the current controller 17e.

The current controller 17e calculates a d-axis voltage Vd and a q-axis voltage Vq based on the input d-axis voltage difference dId and q-axis current difference dIq with a predetermined feedback control algorithm, e.g. a PI control algorithm. This causes the d-axis voltage Vd to be calculated such that the d-axis current Id becomes equal to the target d-axis current Id_tar, and the q-axis voltage Vq to be calculated such that the q-axis current Iq becomes equal to the target q-axis current Iq_tar. Further, the current controller 17e delivers the calculated d-axis and q-axis voltages Vd and Vq to the voltage coordinate converter 17f.

The voltage coordinate converter 17f converts the input d-axis voltage Vd and q-axis voltage Vq to command values of the U-phase to W-phase voltages Vu, Vv, and Vw on the three-phase AC coordinate system (hereinafter referred to as "the U-phase voltage command value Vu_cmd", "the V-phase voltage command value Vv_cmd", and "the W-phase voltage command value Vw_cmd") based on the input first and second rotor electrical angles θe1 and θe2. More specifically, the U-phase to W-phase voltage command values Vu_cmd, Vv_cmd, and Vw_cmd are calculated by the following equation (33):

【Math. 14】

$$\begin{bmatrix} Vu\_cmd \\ Vv\_cmd \\ Vw\_cmd \end{bmatrix} = \sqrt{\frac{2}{3}} \begin{bmatrix} \cos(2\theta e2 - \theta e1) & -\sin(2\theta e2 - \theta e1) \\ \cos(2\theta e2 - \theta e1 - \frac{2}{3}\pi) & -\sin(2\theta e2 - \theta e1 - \frac{2}{3}\pi) \\ \cos(2\theta e2 - \theta e1 + \frac{2}{3}\pi) & -\sin(2\theta e2 - \theta e1 + \frac{2}{3}\pi) \end{bmatrix} \begin{bmatrix} Vd \\ Vq \end{bmatrix}$$

$$\cdots\cdots (33)$$

Further, the voltage coordinate converter 17f delivers the calculated U-phase to W-phase voltage command values Vu_cmd, Vv_cmd, and Vw_cmd to the aforementioned variable power supply 16.

In accordance therewith, the variable power supply 16 applies the U-phase to W-phase voltages Vu, Vv, and Vw to the motor main part 101 such that the U-phase to W-phase voltages Vu, Vv, and Vw become equal to the respective U-phase to W-phase voltage command values Vu_cmd, Vv_cmd, and Vw_cmd, respectively, whereby the U-phase to W-phase currents Iu to Iw are controlled. In this case, these currents Iu to Iw are represented by the following equations (34) to (36), respectively:

【Math. 15】

$$Iu = I \cdot \sin(2\theta e2 - \theta e1) \qquad\qquad \cdots\cdots (34)$$

$$Iv = I \cdot \sin(2\theta e2 - \theta e1 - \frac{2}{3}\pi) \qquad\qquad \cdots\cdots (35)$$

$$Iw = I \cdot \sin(2\theta e2 - \theta e1 + \frac{2}{3}\pi) \qquad\qquad \cdots\cdots (36)$$

Here, I represents an amplitude of electric current of each phase determined based on the target d-axis current Id_tar and the target q-axis current Id_tar.

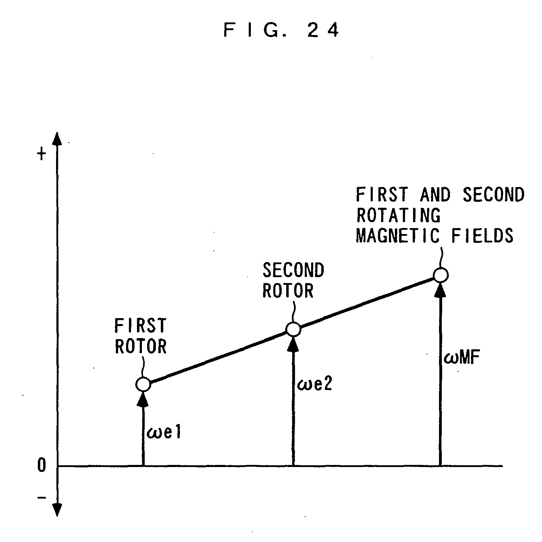

Through the current control described above, the electrical angular positions of the vectors of the first and second rotating magnetic fields are controlled to the electrical angular positions represented by (2θe2 - θe1), and the electrical angular velocities of the first and second rotating magnetic fields (hereinafter referred to as "the magnetic field electrical angular velocity ωMF") is controlled to the electrical angular velocity represented by (2ωe2 - ωe1). As a result, the relationship between the magnetic field electrical angular velocity ωMF, and the first and second rotor electrical angular velocities ωe1 and ωe2 is represented by the following equation (37), and is illustrated e.g. as in FIG. 24 which shows that the relationship is a collinear relationship.

【Math. 16】

$$\omega e2 = \frac{(\omega MF + \omega e1)}{2} \qquad\qquad \cdots\cdots (37)$$

Further, the mechanical output W generated by the flowing of the U-phase to W-phase currents Iu, Iv, and Iw is represented by the following equation (38), provided that an reluctance-associated portion is excluded therefrom.

【Math. 17】

$$W = Vcu \cdot Iu + Vcv \cdot Iv + Vcw \cdot Iw \qquad\qquad \cdots\cdots (38)$$

When the equations (28) to (30) and (34) to (36) are substituted into this equation (38) and then rearranged, the following equation (39) is obtained.

【Math. 18】

$$W = \omega e1 \left( -\frac{3}{2} \cdot \Psi fa \cdot I \right) + \omega e2 \left( 2 \cdot \frac{3}{2} \cdot \Psi fa \cdot I \right) \qquad \cdots\cdots (39)$$

The relationship between this mechanical output W, the respective torques of the first and second rotors 23 and 25 (hereinafter referred to as "the first rotor torque T1" and "the second rotor torque T2"), and the first and second rotor electrical angular velocities $\omega e1$ and $\omega e2$ is represented by the following equation (40) :

【Math. 19】

$$W = \omega e1 \cdot T1 + \omega e2 \cdot T2 \qquad \cdots\cdots (40)$$

As is apparent from these equations (39) and (40), the first and second rotor torques T1 and T2 are represented by the following equations (41) and (42), respectively:

【Math. 20】

$$T1 = -\frac{3}{2} \cdot \Psi fa \cdot I \qquad \cdots\cdots (41)$$

$$T2 = 2 \cdot \frac{3}{2} \cdot \Psi fa \cdot I \qquad \cdots\cdots (42)$$

In short, between the first rotor torque T1 and the second rotor torque T2, there holds the relationship of |T1| : |T2| = 1 : 2.

Further, during constant speed control in which the first and second rotor electrical angular velocities $\omega e1$ and $\omega e2$ are both controlled to be constant, the magnetic field electrical angular velocity $\omega F$ is controlled to an electrical angular velocity represented by $(2 \cdot \omega e2REF - \omega e1REF)$ without detecting the first and second rotor rotational angles $\theta 1$ and $\theta 2$ and the first and second rotor electrical angular velocities $\omega e1$ and $\omega e2$. Here, $\omega e2REF$ is a predetermined value of the second rotor electrical angular velocity $\omega e2$, and $\omega e1REF$ is a predetermined value of the first rotor electrical angular velocity $\omega e1$.

As described heretofore, according to the present embodiment, the electrical angular positions of the vectors of the first and second rotating magnetic fields are controlled to the electrical angular positions represented by $(2\theta e2 - \theta e1)$, and the magnetic field electrical angular velocity $\omega MF$ is controlled such that it satisfies a collinear relationship with the first and second rotor electrical angular velocities $\omega e1$ and $\omega e2$. Therefore, it is possible to ensure an appropriate operation of the motor main part 101. Further, it is only required to detect the rotational angular positions of only the first permanent magnets 23a and the first cores 25a, and hence compared with the case where the rotational angular positions of the first and second permanent magnets 23a and 23b and the first and second cores 25a and 25b are detected by respective separate sensors, it is possible to reduce the number of component parts to thereby reduce manufacturing costs, and reduce the size of the electric motor 100.

Further, as a map for use in control of torque and rotational speeds of the electric motor 100, it is only required to empirically determine a map indicative of the relationship between $(2\omega e2 - \omega e1)$, torque, and voltage, and control the first and second rotating magnetic fields according to the map. Therefore, it is not necessary to prepare a map for each of the first and second rotors 23 and 25, and at the same time, it is very easy to perform the control. Further, it is possible to reduce the memory of the ECU 17 and computation load.

It should be noted that the control method according to the present embodiment can also be applied to the electric motors 1, 20, 30, 40, and 60 according to the first to fifth embodiments. First, in the case of the electric motor 1 according to the first embodiment, the first and second rotating magnetic fields are only required to be controlled in the following manner: The electrical angular position of the first core 7a with respect to the reference armature is detected e.g. using a sensor, and is used as the second rotor electrical angle $\theta$e2. Further, since the first and second electromagnets 4a and 6a associated with the first and second permanent magnets 23a and 23b are fixed to the aforementioned positions, it is only required to set the first rotor electrical angle $\theta$e1 to 0, control the electrical angular positions of the vectors of the first and second rotating magnetic fields to electrical angular positions represented by 2$\theta$e2, and control the magnetic field electrical angular velocity $\omega$MF to an electrical angular velocity represented by 2$\omega$e2. In the case of the second embodiment, it is quite the same as in the present embodiment, and hence description thereof is omitted.

In the case of the electric motor 30 according to the third embodiment, similarly to the first embodiment described above, it is only required to detect the electrical angular position of the first core 7a with respect to the reference armature e.g. using a sensor, use the same as the second rotor electrical angle $\theta$e2 to thereby control the electrical angular positions of the vectors of the first and second moving magnetic fields to electrical angular positions represented by 2$\theta$e2, and control the electrical angular velocity of the first and second moving magnetic fields to an electrical angular velocity represented by 2$\omega$e2. Further, if the first and second electromagnets 4a and 6a are configured to be movable in unison with the second movable plate, in the third embodiment, as described hereinabove, it is only required to detect the electrical angular position of the first electromagnet 4a with respect to the reference armature, use the same as the first rotor electrical angle $\theta$e1 to thereby control the electrical angular positions of the vectors of the first and second moving magnetic fields to electrical angular positions represented by (2$\theta$e2 - $\theta$e1), and control the electrical angular velocity of the first and second moving magnetic fields to an electrical angular velocity represented by (2$\omega$e2 - $\omega$e1).

In the case of the electric motor 40 according to the fourth embodiment, the first and second electromagnets 4a and 6a are fixed to the aforementioned positions, and hence similarly to the first embodiment, the first rotor electrical angle $\theta$e1 is set to 0. Further, although the electric motor 40 is divided into the first and second electric motors 41 and 42, the number of poles of the latter is an m-fold of the number of poles of the former, and therefore, the fact that the electrical angular position of the first core 7a with respect to the armature 5a of the first electric motor 41 and the electrical angular position of the second core 8a with respect to the armature 5a of the second electric motor 42 are displaced from each other by an electrical angle of $\pi$/2 is the same as in the first embodiment. Therefore, it is only required to detect the electrical angular position of the first core 7a e.g. using a sensor, use the same as the second rotor electrical angle $\theta$e2, and control the first and second rotating magnetic fields in the same manner as in the first embodiment.

Further, differently from the fourth embodiment, the electric motor 60 according to the fifth embodiment is configured such that the first and second electromagnets 4a and 6a are rotatable, but the numbers and locations thereof are similar to those in the first embodiment. Therefore, the electrical angular position of the first electromagnet 4a with respect to the armature 5a of the first electric motor 61 and the electrical angular position of the second electromagnet 6a with respect to the armature 5a of the second electric motor 71 are identical to each other. From the above, in the case of this electric motor 60, it is only required to detect the electrical angular position of the first electromagnet 4a, use the same as the first rotor electrical angle $\theta$e1, detect the electrical angular position of the first core 7a e.g. using a sensor, use the same as the second rotor electrical angle $\theta$e2, and control the first and second rotating magnetic fields in the same manner as in the second embodiment.

It should be noted although in the present embodiment, as the first rotor rotational angle $\theta$1, the rotational angular position of the first permanent magnet 23a with respect to the reference armature is used, the rotational angular position of the second permanent magnet 23b may be used, or alternatively, the rotational angular position of an arbitrary portion of the first shaft 21 or the first rotor 23 with respect to an arbitrary portion of the casing 2 or the stator 24 may be used. Further, in the present embodiment, as the second rotor rotational angle $\theta$2, the rotational angular position of the first core 25a with respect to the reference armature is used, the rotational angular position of the second core 25b may be used, or alternatively, the rotational angular position of an arbitrary portion of the second shaft 22 or the second rotor 25 with respect to an arbitrary portion of the casing 2 or the stator 24 may be used. Further, in the case of the number of polarities being equal to 2, it is to be understood that the first and second rotor rotational angles $\theta$1 and $\theta$2 may be directly used for the control of the first and second rotating magnetic fields without converting the same to electrical angular positions.

Further, in the present embodiment, the control of the first and second rotating magnetic fields is performed by vector control of the U-phase to W-phase currents Iu, Iv and Iw, but any appropriate method may be employed insofar as it can control the electrical angular positions of the vectors of the first and second rotating magnetic fields to electrical angular positions represented by (2$\theta$e2 - $\theta$e1), and the magnetic field electrical angular velocity $\omega$MF to an electrical angular velocity represented by (2$\omega$e2 - $\omega$e1). For example, the control of the first and second rotating magnetic fields may be carried out by the control of the U-phase to W-phase voltages Vu, Vv, and Vw. This is also similarly applicable to the case where the control method according to the present embodiment is applied to the electric motors 1, 20, 30, 40, and 60 according to the first to fifth embodiments.

It should be note that the present invention is not limited to the embodiments described above, but it can be practiced in various forms. For example, in the present embodiments, the first and second electromagnets 4a, 4e, 6a, and 6e, the armatures 5a and 24a, the first and second cores 7a, 25a, 8a, and 25b, and the first and second permanent magnets 4g, 23a, 6g, and 23b are arranged at equally spaced intervals, this is not limitative, they may be arranged at not-equally spaced intervals. Further, in the present embodiments, in the electric motors 1, 20, and 40, the numbers of the first cores 7a and 25a are made equal to the numbers of the first armature magnetic poles and the first magnetic poles, and the numbers of the second cores 8a and 25b are made equal to the numbers of the second armature magnetic poles and the second magnetic poles, this is not limitative, but the numbers of the first cores 7a and 25a and the numbers of the second cores 8a and 25b may be set to be smaller.

Further, although in the present embodiments, the coils 5c and 24c of the armatures 5a and 24a are formed by three-phase coils of U-phase, V-phase, and W-phase, it is to be understood that the number of phases is not limited to this. Further, although in the present embodiments, the coils 5c and 24c are wound around the cores 5b and 24b by concentrated winding, the method of winding is not limited to this, but it may be wave winding. Further, although in the present embodiment, the control device for controlling the electric motor 1, 20, 30, 40 and 60 is implemented by the ECU 17, this is not limitative, but an electric circuit having a microcomputer mounted thereon may be used for example. Further, it is possible to change details of the construction of the embodiment within the scope of the present claims.

[Industrial Applicability]

The electric motor according to the present invention is very useful in improving efficiency.

**Claims**

1. An electric motor (1, 20, 30, 40, 60, 100) comprising:

   a first member provided with a first armature row comprising a plurality of first armatures arranged side by side in a first predetermined direction, for causing a first moving magnetic field that moves in the first predetermined direction to be generated by magnetic poles formed thereon in accordance with supply of electric power thereto;
   a second member provided with a first magnetic pole row comprising a plurality of first magnetic poles arranged side by side in the first predetermined direction, such that each two adjacent ones of said first magnetic poles have different polarities from each other and said first magnetic pole row is opposed to said first armature row;
   a third member provided with a first soft magnetic material element row comprising a plurality of first soft magnetic material elements arranged side by side in the first predetermined direction, such that said first soft magnetic material element row is disposed between said first armature row and said first magnetic pole row;
   a fourth member provided with a second armature row comprising a plurality of second armatures arranged side by side in a second predetermined direction, for causing a second moving magnetic field that moves in the second predetermined direction to be generated by magnetic poles formed thereon in accordance with supply of electric power thereto;
   a fifth member provided with a second magnetic pole row comprising a plurality of second magnetic poles arranged side by side in the second predetermined direction, such that each two adjacent ones of said second magnetic poles have different polarities from each other and said second magnetic pole row is opposed to said second armature row, said fifth member being connected to said second member; and
   a sixth member provided with a second soft magnetic material element row comprising a plurality of second soft magnetic material elements arranged side by side in the second predetermined direction, such that said second soft magnetic material elements are spaced from each other by a predetermined distance and said second soft magnetic material element row is disposed between said second armature row and said second magnetic pole row, said sixth member being connected to said third member,
   wherein when a magnetic pole of each said first armature and each said first magnetic pole are in a first opposed position opposed to each other, a magnetic pole of each said second armature and each said second magnetic pole are in a second opposed position opposed to each other; when the magnetic pole of each said first armature and each said first magnetic pole in the first opposed position have different polarities from each other, the magnetic pole of each said second armature and each said second magnetic pole in the second opposed position have a same polarity; and when the magnetic pole of each said first armature and each said first magnetic pole in the first opposed position have a same polarity, the magnetic pole of each said second armature and each said second magnetic pole in the second opposed position have different polarities from each other; and
   wherein when the magnetic pole of each said first armature and each said first magnetic pole are in the first opposed position, if each said first soft magnetic material element is in a position between the magnetic pole of said first armature and said first magnetic pole, each said second soft magnetic material element is in a position between two pairs of the magnetic poles of said second armatures and said second magnetic poles adjacent to each other in the second predetermined direction, and if each said second soft magnetic material element is in a position between the magnetic pole of said second armature and said second magnetic pole, each said first soft magnetic material element is in a position between two pairs of the magnetic poles of said first armatures and said first magnetic poles adjacent to each other in the first predetermined direction.

2. An electric motor (1, 20, 30, 40, 60, 100) as claimed in claim 1, wherein said first and fourth members are configured to be immovable, and said second and third members and said fifth and sixth members are configured to be movable.

3. An electric motor (1, 20, 30, 40, 60, 100) as claimed in any of the preceding claims, wherein said first, second, fourth, and fifth members are configured to be immovable, and said third and sixth members are configured to be movable.

4. An electric motor (1, 20, 30, 40, 60, 100) as claimed in any of the preceding claims, wherein said first and second magnetic poles are formed by magnetic poles of permanent magnets.

5. An electric motor (1, 20, 30, 40, 60, 100) as claimed in any of the preceding claims, wherein said first and second magnetic poles are formed by magnetic poles of electromagnets.

6. An electric motor (1, 20, 30, 40, 60, 100) as claimed in any of the preceding claims, wherein said first and second magnetic poles are formed by magnetic poles of electromagnets, and said electromagnets include iron cores, and permanent magnets capable of magnetizing said iron cores.

7. An electric motor (1, 20, 30, 40, 60, 100) as claimed in any of the preceding claims, further comprising magnetic force-adjusting means for adjusting magnetic forces of said electromagnets.

8. An electric motor (1, 20, 30, 40, 60, 100) as claimed in any of the preceding claims, wherein three-phase field windings are used as windings for said first and second armature rows.

9. An electric motor (1, 20, 30, 40, 60, 100) as claimed in any of the preceding claims, wherein said first and second armature rows are formed by a single common armature row,
wherein said first and fourth members are formed integrally with each other,
wherein said second and fifth members are formed integrally with each other, and
wherein said third and sixth members are formed integrally with each other.

10. An electric motor (1, 20, 30, 40, 60, 100) as claimed in any of the preceding claims, wherein numbers of magnetic poles of said first armature, said first magnetic poles, and said first soft magnetic material elements are set to be equal to each other, and
wherein numbers of magnetic poles of said second armature, said second magnetic poles, and said second soft magnetic material elements are set to be equal to each other.

11. An electric motor (1, 20, 30, 40, 60, 100) as claimed in any of the preceding claims, wherein the electric motor is a rotating machine.

12. An electric motor (1, 20, 30, 40, 60, 100) as claimed in any of the preceding claims, wherein the electric motor is a linear motor.

13. An electric motor (1, 20, 30, 40, 60, 100) as claimed in any of the preceding claims, further comprising:

a first relative positional relationship-detecting device for detecting a relative positional relationship between said first member, said second member, and said third member;
a second relative positional relationship-detecting device for detecting a relative positional relationship between said fourth member, said fifth member, and said sixth member; and
a control device for controlling the first and second moving magnetic fields based on the detected relative positional relationship of said first to third members, and the detected relative positional relationship of said fourth to sixth members.

14. An electric motor (1, 20, 30, 40, 60, 100) as claimed in any of the preceding claims, further comprising a control device for controlling the first and second moving magnetic fields such that speeds of the first moving magnetic field, said second member, and said third member mutually satisfy a collinear relationship, and at the same time speeds of the second moving magnetic field, said fifth member, and said sixth member mutually satisfy a collinear relationship.

15. An electric motor (1, 20, 30, 40, 60, 100) as claimed in any of the preceding claims, wherein said first and fourth members are connected to each other,

the electric motor further comprising a relative positional relationship-detecting device for detecting one of a relative positional relationship between said first member, said second member, and said third member, and a relative positional relationship between said fourth member, said fifth member, and said sixth member; and

a control device for controlling the first and second moving magnetic fields based on the detected one of the relative positional relationships.

16. An electric motor (1, 20, 30, 40, 60, 100) as claimed in any of the preceding claims, wherein said relative positional relationship-detecting device detects, as the one of the relative positional relationships, electrical angular positions of said second and third members with respect to said first member, or electrical angular positions of said fifth and sixth members with respect to said fourth member, and

wherein said control device controls the first and second moving magnetic fields based on a difference between a value of a two-fold of the detected electrical angular position of said third or sixth member, and the detected electrical angular position of said second or fifth member.

**Patentansprüche**

1. Elektromotor (1, 20, 30, 40, 60, 100), der aufweist:

ein erstes Glied, das mit einer ersten Ankerreihe versehen ist, die mehrere erste Anker aufweist, die in einer ersten vorgegebenen Richtung nebeneinander angeordnet sind, um zu bewirken, dass von darauf ausgebildeten Magnetpolen entsprechend der Zuführung von elektrischer Leistung an sie ein erstes sich bewegendes Magnetfeld erzeugt wird, das sich in die erste vorgegebene Richtung bewegt;

ein zweites Glied, das mit einer ersten Magnetpolreihe versehen ist, die mehrere erste Magnetpole aufweist, die in der ersten vorgegebenen Richtung nebeneinander angeordnet sind, so dass jeweils zwei benachbarte der ersten Magnetpole zueinander unterschiedliche Polaritäten haben und die erste Magnetpolreihe zu der ersten Ankerreihe gegenüber liegend ist;

ein drittes Glied, das mit einer ersten weichmagnetischen Materialelementreihe versehen ist, die mehrere erste weichmagnetische Materialelemente aufweist, die in der ersten vorgegebenen Richtung nebeneinander angeordnet sind, so dass die erste weichmagnetische Materialelementreihe zwischen der ersten Ankerreihe und der ersten Magnetpolreihe angeordnet ist;

ein viertes Glied, das mit einer zweiten Ankerreihe versehen ist, die mehrere zweite Anker aufweist, die in einer zweiten vorgegebenen Richtung nebeneinander angeordnet sind, um zu bewirken, dass von darauf ausgebildeten Magnetpolen entsprechend der Zuführung von elektrischer Leistung an sie ein zweites sich bewegendes Magnetfeld erzeugt wird, das sich in die zweite vorgegebene Richtung bewegt;

ein fünftes Glied, das mit einer zweiten Magnetpolreihe versehen ist, die mehrere zweite Magnetpole aufweist, die in der zweiten vorgegebenen Richtung nebeneinander angeordnet sind, so dass jeweils zwei benachbarte der zweiten Magnetpole zueinander unterschiedliche Polaritäten haben und die zweite Magnetpolreihe zu der zweiten Ankerreihe gegenüberliegend ist, wobei das fünfte Glied mit dem zweiten Glied verbunden ist; und

ein sechstes Glied, das mit einer zweiten weichmagnetischen Materialelementreihe versehen ist, die mehrere zweite weichmagnetische Materialelemente aufweist, die in der zweiten vorgegebenen Richtung nebeneinander angeordnet sind, so dass die zweiten weichmagnetischen Materialelemente um einen vorgegebenen Abstand voneinander beabstandet sind und die zweite weichmagnetische Materialelementreihe zwischen der zweiten Ankerreihe und der zweiten Magnetpolreihe angeordnet ist,

wobei das sechste Glied mit dem dritten Glied verbunden ist, wobei, wenn ein Magnetpol jedes des ersten Ankers und des ersten Magnetpols in einer ersten gegenüberliegenden Beziehung zueinander sind, ein Magnetpol jedes zweiten Ankers und jedes zweiten Magnetpols in einer zweiten gegenüberliegenden Beziehung zueinander sind; wenn der Magnetpol jedes ersten Ankers und jedes ersten Magnetpols in der ersten gegenüberliegenden Position zueinander verschiedene Polaritäten haben, der Magnetpol jedes zweiten Ankers und jedes zweiten Magnetpols in der zweiten gegenüberliegenden Position eine gleiche Polarität haben; und wenn der Magnetpol jedes ersten Ankers und jedes ersten Magnetpols in der ersten gegenüberliegenden Position eine gleiche Polarität haben, der Magnetpol jedes zweiten Ankers und jedes zweiten Magnetpols in der zweiten gegenüberliegenden Position eine voneinander verschiedene Polarität haben; und

wobei, wenn der Magnetpol jedes des ersten Ankers und jedes ersten Magnetpols in der ersten gegenüberliegenden Position sind, wenn jedes erste weichmagnetische Materialelement in einer Position zwischen dem Magnetpol des ersten Ankers und dem ersten Magnetpol ist, jedes zweite weichmagnetische Materialelement in einer Position zwischen zwei Paaren der Magnetpole der zweiten Anker und den zweiten Magnetpolen, die in der zweiten vorgegebenen Richtung benachbart zueinander sind, ist, und wenn jedes zweite weichmagnetische Materialelement in einer Position zwischen dem Magnetpol des zweiten Ankers und dem zweiten Magnetpol ist, jedes erste weichmagnetische Materialelement in einer Position zwischen zwei Paaren der Magnetpole der ersten Anker und den ersten Magnetpolen, die in der ersten vorgegebenen Richtung benachbart zueinander sind, ist.

2. Elektromotor (1, 20, 30, 40, 60, 100) nach Anspruch 1, wobei die ersten und vierten Glieder aufgebaut sind, um unbeweglich zu sein, und die zweiten und dritten Glieder und die fünften und sechsten Glieder aufgebaut sind, um beweglich zu sein.

3. Elektromotor (1, 20, 30, 40, 60, 100) nach einem der vorhergehenden Ansprüche, wobei die ersten, zweiten, vierten und fünften Glieder aufgebaut sind, um unbeweglich zu sein, und die dritten und sechsten Glieder aufgebaut sind, um beweglich zu sein.

4. Elektromotor (1, 20, 30, 40, 60, 100) nach einem der vorhergehenden Ansprüche, wobei die ersten und zweiten Magnetpole durch Magnetpole von Permanentmagneten ausgebildet sind.

5. Elektromotor (1, 20, 30, 40, 60, 100) nach einem der vorhergehenden Ansprüche, wobei die ersten und zweiten Magnetpole durch Magnetpole von Elektromagneten ausgebildet sind.

6. Elektromotor (1, 20, 30, 40, 60, 100) nach einem der vorhergehenden Ansprüche, wobei die ersten und zweiten Magnetpole durch Magnetpole von Elektromagneten ausgebildet sind und die Elektromagnete Eisenkerne und Permanentmagnete, die fähig sind, die Eisenkeren zu magnetisieren, umfassen.

7. Elektromotor (1, 20, 3 0, 40, 60, 100) nach einem der vorhergehenden Ansprüche, der ferner Magnetkraft-Einstelleinrichtungen zum Einstellen von Magnetkräften der Elektromagnete aufweist.

8. Elektromotor (1, 20, 30, 40, 60, 100) nach einem der vorhergehenden Ansprüche, wobei Dreiphasen-Feldwicklungen als Wicklungen für die ersten und zweiten Ankerreihen verwendet werden.

9. Elektromotor (1, 20, 30, 40, 60, 100) nach einem der vorhergehenden Ansprüche, wobei die ersten und zweiten Ankerreihen durch eine einzige gemeinsame Ankerreihe ausgebildet sind,
wobei die ersten und vierten Glieder integral miteinander ausgebildet sind,
wobei die zweiten und fünften Glieder integral miteinander ausgebildet sind, und
wobei die dritten und sechsten Glieder integral miteinander ausgebildet sind.

10. Elektromotor (1, 20, 30, 40, 60, 100) nach einem der vorhergehenden Ansprüche, wobei Anzahlen von Magnetpolen des ersten Ankers, der ersten Magnetpole und der ersten weichmagnetischen Materialelemente derart festgelegt sind, dass sie gleich groß sind, und
wobei Anzahlen von Magnetpolen des zweiten Ankers, der zweiten Magnetpole und der zweiten weichmagnetischen Materialelement derart festgelegt sind, dass sie gleich groß sind.

11. Elektromotor (1, 20, 30, 40, 60, 100) nach einem der vorhergehenden Ansprüche, wobei der Elektromotor eine rotierende Maschine ist.

12. Elektromotor (1, 20, 30, 40, 60, 100) nach einem der vorhergehenden Ansprüche, wobei der Elektromotor ein Linearmotor ist.

13. Elektromotor (1, 20, 30, 40, 60, 100) nach einem der vorhergehenden Ansprüche, der ferner aufweist:

eine erste Relativpositionsbeziehungs-Erfassungsvorrichtung zum Erfassen einer relativen Positionsbeziehung zwischen dem ersten Glied, dem zweiten Glied und dem dritten Glied;
eine zweite Relativpositionsbeziehungs-Erfassungsvorrichtung zum Erfassen einer relativen Positionsbeziehung zwischen dem vierten Glied, dem fünften Glied und dem sechsten Glied;
eine Steuervorrichtung zum Steuern der ersten und zweiten sich bewegenden Magnetfelder basierend auf der erfassten relativen Positionsbeziehung der ersten bis dritten Glieder und der erfassten relativen Positionsbeziehung der vierten bis sechsten Glieder.

14. Elektromotor (1, 20, 30, 40, 60, 100) nach einem der vorhergehenden Ansprüche, der ferner eine Steuervorrichtung zum Steuern der ersten und zweiten sich bewegenden Magnetfelder derart aufweist, so dass die Geschwindigkeiten des ersten sich bewegenden Magnetfelds, des zweiten Glieds und des dritten Glieds wechselseitig eine kollineare Beziehung erfüllen, und gleichzeitig die gleichen Geschwindigkeiten des zweiten sich bewegenden Magnetfelds, des fünften Glieds und des sechsten Glieds wechselseitig eine kollineare Beziehung erfüllen.

15. Elektromotor (1, 20, 30, 40, 60, 100) nach einem der vorhergehenden Ansprüche, wobei die ersten und vierten Glieder miteinander verbunden sind,
der Elektromotor ferner eine erste Relativpositionsbeziehungs-Erfassungsvorrichtung zum Erfassen einer relativen Positionsbeziehung zwischen dem ersten Glied, dem zweiten Glied und dem dritten Glied oder einer relativen Positionsbeziehung zwischen dem vierten Glied, dem fünften Glied und dem sechsten Glied aufweist; und
eine Steuervorrichtung zum Steuern der ersten und zweiten sich bewegenden Magnetfelder basierend auf der erfassten einen der relativen Positionsbeziehungen aufweist.

16. Elektromotor (1, 20, 30, 40, 60, 100) nach einem der vorhergehenden Ansprüche,
wobei die Relativpositionsbeziehungs-Erfassungsvorrichtung als die eine der relativen Positionsbeziehungen elektrische Winkelpositionen der zweiten und dritten Glieder in Bezug auf das erste Glied oder elektrische Winkelpositionen der fünften und sechsten Glieder in Bezug auf das vierte Element erfasst, und
wobei die Steuervorrichtung die ersten und zweiten sich bewegenden Magnetfelder basierend auf einer Differenz zwischen einem Wert eines Zweifachen der erfassten elektrischen Winkelposition des zweiten oder dritten Glieds und der erfassten elektrischen Winkelposition des zweiten oder fünften Glieds steuert.

**Revendications**

1. Moteur électrique (1, 20, 30, 40, 60, 100) comprenant :

   un premier organe pourvu d'une première rangée d'induits comprenant une pluralité de premiers induits agencés côte à côte dans une première direction prédéterminée, permettant d'amener un premier champ magnétique mobile qui se déplace dans la première direction prédéterminée à être généré par des pôles magnétiques formés dessus selon leur alimentation en énergie électrique ;
   un deuxième organe pourvu d'une première rangée de pôles magnétiques comprenant une pluralité de premiers pôles magnétiques agencés côte à côte dans la première direction prédéterminée, de sorte que chacun des deux pôles adjacents desdits premiers pôles magnétiques a des polarités différentes l'une de l'autre, et ladite première rangée de pôles magnétiques est opposée à ladite première rangée d'induits ;
   un troisième organe pourvu d'une première rangée d'éléments de matériau magnétique doux comprenant une pluralité de premiers éléments de matériau magnétique doux agencés côte à côte dans la première direction prédéterminée, de sorte que la première rangée d'éléments de matériau magnétique doux est disposée entre ladite première rangée d'induits et ladite première rangée de pôles magnétiques ;
   un quatrième organe pourvu d'une seconde rangée d'induits comprenant une pluralité de seconds induits agencés côte à côte dans une seconde direction prédéterminée, permettant d'amener un second champ magnétique mobile qui se déplace dans la seconde direction prédéterminée à être généré par des pôles magnétiques formés dessus selon leur alimentation en énergie électrique ;
   un cinquième organe pourvu d'une seconde rangée de pôles magnétiques comprenant une pluralité de seconds pôles magnétiques agencés côte à côte dans la seconde direction prédéterminée, de sorte que chacun des deux pôles adjacents desdits seconds pôles magnétiques ont des polarités différentes l'une de l'autre, et ladite seconde rangée de pôles magnétiques est opposée à ladite seconde rangée d'induits, ledit cinquième organe étant connecté audit deuxième organe ; et
   un sixième organe pourvu d'une seconde rangée d'éléments de matériau magnétique doux comprenant une pluralité de seconds éléments de matériau magnétique doux agencés côte à côte dans la seconde direction prédéterminée, de sorte que lesdits seconds éléments de matériau magnétique doux sont espaces l'un de l'autre d'une distance prédéterminée et ladite seconde rangée d'éléments de matériau magnétique doux est disposée entre ladite seconde rangée d'induits et ladite seconde rangée de pôles magnétiques, ledit sixième organe étant connecté audit troisième organe,
   dans lequel lorsqu'un pôle magnétique de chaque dit premier induit et chaque dit premier pôle magnétique sont dans une première position opposée l'un à l'autre, un pôle magnétique de chaque dit second induit et chaque dit second pôle magnétique sont dans une seconde position opposée l'un à l'autre ; lorsque le pôle magnétique de chaque dit premier induit et chaque dit premier pôle magnétique dans la première position opposée ont des polarités différentes l'une de l'autre, le pôle magnétique de chaque dit second induit et chaque dit second pôle magnétique dans la seconde position opposée ont une même polarité ; et lorsque le pôle magnétique de chaque dit premier induit et chaque dit premier pôle magnétique dans la première position opposée ont une même polarité, le pôle magnétique de chaque dit second induit et chaque dit second pôle magnétique dans la seconde position opposée ont des polarités différentes l'une de l'autre ; et

dans lequel lorsque le pôle magnétique de chaque dit premier induit et chaque dit premier pôle magnétique sont dans la première position opposée, si chaque dit premier élément de matériau magnétique doux est dans une position entre le pôle magnétique dudit premier induit et ledit premier pôle magnétique, chaque dit second élément de matériau magnétique doux est dans une position entre deux paires des pôles magnétiques desdits seconds induits et lesdits seconds pôles magnétiques adjacents l'un à l'autre dans la seconde direction prédéterminée, et si chaque second élément de matériau magnétique doux est dans une position entre le pôle magnétique dudit second induit et ledit second pôle magnétique, chaque dit premier élément de matériau magnétique doux est dans une position entre deux paires des pôles magnétiques desdits premiers induits et lesdits premiers pôles magnétiques adjacents l'un à l'autre dans la première direction prédéterminée.

2. Moteur électrique (1, 20, 30, 40, 60, 100) selon la revendication 1, dans lequel lesdits premier et quatrième organes sont configurés pour être immobiles, et lesdits deuxième et troisième organes et lesdits cinquième et sixième organes sont configurés pour être mobiles.

3. Moteur électrique (1, 20, 30, 40, 60, 100) selon l'une quelconque des revendications précédentes, dans lequel lesdits premier, deuxième, quatrième et cinquième organes sont configurés pour être immobiles, et lesdits troisième et sixième organes sont configurés pour être mobiles.

4. Moteur électrique (1, 20, 30, 40, 60, 100) selon l'une quelconque des revendications précédentes, dans lequel lesdits premier et second pôles magnétiques sont formés par des pôles magnétiques d'aimants permanents.

5. Moteur électrique (1, 20, 30, 40, 60, 100) selon l'une quelconque des revendications précédentes, dans lequel lesdits premier et second pôles magnétiques sont formés par des pôles magnétiques d'électroaimants.

6. Moteur électrique (1, 20, 30, 40, 60, 100) selon l'une quelconque des revendications précédentes, dans lequel lesdits premier et second pôles magnétiques sont formés par des pôles magnétiques d'électroaimants, et lesdits électroaimants comprennent des noyaux de fer, et des aimants permanents capables d'aimanter lesdits noyaux de fer.

7. Moteur électrique (1, 20, 30, 40, 60, 100) selon l'une quelconque des revendications précédentes, comprenant en outre un moyen d'ajustement de force magnétique permettant d'ajuster les forces magnétiques desdits électroaimants.

8. Moteur électrique (1, 20, 30, 40, 60, 100) selon l'une quelconque des revendications précédentes, dans lequel des enroulements de champ triphasés sont utilisés comme enroulements pour lesdites première et seconde rangées d'induits.

9. Moteur électrique (1, 20, 30, 40, 60, 100) selon l'une quelconque des revendications précédentes, dans lequel lesdites première et seconde rangées d'induits sont formées par une seule rangée d'induits commune,
dans lequel lesdits premier et quatrième organes sont formés solidairement l'un avec l'autre,
dans lequel lesdits deuxième et cinquième organes sont formés solidairement l'un avec l'autre, et
dans lequel lesdits troisième et sixième organes sont formés solidairement l'un avec l'autre.

10. Moteur électrique (1, 20, 30, 40, 60, 100) selon l'une quelconque des revendications précédentes, dans lequel des nombres de pôles magnétiques desdits premiers induits, desdits premiers pôles magnétiques, et desdits premiers éléments de matériau magnétique doux sont établis pour être égaux les uns aux autres, et
dans lequel des nombres de pôles magnétiques dudit second induit, desdits seconds pôles magnétiques, et desdits seconds éléments de matériau magnétique doux sont établis pour être égaux les uns aux autres.

11. Moteur électrique (1, 20, 30, 40, 60, 100) selon l'une quelconque des revendications précédentes, dans lequel le moteur électrique est une machine tournante.

12. Moteur électrique (1, 20, 30, 40, 60, 100) selon l'une quelconque des revendications précédentes, dans lequel le moteur électrique est un moteur linéaire.

13. Moteur électrique (1, 20, 30, 40, 60, 100) selon l'une quelconque des revendications précédentes, comprenant en outre :

un premier dispositif de détection de relation de position relative permettant de détecter une relation de position relative entre ledit premier organe, ledit deuxième organe et ledit troisième organe ;
un second dispositif de détection de relation de position relative permettant de détecter une relation de position relative entre ledit quatrième organe, ledit cinquième organe et ledit sixième organe ; et
un dispositif de commande permettant de commander les premier et second champs magnétiques mobiles d'après la relation de position relative détectée desdits premier à troisième organes, et la relation de position relative détectée desdits quatrième à sixième organes.

14. Moteur électrique (1, 20, 30, 40, 60, 100) selon l'une quelconque des revendications précédentes, comprenant en outre un dispositif de commande permettant de commander les premier et second champs magnétiques mobiles de sorte que des vitesses du premier champ magnétique mobile, dudit deuxième organe, et dudit troisième organe satisfont mutuellement une relation colinéaire, et en même temps des vitesses du second champ magnétique mobile, dudit cinquième organe, et dudit sixième organe satisfont mutuellement une relation colinéaire.

15. Moteur électrique (1, 20, 30, 40, 60, 100) selon l'une quelconque des revendications précédentes, dans lequel lesdits premier et quatrième organes sont connectés l'un à l'autre,
le moteur électrique comprenant en outre un dispositif de détection de relation de position relative permettant de détecter l'une d'une relation de position relative entre ledit premier organe, ledit deuxième organe, et ledit troisième organe, et une relation de position relative entre ledit quatrième organe, ledit cinquième organe et ledit sixième organe ; et
un dispositif de commande permettant de commander lesdits premier et second champs magnétiques mobiles d'après la relation détectée des relations de position relative.

16. Moteur électrique (1, 20, 30, 40, 60, 100) selon l'une quelconque des revendications précédentes, dans lequel ledit dispositif de détection de relation de position relative détecte, comme celle des relations de position relative, des positions angulaires électriques desdits deuxième et troisième organes par rapport audit premier organe, ou des positions angulaires électriques desdits cinquième et sixième organes par rapport audit quatrième organe, et dans lequel ledit dispositif de commande commande les premier et second champs magnétiques mobiles d'après une différence entre une valeur de deux fois la position angulaire électrique détectée dudit troisième ou sixième organe, et la position angulaire électrique détectée dudit deuxième ou cinquième organe.

FIG. 1

F I G.  2

FIG. 3

F I G. 4

(a)

(b)

(c)

(d)

FIG. 5

(a)

(b)

(c)

F I G. 6

( a )

( b )

F I G. 7

FIG. 8

FIG. 9

F I G. 1 0

FIG. 11

FIG. 12

F I G.  1 3

F I G. 1 4

(a)

FIRST AND SECOND
ROTATING
MAGNETIC FIELDS

SECOND
SHAFT

FIRST
SHAFT

V0

V2

0

V1 (=0)

(b)

FIRST AND SECOND
ROTATING
MAGNETIC FIELDS

SECOND
SHAFT

V0

V1

V2 (=0)

0

FIRST
SHAFT

(c)

FIRST AND SECOND
ROTATING
MAGNETIC FIELDS

SECOND
SHAFT

FIRST
SHAFT

V0

V2

V1

0

(d)

FIRST AND SECOND
ROTATING
MAGNETIC FIELDS

SECOND
SHAFT

V0

V2

V1

0

FIRST
SHAFT

FIG. 15

(a)

(b)

(c)

(d)

FIG. 16

(a)

(b)

MAGNETIC
CIRCUIT

(c)

F I G. 1 7

FIG. 18

EP 2 015 428 B1

FIG. 20

EP 2 015 428 B1

F I G. 2 2

FIG. 23

FIG. 24

FIRST AND SECOND
ROTATING
MAGNETIC FIELDS

SECOND
ROTOR

FIRST
ROTOR

$\omega$MF

$\omega$e2

$\omega$e1

FIG. 25

FIRST MEMBER

FIRST ARMATURE
(U-PHASE COIL)

Vu

$\theta$E1

Iu   Ru

$\theta$E2

SECOND MEMBER

Lu

FIRST
MAGNETIC
POLE

Muv

Mwu

N

Lw

Rw

S

Iw

Lv

Iv

Rv

Vw

THIRD MEMBER

Mvw

Vv

FIRST ARMATURE
(W-PHASE COIL)

FIRST SOFT
MAGNETIC
MATERIAL ELEMENT

FIRST ARMATURE
(V-PHASE COIL)

# FIG. 26

# FIG. 27

**EP 2 015 428 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H11341757 B
- JP 08126277 A
- JP 2006025486 A